# EUROPEAN PATENT APPLICATION

(11) **EP 4 734 537 A1**
(43) Date of publication of application: **29.04.2026**
(21) Application number: 24306812.9
(22) Date of filing: 28.10.2024
(51) Int. Cl.: H04N 21/854, G06T 17/00

(54) **DYNAMIC AVATAR APPLICATION PROGRAMMING INTERFACE**

(71) Applicant: InterDigital CE Patent Holdings, SAS, 75017 Paris (FR)
(72) Inventor: GOSSELIN, Philippe Henri, 35235 THORIGNE-FOUILLARD (FR); AVRIL, Quentin, 35830 BETTON (FR); COVA REGATEIRO, João Pedro, 35220 CHATEAUBOURG (FR)
(74) Representative: Vossius & Partner Patentanwälte Rechtsanwälte mbB

(57) **Abstract**

A device may transmit a request for a portion of an avatar three-dimensional (3D) representation, the request based on a representation format that defines access to a predefined range of data of the avatar three-dimensional (3D) representation. A device may receive the portion of the avatar 3D representation or access to the portion of the avatar 3D representation.

## Description

### BACKGROUND

The present application is related to decoding avatar three-dimensional (3D) representations. More specifically, the present application is related to an application programming interface (API) for dynamically decoding avatar 3D representations according to an avatar representation format defining a predefined range of data.

### BRIEF SUMMARY

Briefly stated, in one embodiment, a method including: transmitting a request for a portion of an avatar three-dimensional (3D) representation, the request based on a representation format that defines access to a predefined range of data of the avatar three-dimensional (3D) representation; and receiving the portion of the avatar 3D representation or access to the portion of the avatar 3D representation.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a flowchart illustrating a first example method for decoding a portion of an avatar 3D representation according to one or more embodiments of the present disclosure;
FIG. 5 is a flowchart illustrating a second example method for decoding a portion of an avatar 3D representation according to one or more embodiments of the present disclosure; and
FIGS. 6 and 7 illustrate a flowchart of a third example method for decoding a portion of an avatar 3D representation with the Dynamic Avatar API according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

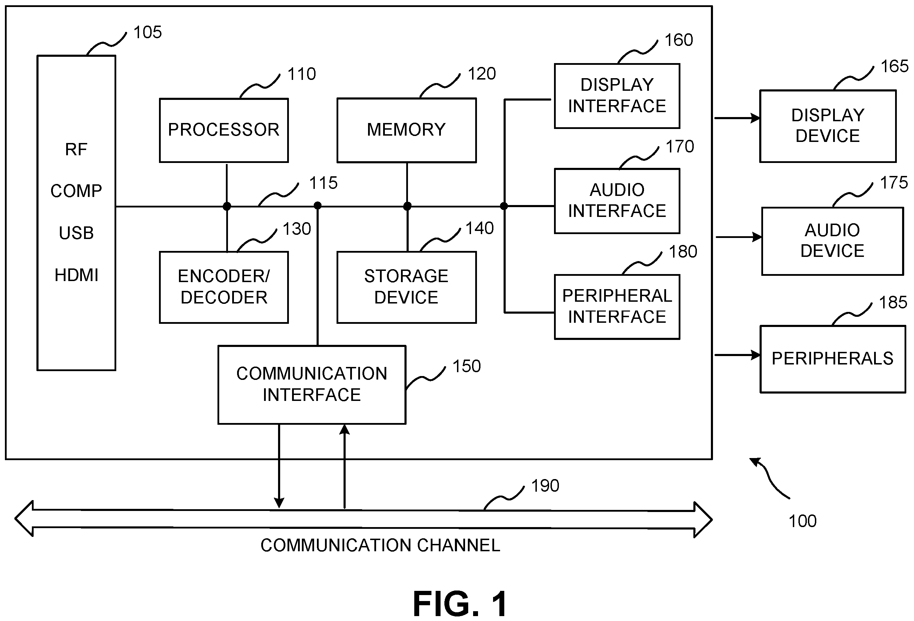

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

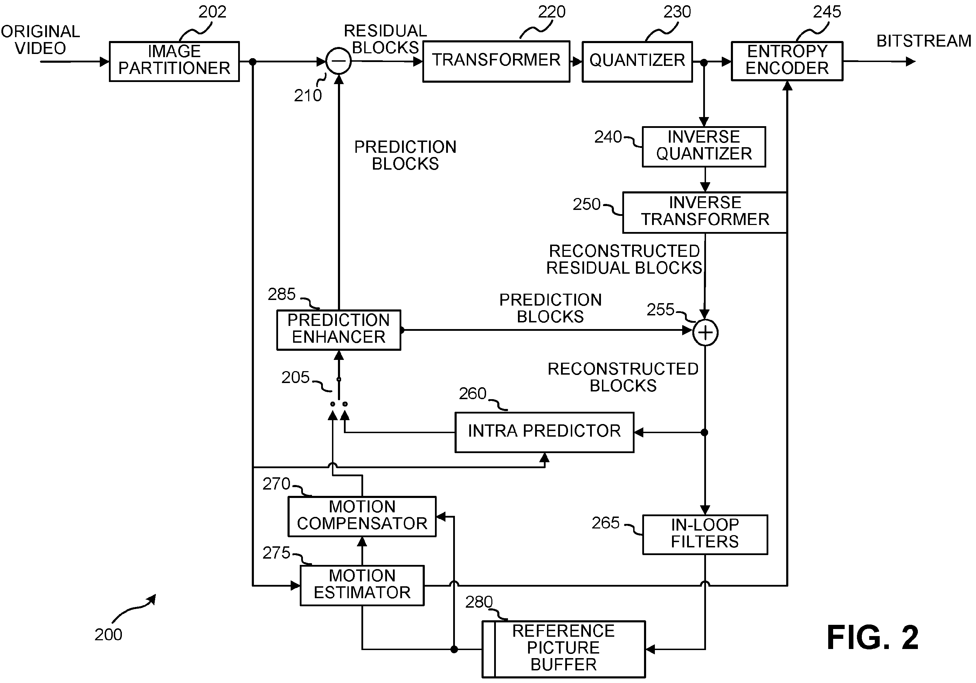

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

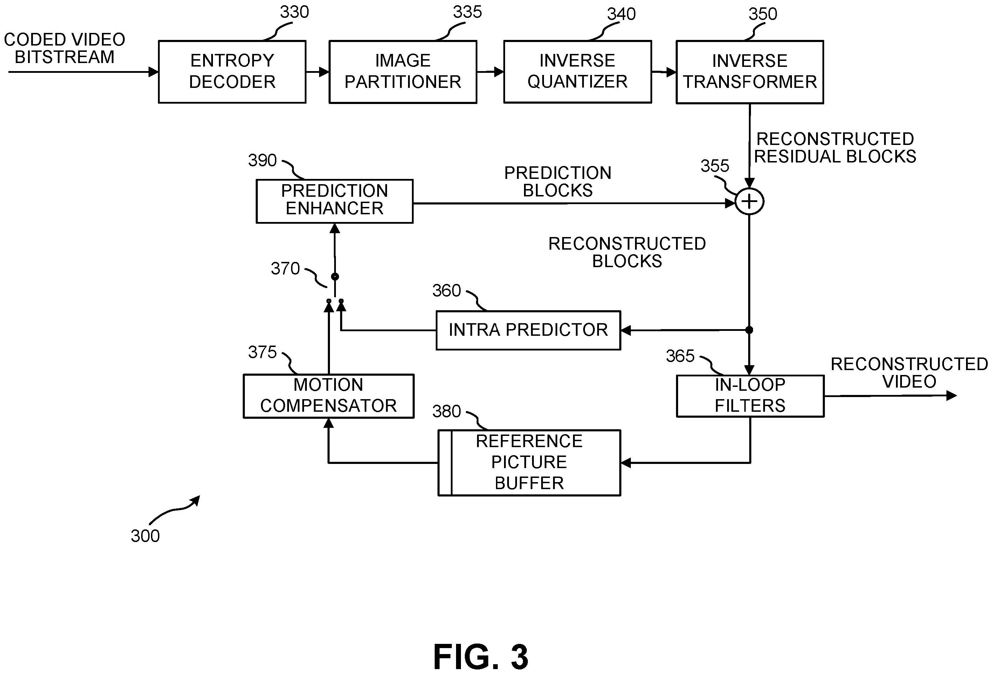

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

The domain of the present application is the decoding of avatar 3D representations. In some examples, an Application Programming Interface (API) may be provided for decoding avatar 3D representations (stored or not) following an avatar representation format (e.g., the Avatar Json Interchangeable Format (AJIF)) idioms on the client side. The API may transparently handle an avatar representation in any representation format, allowing the API client to retrieve data from an avatar representation as if the avatar representation was an avatar representation in the AJIF file format, and is robust to dynamic changes.

A comparative approach for an application to get the content of an avatar three-dimensional (3D) representation is to directly decode the encoded content of the avatar. In most cases, this content is encoded into a file, using a format like Graphics Library (GL) Transmission format (glTF), DNA or Filmbox format (FBX). This comparative approach works when an application is capable of handling the file formats, and assuming the file formats do not change over time. In the comparative approach, the application must be updated to allow the decoding of new formats or changes to existing formats.

One way to maintain the capability of an application to handle any encoding format without the need for changes is to use pattern designs (e.g., wrappers). Pattern designs provide a unique API on the client side (e.g., the application) and, on the implementation side, various wrappings from the unique API to the API of each file format. For example, on the client side, an API may be a single function, e.g., loadImage(), which returns an image given a file name or bit stream. On the implementation side, a wrapping is made from a format specific function, e.g., loadImageXXX() to the client API loadImage(). Specific format APIs may also be more complex, but for the client, the specific format APIs remain simple because the client only has to handle the client API.

Some APIs also allow the loading of avatar 3D representations from a file, a blob, or an identifier that uniquely identifies an avatar (like a URN). For instance, the OpenXR standard provides the xrLoadRenderModelFB() function that allows the loading of an avatar mesh from a buffer with the content of a binary glTF file (e.g., .glb encoding). The OpenXR standard allows the application on the API client side to choose the avatar model the application wants to use, but not to get the content of the avatar representation. Indeed, functions like xrLoadRenderModelFB() does not return the decoded content, but only informs the 3D engine which avatar it should use. As a result, such APIs cannot get the mesh data of the avatar (for instance, vertex coordinates). To do so, the API client must handle itself the decoding of the avatar 3D representation, which has all the drawbacks as described above.

Allowing an application to get access to the avatar data is important in cases where the application needs to compute or extract data from the avatar or modify the avatar. For example, a virtual shop may allow a user to upload an avatar, and then use the mesh data to compute the size of clothes. The application may also use the avatar textures to propose harmonious colors and patterns for clothes and accessories. A virtual optician may need to change the iris textures of the avatar when the avatar's owner wants to try colored contact lenses.

In some examples, the use of file conversion may be used to address the above problem with some drawbacks. With the file conversion solution, it is assumed that the application handles a specific avatar format, and the application can decode the specific avatar format. Furthermore, it is assumed that there is a third-party feature that can convert any avatar representation file to the format handled by the application. This third-party feature may be provided by operating systems, like the "imagemagick" package of linux, which can convert image file formats, and is regularly updated. This third-party feature may also be provided by cloud services, which can also be updated without the need to update the application. In all cases, the application first converts the avatar file using one of these third-party features to the format the application can handle, and then the application loads the converted file.

One drawback is that the file conversion approach only works as long as the version of the format handled by the application is persistent. For example, the format handled by the application may become obsolete, and may no longer be provided by the third-party feature.

Another drawback is that the file solution approach is not efficient because the file solution approach must convert everything (e.g., convert the entire avatar representation) before knowing what the application needs. This full conversion leads to large resource usage for nothing in cases where the application only needs a part of the avatar data. For example, an avatar representation may have several levels of details (LODs), the most detailed LODs using more resources than the less detailed LODs. For instance, an avatar with typical LODs may quickly use more than one hundred megabytes (MB) of memory. In the case where an application only needs one of the LODs, and maybe the lowest detailed LOD, which may only need one MB of memory, the file conversion approach uses one hundred times more memory than necessary.

Yet another drawback of the file conversion approach is that there are few ways to control the flow of data. Unlike a full-access API approach (e.g., not limited to "convert" or "load" a file) that may wrap and proxy any API call, when the third-party feature is used by several applications, the file conversion approach cannot cache only the parts required by the applications because the file conversion approach has no way to know or guess which parts are required.

In the present application, a Dynamic Avatar API is introduced that allows full access to a predefined range of data of an avatar representation. The accessible range of data is the one defined by an avatar representation (e.g., the AJIF file format).

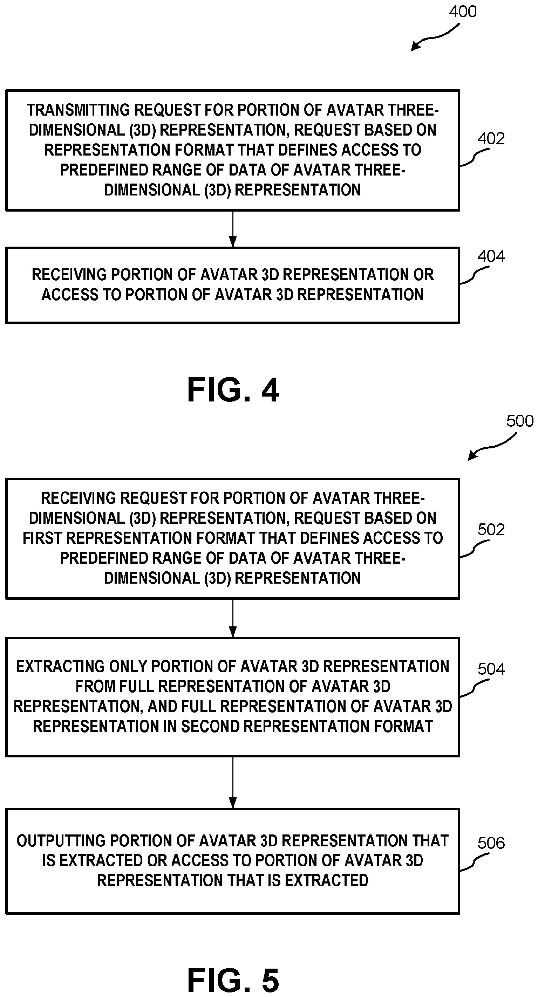

FIG. 4 is a flowchart illustrating a first example method 400 for decoding a portion of an avatar 3D representation according to one or more embodiments of the present disclosure. The method 400 is described with respect to the video decoder 300 of FIG. 3, although the method 400 may be performed by any suitable computing device.

The method 400 includes transmitting a request for a portion of an avatar three-dimensional (3D) representation, the request based on a representation format that defines access to a predefined range of data of the avatar three-dimensional (3D) representation (at block 402). For example, the video decoder 300 transmits a request for a portion of an avatar three-dimensional (3D) representation, the request based on a representation format that defines access to a predefined range of data of the avatar three-dimensional (3D) representation. In this example, the video decoder 300 may transmit the request externally (e.g., to a Dynamic Avatar API provided by an external service) or internally (e.g., to a Dynamic Avatar API provided internally). Additionally, in this example, the representation format may be the AJIF format or other suitable avatar representation format.

The method 400 also includes receiving the portion of the avatar 3D representation or access to the portion of the avatar 3D representation (at block 404). For example, the video decoder 300 receives the portion of the avatar 3D representation or access to the portion of the avatar 3D representation. In this example, the video decoder may receive the portion of the avatar 3D representation or access to the portion of the avatar 3D representation from an external source (e.g., from a Dynamic Avatar API provided by an external service) or internally (e.g., from a Dynamic Avatar API provided internally). As described in more detail below, access to a portion of the avatar 3D representation may be provided via an accessor, references, pointers, or the like.

FIG. 5 is a flowchart illustrating a second example method 500 for decoding a portion of an avatar 3D representation according to one or more embodiments of the present disclosure. The method 500 is described with respect to the video decoder 300 of FIG. 3, although the method 500 may be performed by any suitable computing device.

The method 500 includes receiving a request for a portion of an avatar three-dimensional (3D) representation, the request based on a first representation format that defines access to a predefined range of data of the avatar three-dimensional (3D) representation (at block 502). For example, the video decoder 300 receives a request for a portion of an avatar three-dimensional (3D) representation, the request based on a first representation format that defines access to a predefined range of data of the avatar three-dimensional (3D) representation. In this example, the video decoder 300 may receive the request externally (e.g., from an external client device) or internally (e.g., from an internal client). Additionally, in this example, the first representation format may be the AJIF format or other suitable avatar representation format.

The method 500 includes extracting only the portion of the avatar 3D representation from a full representation of the avatar 3D representation, wherein the full representation of the avatar 3D representation is in a second representation format (at block 504). For example, the video decoder 300 extracts only the portion of the avatar 3D representation from a full representation of the avatar 3D representation, and the full representation of the avatar 3D representation is in a second representation format. In this example, the second representation format may be one of a glTF format, a DNA format, a FBX format, or other suitable avatar representation format.

The method 500 also includes outputting the portion of the avatar 3D representation that is extracted or access to the portion of the avatar 3D representation that is extracted (at block 506). For example, the video decoder 300 outputs the portion of the avatar 3D representation that is extracted (e.g., content) or access to the portion of the avatar 3D representation that is extracted. In this example, the video decoder 300 may output the portion of the avatar 3D representation that is extracted or access to the portion of the avatar 3D representation that is extracted to an external device (e.g., an external client device) or internally (e.g., to a client internal to the video decoder 300).

As explained above, the AJIF format may be the basis for "the request" and "a representation format that defines access to a predefined range of data of the avatar three-dimensional (3D) representation." The AJIF format may store several avatar embodiments, each one being the same avatar, but with different levels of detail (LODs). In some examples, for each level of detail, an avatar embodiment may include high-level avatar information. The high-level avatar information may be the "the portion of the avatar 3D representation" and may include a name, an identifier, an age, a gender, or a combination thereof.

Additionally, in some examples, the AJIF format may include a list of the same avatar, with different level of detail. Each level of detail may be the "the portion of the avatar 3D representation" and may include one or more meshes, one or more mappings, one or more skeletons, one or more controllers, or a combination thereof. The one or more meshes including one or more geometries as defined below. The one or more mappings including a list of string with associated geometries to identify the body parts. The one or more skeletons includes one or more skeleton skins, as defined below. The one or more controllers including one or more controllers, as defined below.

One of the one or more geometries may include one or more vertices, one or more faces, one or more normals, one or more blendshapes, one or more code syntax, one or more location hints, one or more textures, one or more texture displacement maps, or a combination thereof. The one or more vertices includes a list of 3D float coordinates corresponding to vertex coordinates. The one or more faces includes a list of tuples, where each value in a tuple is a vertex index. Tuples can have between 3 and 256 values.

The one or more normal includes a list of 3D float coordinates corresponding to vertex normal coordinates, and a list of tuples, where each value in a tuple is a normal index. Tuples can have between 3 and 256 values.

The one or more blendshapes includes a list of blendshapes. Each blendshape of the list of blendshapes includes one or more displacements and a name. The one or more displacement includes a list of 3D float displacements, each displacement being associated with a vertex. The name includes a string of the name of the blendshape.

The one or more code syntaxes includes a string with a corresponding code syntax (e.g., "facs:AUl"). The one or more location hints (e.g., a side) includes a string with a location hint (e.g., "left", "top", etc.). The one or more textures includes a list of texture data. Each of texture from the list of texture data includes a type, a uvs, one or more faces, and an image. The type is a texture type including one of albedo, normal, roughness, metalness, specular, height, opacity, ambient occlusion, refraction, emissive, glossy, or other suitable texture type. The uvs is a list of two-dimensional (2D) float coordinates corresponding to UV coordinates. The one or more faces includes a list of tuples, where each value in a tuple is uv index. Tuples can have between 3 and 256 values. The image is a texture image, e.g., a float tensor [image width, image height, 4].

The one or more texture displacement maps includes a list of image displacements. For example, an image displacement may include a float tensor [image width, image height, image channels]. Each image displacement may be associated with a string that describes the image displacement.

The one or more skeleton skins may include a root joint, a list of joints, a list of skin weights, one of one or more meshes used by one of the avatars, a list of 3-tuple referencing to one of the joints in the list of joints, one of the vertices in the mesh and a scalar weight between zero and one, or a combination thereof. Each joint may include a mapping, one or more children joints, a transform, a float 4x4 matrix. The mapping may be a string to identify the body location/semantic of the joint. The transform may be a scale, then rotation, and then translation. The float 4x4 matrix may be for inverse binding.

The one or more controllers include a mapping, an input, one or more channels, or a combination thereof. The mapping includes a string with a corresponding code syntax. The input includes a list of increasing input weights. The one or more channels includes a list of controller channels. Each controller channel from the list of controller channels includes an interpolation method, a component to animate, a list of output value sets, or a combination thereof. The interpolation method may be "LINEAR", "STEP" or "CUBICSPLINE". The component to animate may be a transform for one or more geometries, a transform for one or more skeleton joints, one or more blendshapes weights of one or more geometries, one or more texture displacement weights for one or more textures, a weight for another controller, or a combination thereof. Each value set in the list of output value sets corresponds to one value in the input weights. The number and meaning of values in each value set must be consistent with the component to animate and the interpolation method.

This list of data does not cover all possible avatar data (i.e., "the portion of the avatar 3D representation") and may be extended with additional AJIF embodiments as well as future avatar data representations. The Dynamic Avatar API presented herein covers this basic list of avatar data but may be extended to additional AJIF embodiments as well as future avatar data representations.

The Dynamic Avatar API as described herein is a cross-platform API that enables a client (e.g., a video decoder) to read any amount of avatar data from any existing source for which an implementation is available. In some examples, this Dynamic Avatar API covers the reading of avatar data and may not support changes of this data.

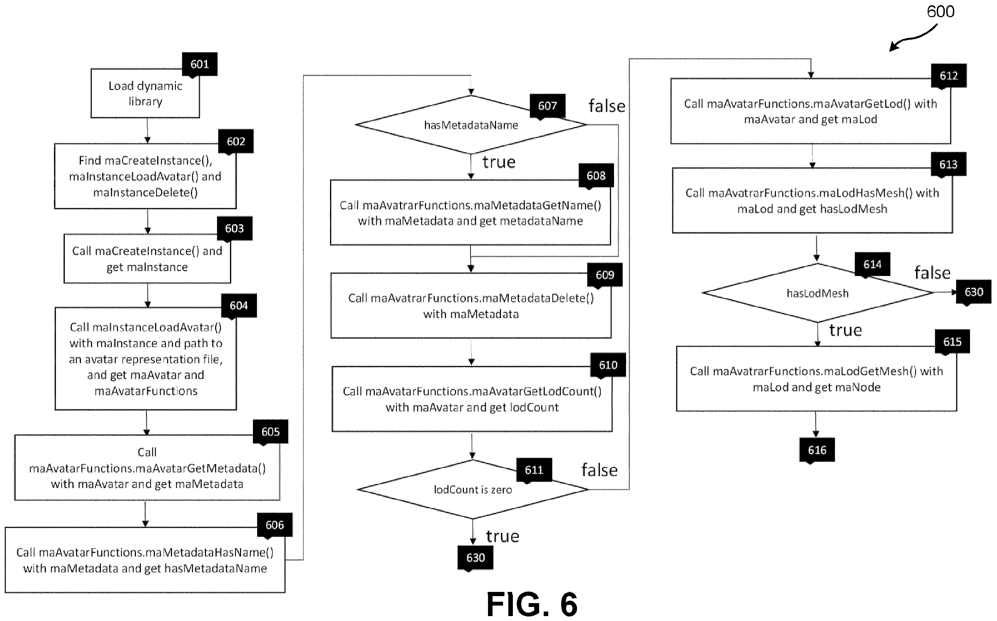

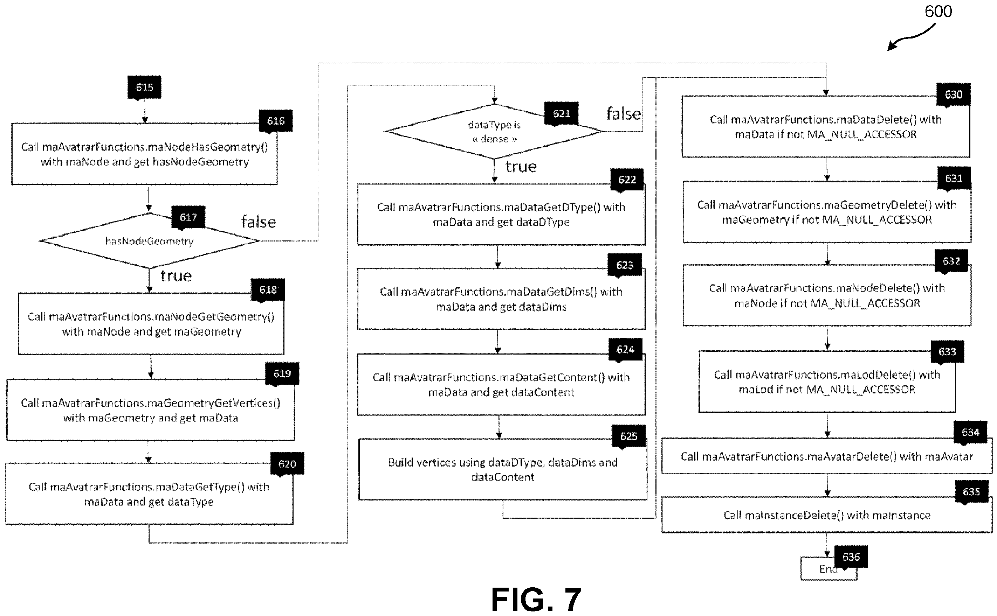

FIGS. 6 and 7 illustrate a flowchart of a third example method 600 for decoding a portion of an avatar 3D representation with the Dynamic Avatar API according to one or more embodiments of the present disclosure. Access to a remote or local implementation of the Dynamic Avatar API may be obtained, for example, by loading a dynamic library with an implementation of the Dynamic Avatar API. However, examples described herein are not limited to loading a dynamic library and access may be obtained via a remote procedure call (RPC), a web service or the like. For example, such access may be obtained via the loading of a dynamic library, inter process communication, remote calls or service queries (operation 601). For example, a first function (e.g., *maCreateInstance*() described herein) may not be in a dynamic library but may be implemented via a RPC or web service and such RPCs or web services may implement the Dynamic Avatar API as a dynamic library, a script, or the like. In all cases, the application dynamically accesses any implementation of the Dynamic Avatar API.

For instance, a dynamic library may be loaded, and the following functions may be found (operation 602): 1) *maCreateInstance*(): returns a *Malnstance* accessor that allows the access to the Dynamic Avatar API features, 2) *maInstanceLoadAvatar*(): returns a *MaAvatar* accessor given *Malnstance* and an avatar file. The *MaAvatar* accessor allows the access to the avatar representation contained in the avatar file, and 3) *maInstanceDelete*(): deletes a *Malnstance* accessor. An error may be returned when any of these functions are not found.

The function *maCreateInstance*() may be called (operation 603) and returns a *Malnstance* accessor that is stored in a variable maInstance. Accessors are objects which provides access to some data without directly containing the said data. Furthermore, the internal mechanisms of the accessors are unknown and inaccessible to the API client. The accessors do not guarantee the existence of the data the accessors give access to.

The function *maInstanceLoadAvatar*() may be then called (operation 604) using *maInstance* and a path to an avatar representation. In case of success, this function may return a *MaAvatar* accessor that is stored into a variable maAvatar and a *MaAvatarFunctions* structure that is stored in a variable maAvatarFunctions. The *MaAvatarFunctions* structure includes functions which allows the access of avatar data, when it exists in the avatar file and when the implementation is able to provide it. Some functions may be unavailable when the Dynamic Avatar API implementation does not support the functions.

The function *maAvatarFunctions.maAvatarGetMetadata*() may be then called (operation 605) using *maAvatar.* In case of success, this function may return a *MaMetadata* accessor that is stored into a variable maMetadata.

The function *maAvatarFunctions.maMetadataHasName*() may be then called (operation 606) using *maMetadata.* In case of success (decision operation 607), this function may return a boolean that is stored into a variable *hasMetadataName.*

When the boolean is false, the function *maAvatarFunctions.maMetadataGetName*() may be then called (operation 608) using *maMetadata.* In case of success, this function may return a string that is stored into a variable *metadataName.* The value of this variable may be used by the application.

When either the call for the function *maAvatarFunctions.maMetadataHasName*() or the call for the function *maAvatarFunctions.maMetadataGetName*() is unsuccessful, the function *maAvatarFunctions.maMetadataDelete*() may be then called (operation 609) using *maMetadata* to delete this accessor.

The function *maAvatarFunctions.maAvatarGetLodCount*() may be then called (operation 610) using *maAvatar.* In case of success, this function may return an integer that is stored into a variable *lodCount.*

When the *lodCount* is zero (decision operation 611), all accessors may be deleted using functions like *maXXXXDelete*()*,* where XXXX is a data type like Instance, Data, Geometry, Lod, Avatar, or Node (see operations 630-635).

When the *lodCount* is not zero (decision operation 611), one of the functions in the *MaAvatarFunctions* structure may be Function *maAvatarGetLod*() and called with *maAvatar,* and in case of success, returns a *MaLod* accessor to a Level Of Detail (LOD) of the avatar that is stored into a variable *maLod* (operation 612).

The function *maAvatarFunctions.maLodHasMesh*() may be then called (operation 613) using the *MaLod* accessor. In case of success, this function may return a boolean that is stored into a variable *hasLodMesh.*

When the boolean stored in the *hasLodMesh* is false (decision operation 614), all accessors may be deleted using functions like *maXXXXDelete*()*,* where XXXX is a data type like Instance, Data, Geometry, Avatar, Lod, or Node (see operations 630-635).

When the boolean stored in the *hasLodMesh* is true (decision operation 614), another function may be called, function *maLodGetMesh*()*,* and given the *maLod,* and in case of success, returns a *MaNode* accessor to an avatar node that is stored into a variable *maNode* (operation 615).

The function *maAvatarFunctions.maNodeHasGeometry*() may be then called (operation 616) using *maNode.* In case of success, this function may return a boolean that is stored into a variable *hasNodeGeometry.*

When the boolean stored into the variable *hasNodeGeometry* is false (decision operation 617), all accessors may be deleted using functions like *maXXXXDelete*()*,* where XXXX is a data type like Instance, Data, Geometry, Avatar, Lod, or Node (see operations 630-635).

When the boolean stored into the variable *hasNodeGeometry* is true (decision operation 617), another function may be called, function *maNodeGetGeometry*()*,* and given *maNode,* in case of success, returns a *MaGeometry* accessor that is stored into a variable maGeometry (operation 618).

The function *maAvatarFunctions.maGeometryGetVertices*() may be then called (operation 619) using *maGeometry.* In case of success, this function may return a *MaData* accessor that is stored into a variable maData.

The function *maAvatarFunctions.maDataGetType*() may be then called (operation 620) using *maData.* In case of success, this function may return a string that is stored into a variable *dataType.*

When the variable *dataType* is not "dense" (decision operation 621), all accessors may be deleted using functions like *maXXXXDelete*()*,* where XXXX is a data type like Instance, Data, Geometry, Avatar, Lod, or Node (see operations 630-635).

When the variable *dataType* is "dense" (decision operation 621), another function may be called, function *maDataGetType*()*,* and given *maData,* in case of success, returns a string that is stored into a variable *dataDType* (operation 622).

The function *maAvatarFunctions.maDataGetDims*() may be then called (operation 623) using the *maData.* In case of success, this function may return an integer list that is stored into a variable *dataDims.*

The function *maAvatarFunctions.maDataGetContent*() may be then called (operation 624) using the *maData.* In case of success, this function may return a buffer that is stored into a variable *dataContent.*

Once variables *dataDType, dataDims,* and *dataContent* are retrieved, these variables may be used together to build one or more vertices (operation 625), and these one or more vertices may be used by the application. Any of the above operations may be repeated with the same principle, walking though the avatar data following the AJIF structure from accessor to accessor, or from accessor to leaf data (like integers, strings or buffers) until the API client retrieves all the avatar data the API client needs. Additionally, all accessors may be deleted using functions like *maXXXXDelete*()*,* where XXXX is a data type like Instance, Data, Geometry, Lod, or Node (see operations 630-635).

The function *maAvatarFunctions.maDataDelete*() is called with *maData* when *maData* is not MA_NULL_ACCESSOR (operation 630).

The function *maAvatarFunctions.maGeometryDelete*() is called with *maGeometry* when *maGeometry* is not MA_NULL_ACCESSOR (operation 631).

The function *maAvatarFunctions.maNodeDelete*() is called with *maNode* when *maNode* is not MA_NULL_ACCESSOR (operation 632).

The function *maAvatarFunctions.maLodDelete*() is called with *maLod* when *maLod* is not MA_NULL_ACCESSOR (operation 633).

The function *maAvatarFunctions.maAvatarDelete*() is called with *maAvatar* (operation 634).

The function *maInstanceDelete*() is called with *maInstance* (operation 635).

Error handling is not presented in the example method 600 because error handling is assumed that if a function fails, the example method 600 goes to operation 630 and reports an error. The example method 600 also expects to find an avatar name (in the metadata) and vertices in the geometry of a mesh node of the first LoD.

The process may then end (operation 636).

In some examples, a similar approach may be followed using a different source of API implementation, like function calls through process inter communication and remote calls using dedicated protocols like WebRPC or HTTP REST. Both approaches may also be followed, where the client application loads a dynamic library which uses remote protocols for retrieving avatar representation data.

In some examples, the functions contained in the *MaAvatarFunctions* structure are not returned by a function like *maInstanceLoadAvatar*()*,* but directly made available in a dynamic library, as it is already the case for functions *maCreateInstance*()*, maInstanceLoadAvatar*() and *maInstanceDelete*()*.* In this implementation, functions are loaded or created for all supported formats or use branching to dynamically load or create these functions. In some examples, functions are loaded or created all at once for the format required by the file passed to *maInstanceLoadAvatar*()*,* and no branching is needed.

In some examples, references are used instead of accessors. In this case, references ensure the existence of the referenced data: it will exit as long as at least one reference exists. Compared to accessors, references may introduce memory leaks or even crashes, for instance when the dynamic library is unloaded while some references still exist.

In some examples, pointers are used instead of accessors. In this case, pointers do not ensure the existence of the pointed data: a pointer can point to data that no longer exists. Compared to accessors, pointers may reduce risk of memory leaks but can introduce crashes, for instance when an application tries to use to pointer which points to data that no longer exists.

In some examples, indexes, names or paths are used instead of accessors. An index is the location of data in a list. Many properties in AJIF are indexed, for example, a Geometry is in the geometries root list. When geometries is [A,B,C], geometries has three instances of Geometry A, B and C. The index of A is 0, the index of B is 1 and the index C is 2. A name can also locate data in an AJIF list, since all properties in list in AJIF has a "name" property. Then, assuming that each item is named with a different name, the names may be used to locate a property. In the previous example, the Geometry A could be named "A", Geometry B named "B" and Geometry C named "C". Then, "A" may be used to uniquely identify Geometry A. Paths are strings which locates properties inside a structured document, like JSON. For example, "/geometries/1" or "/geometries/B" identifies Geometry B in the previous example. Compared to accessors, indexes, names and paths are not robust to changes in lists. In the previous example, when the first Geometry is removed, the geometry list becomes [B,C]. Then, before the removal, index 0 identifies Geometry A, and after the removal, index 0 identifies Geometry B.

In some examples, the Dynamic Avatar API includes 1) the definition of prefixes for names; 2) a list of scalar types, each one defining the encoding of non-structured values; 3) a list of enum types, each on defining the possible values for one avatar data type; 4) a list of structure types, each one defining a list of values; 5) a list of return codes, each one defining a return state, successful or not; 6) a list of accessor types, each one representing the access to one avatar data type; and 7) a list of functions, each one corresponding to a specific service.

Some examples of the Dynamic Avatar API are compatible with the C language, as the C language may be used on many computers and can bind to many other programming languages and service protocols. However, the Dynamic Avatar API may also be embodied using other programming languages, such as, for example, C++, Java, Python, and the like, and other service protocols (TCP/IP, Web RTC, HTML REST, etc.).

Name prefixes may be used to increase the uniqueness of object names. However, in other examples, name prefixes may not be necessary. The name prefixes used in this disclosure are based on two letters: M for "MPEG" and A for "Avatar". Constants and preprocessor defined in C are prefixed with "MA_"; data types are prefixed with "Ma"; and functions are prefixed with *"*ma".

The prefix "PFN_" is also used to distinguish between a pointer or reference to a function and the type of a pointer or reference to a function. For example, "PFN_maInstanceLoadAsset" is the type of the function pointer "maInstanceLoadAsset". The following types may be used in the input arguments of the API functions: 1) an integer is passed to an API function as a signed 64-bit integer, 2) a float value is passed to an API function as an IEEE 754 64-bit float, 3) a structure is passed to an API function as a pointer to a structure, or 4) an accessor is passed to an API function as a pointer to an accessor structure or as an unsigned 64-bit integer.

The following types may be used in the output arguments of the API functions: 1) an integer is returned by an API function using a pointer to a signed 64-bit integer, 2) a float is returned by an API function using a pointer to an IEEE 754 64-bit float, 3) a string is returned by an API function using the two-call idiom into a UTF-8 character buffer, 4) an enum is returned by an API function using a pointer to an enum, 5) a structure is returned by an API function using a pointer to a structure, or 6) an accessor is returned by an API function using a double pointer to an accessor structure or using a pointer to an unsigned 64-bit integer. In other examples, when possible, values may be directly returned, instead of using pointers.

The Dynamic Avatar API may use the following enum types: 1) *MaDataType:* possible values for the type of a raw data, e.g. the "type" property of the *RawData* AJIF property (see Table 1 below), 2) *MaDataDType:* possible values for the type of a raw data value, e.g., the "dtype" property of the *RawData* AJIF property (see Table 2 for values for this enum), 3) *MaDataIType:* possible values for the type of a raw data index value, e.g. the "itype" property of the *RawData* AJIF property (see Table 3 for values for this enum), 4) *MaDataCType:* possible values for the type of a raw data color value, e.g., the "ctype" property of the *RawData* AJIF property (see Table 4 for values for this enum), 5) *MaStructureType:* possible values for the type of an API structure, and each value uniquely identify a structure used by the Dynamic Avatar API (see Table 5 for values for this enum).

**Table 1 - Enum type for AJIF RawData types**

| **Name** | **Value** | **Description** | **RawData type** |
|---|---|---|---|
| MA_DATA_TYPE_INVALID | -1 | Invalid type | N/A |
| MA_DATA_TYPE_DENSE | 0 | Dense data type | "dense" |
| MA_DATA_TYPE_SPARSE | 1 | Sparse data type | "sparse" |
| MA_DATA_TYPE_IMAGE | 2 | Image data type | "image" |
| MA_DATA_TYPE_TUPLES | 3 | Tuples data type | "tuples" |

**Table 2 - Enum type for AJIF RawData value types**

| **Name** | **Value** | **Description** | **RawData value type** |
|---|---|---|---|
| MA_DATA_DTYPE_INV ALID | -1 | Invalid type | N/A |
| MA_DATA_DTYPE_I8 | 0 | 8-bit signed value type | "i8" |
| MA_DATA_DTYPE_U8 | 1 | 8-bit unsigned value type | "u8" |
| MA_DATA_DTYPE_I16 | 2 | 16-bit signed value type | "i16" |
| MA_DATA_DTYPE_U16 | 3 | 16-bit unsigned value type | "u16" |
| MA_DATA_DTYPE_I32 | 4 | 32-bit signed value type | "i32" |
| MA_DATA_DTYPE_U32 | 5 | 32-bit unsigned value type | "u32" |
| MA_DATA_DTYPE_I64 | 6 | 64-bit signed value type | "i64" |
| MA_DATA_DTYPE_U64 | 7 | 64-bit unsigned value type | "u64" |
| MA_DATA_DTYPE_F16 | 8 | IEEE 754 16-bit float value type | "f16" |
| MA_DATA_DTYPE_F32 | 9 | IEEE 754 32-bit float value type | "f32" |
| MA_DATA_DTYPE_F64 | 10 | IEEE 754 64-bit float value type | "f64" |

**Table 3 - Enum type for AJIF RawData index value types**

| **Name** | **Value** | **Description** | **RawData index value type** |
|---|---|---|---|
| MA_DATA_ITYPE_INVA LID | -1 | Invalid type | N/A |
| MA_DATA_ITYPE_I8 | 0 | 8-bit signed index value type | "i8" |
| MA_DATA_DTYPE_U8 | 1 | 8-bit unsigned index value type | "u8" |
| MA_DATA_ITYPE_I16 | 2 | 16-bit signed index value type | "i16" |
| M A_DATA_ITYPE_U16 | 3 | 16-bit unsigned index value type | "u16" |
| MA_DATA_ITYPE_I32 | 4 | 32-bit signed index value type | "i32" |
| MA_DATA_ITYPE_U32 | 5 | 32-bit unsigned index value type | "u32" |
| MA_DATA_ITYPE_I64 | 6 | 64-bit signed index value type | "i64" |
| MA_DATA_ITYPE_U64 | 7 | 64-bit unsigned index value type | "u64" |

**Table 4 - Enum type for AJIF RawData color value types**

| **Name** | **Valu e** | **Description** | **RawData color value type** |
|---|---|---|---|
| MA_DATA_CTYPE_INVAL ID | -1 | Invalid type | N/A |
| MA_DATA_CTYPE_RGB | 0 | RGB color value type | "RGB" |
| MA_DATA_CTYPE_RGBA | 1 | RGBA color value type | "RGBA" |

**Table 5 - Enum type for API structure types**

| **Name** | **Value** | **Description** |
|---|---|---|
| MA_TYPE_UNKNOWN | 0 | Unknown or invalid structure |
| MA_TYPE_INSTANCE_CREATE_ INFO | 1 | Information for creating a new instance. |
| MA_TYPE_ASSET_FUNCTIONS | 2 | Pointers to API functions. |

The following structure types may be used by the Dynamic Avatar API: 1) *MaInstanceCreateInfo* that contains information required for the creation of an Instance (see Table 6 for the definition of its fields) and *MaAssetFunctions* that contains pointers to the Dynamic Avatar API functions (see Table 8 for the definition of its fields).

**Table 6 - Fields of a MaInstanceCreateInfo structure type.**

| **Name** | **Type** | **Description** |
|---|---|---|
| type | MaStructureType | Definite the type of this structure |
| version | int64_t | API version supported by the client. The lowest 32 bits defines the minor version, and the highest |
| | | 31 bit the major version. The highest bit must be zero. |

The following defines the return codes used by the Dynamic Avatar API in some examples. Positive or null return codes are returned in case of success (no errors). Negative return codes are returned in case of failure (errors).

**Table 7 - Error codes**

| **Name** | **Value** | **Description** |
|---|---|---|
| MA_SUCCESS | 0 | Function is successful |
| MA_UNAVAILABLE | 10 | Indicate that data is not available. |
| MA_MORE_THAN_ONE_AVATAR | 100 | Avatar representation was successfully decoded, but there is more than one avatar. A single one is considered. |
| MA_ERROR_VALIDATION_FAILUR E | -1 | One or more of the arguments is invalid. |
| MA_ERROR_RUNTIME_FAILURE | -2 | Unexpected runtime error. |
| MA_ERROR_OUT_OF_MEMORY | -3 | The operator can not be run because there is not enough memory. |
| MA_ERROR_API_VERSION_UNSUP PORTED | -4 | The requested API version is not supported. |
| MA_ERROR_INITIALIZATION_FAI LED | -6 | The initialization procedure failed. |
| MA_ERROR_FUNCTION_UNSUPPO RTED | -7 | The requested function is not supported. |
| MA_ERROR_FEATURE_UNSUPPOR TED | -8 | The requested feature is not supported. |
| MA_ERROR_SIZE_INSUFFICIENT | -11 | The size of the buffer is not large enough. |
| MA_ERROR_FILE_NOT_FOUND | -12 | The file was not found. |
| MA_ERROR_LOAD_DLL_FAILED | -13 | The loading of the dynamic library was not successful. |
| MA_ERROR_UNSUPPORTED_FOR MAT | -14 | The requested format is not supported. |

The following accessor types are used by the Dynamic Avatar API in some examples: 1) MaInstance, 2) MaAsset, 3) MaMetadata, 4) MaLod, 5) MaController, 6) MaChannel, 7) MaChannel, 8) MaSkeleton, 9) MaSkinning, 10) MaNode, 11) MaGeometry, 12) MaFaces, 13) MaBlendshape, 14) MaTexture, 15) MaTextureDisplacements, and 16) MaData. The MaInstance accessor gives access to a Dynamic Avatar API implementation, for instance using a dynamic library. The MaAsset accessor gives access to an avatar representation, for instance given a file path. The MaMetadata accessor gives access to an avatar metadata and corresponds to the Metadata property of AJIF. The MaLod accessor gives access to the LOD content of an avatar representation and corresponds to the LOD property of AJIF.

The MaController accessor gives access to the data of a controller of an avatar representation and corresponds to the Controller property of AJIF. The MaChannel accessor gives access to the channel data of a controller and corresponds to the Channel property of AJIF. The MaSkeleton accessor gives access to the skeleton data an avatar representation and corresponds to the Skeleton property of AJIF. The MaSkinning accessor gives access to the skinning data of a skeleton and corresponds to the Skinning property of AJIF. The MaNode accessor gives access to a node of an avatar representation and corresponds to the Node property of AJIF. The MaGeometry accessor gives access to a geometry of an avatar representation and corresponds to the Geometry property of AJIF.

The MaFaces accessor gives access to faces data of a geometry and corresponds to the Faces property of AJIF. The MaBlendshape accessor gives access to blendshapes data of a geometry and corresponds to the Blendshapes property of AJIF. The MaTexture accessor gives access to texture data of a geometry and corresponds to the Texture property of AJIF. The MaTextureDisplacements accessor gives access to the texture displacements data of a texture and corresponds to the TextureDisplacements property of AJIF. The MaData accessor gives access to data of an avatar representation and corresponds to the RawData property of AJIF.

The remaining description is provided as implementation examples and should not be considered limiting.

### 1 API Header

The following code is an example of a C header file which declares the components of the Dynamic Avatar API:

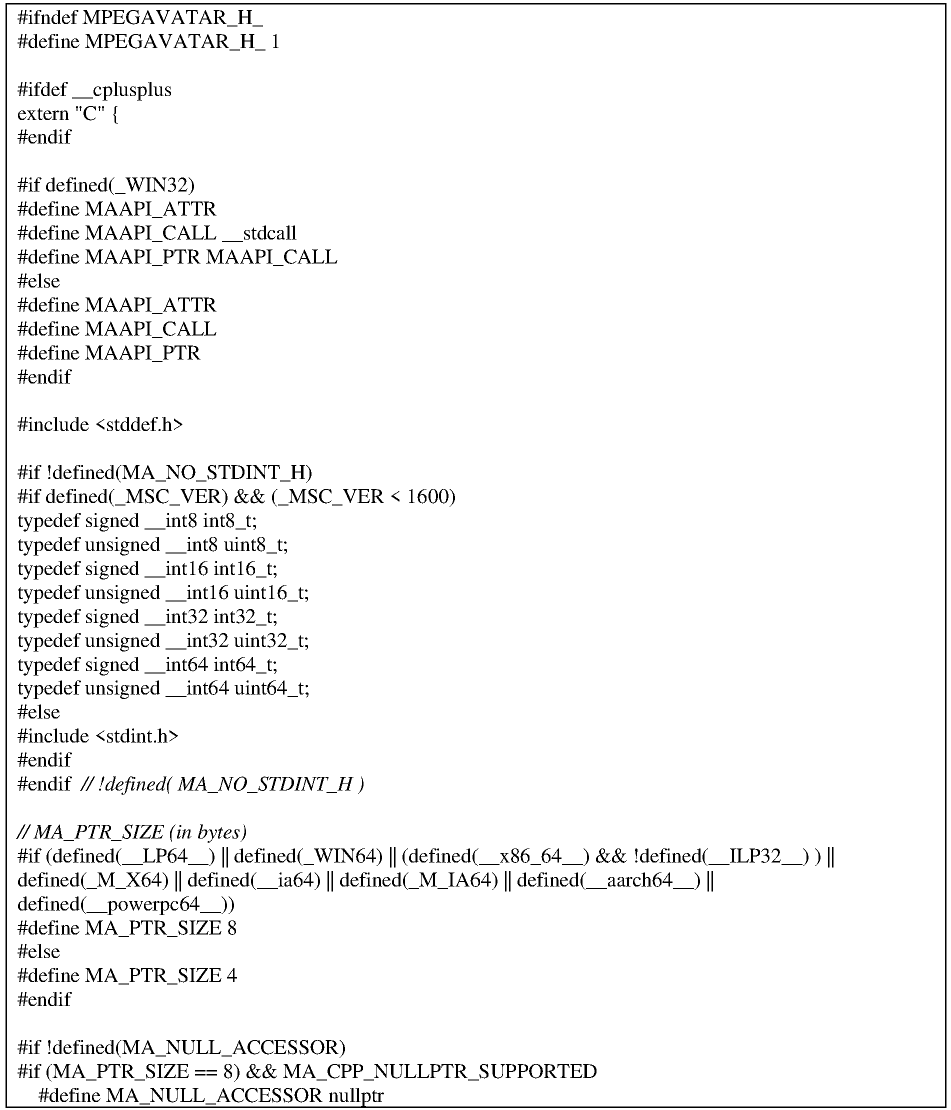

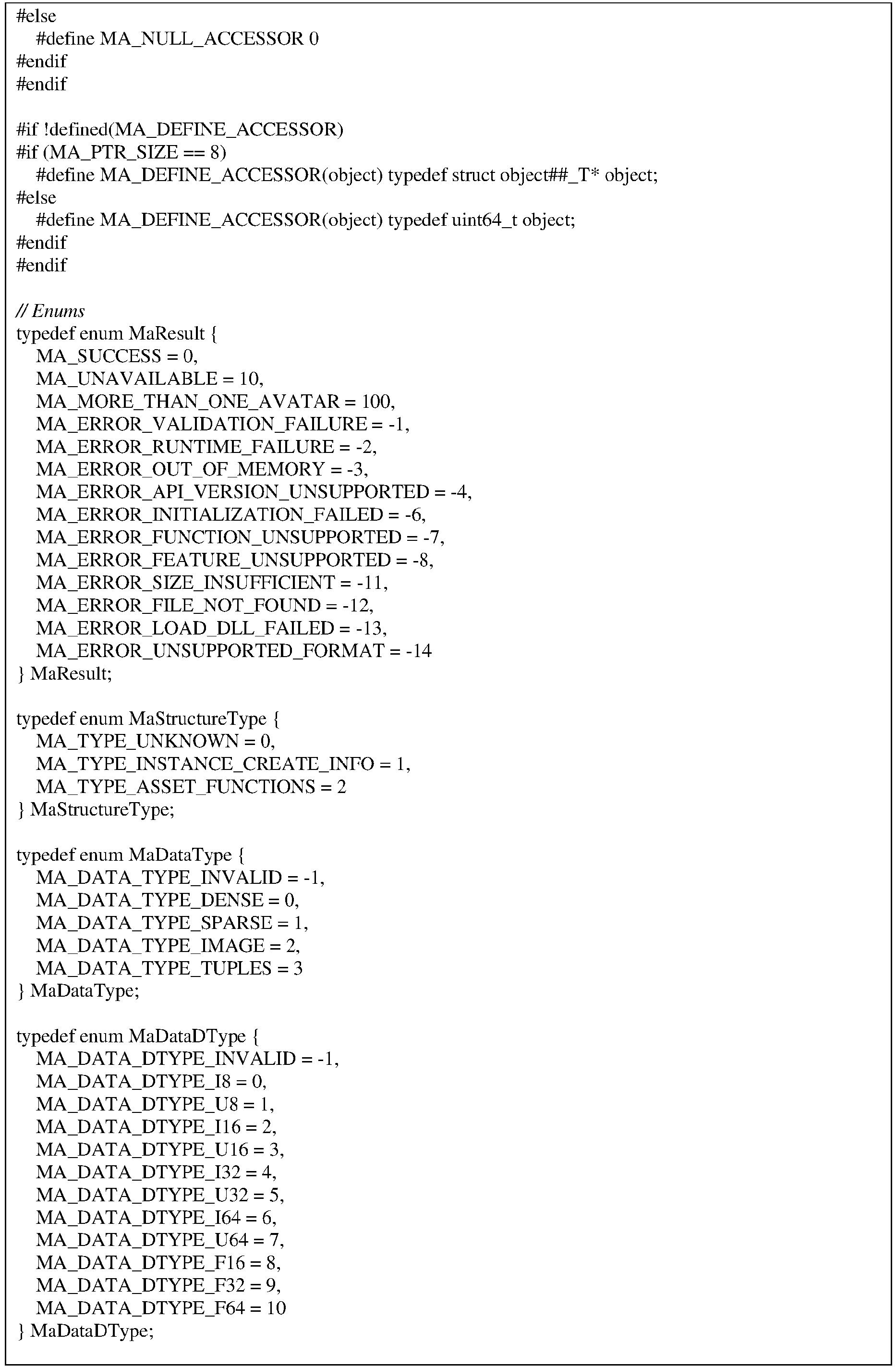

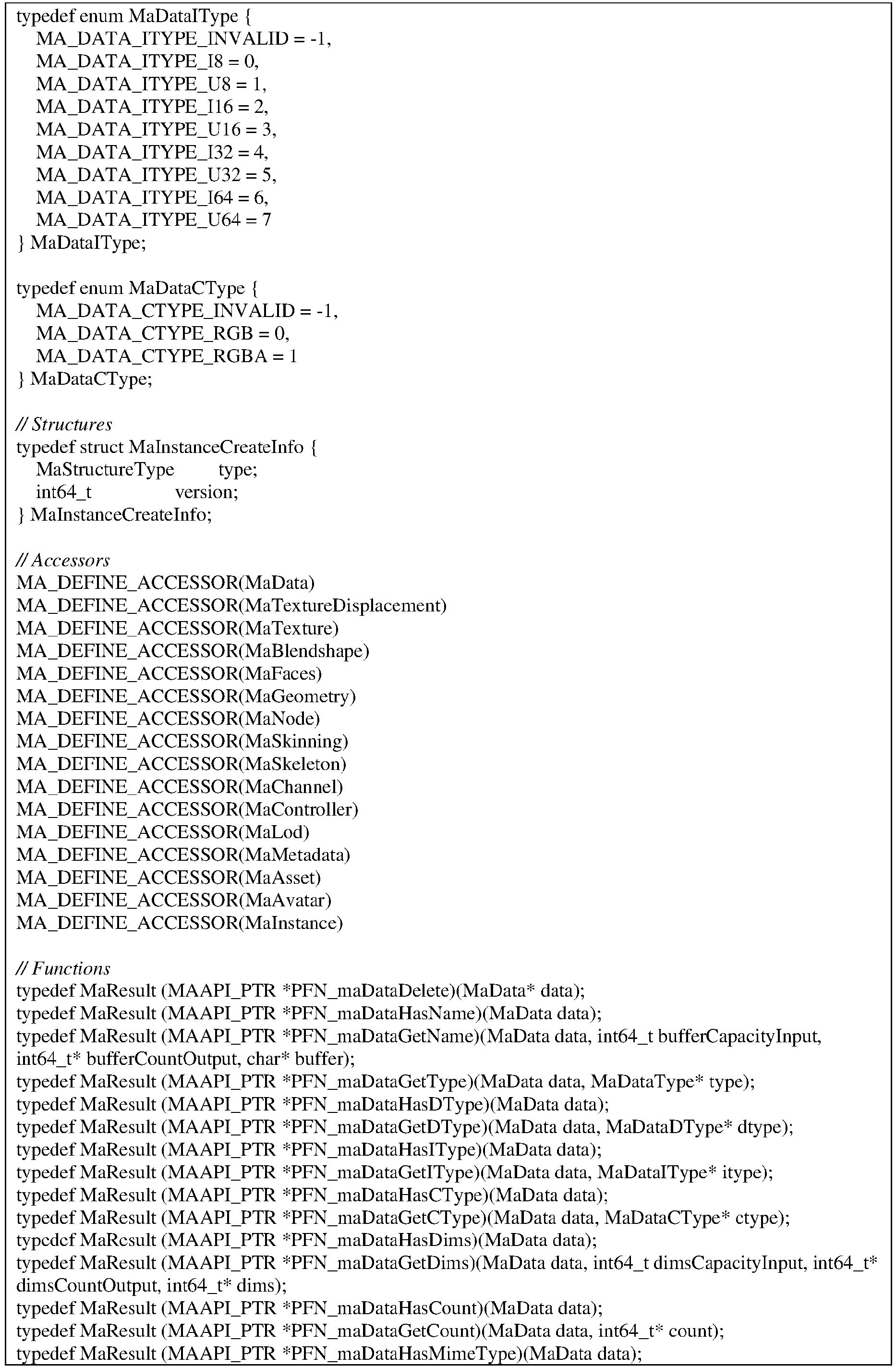

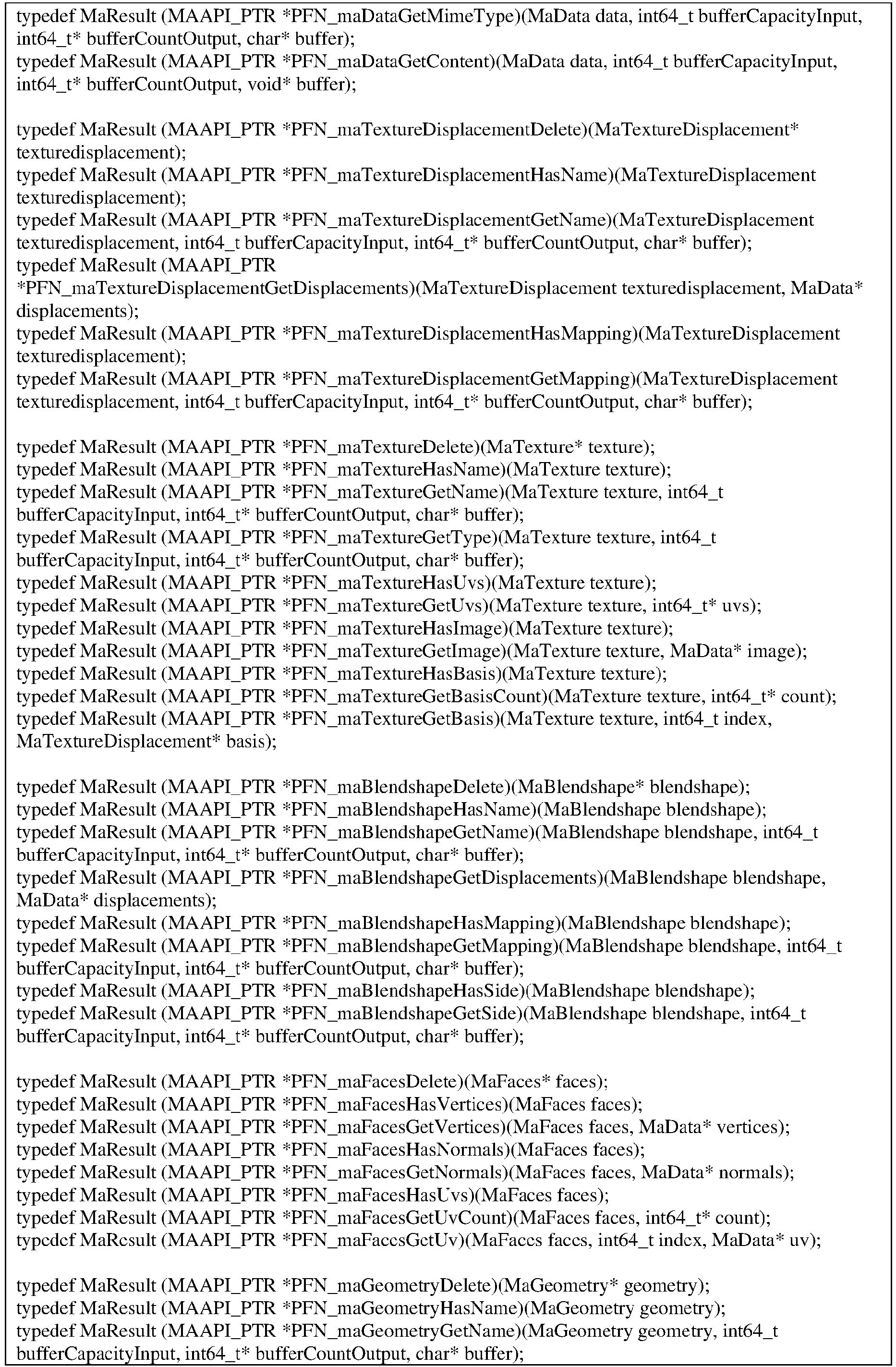

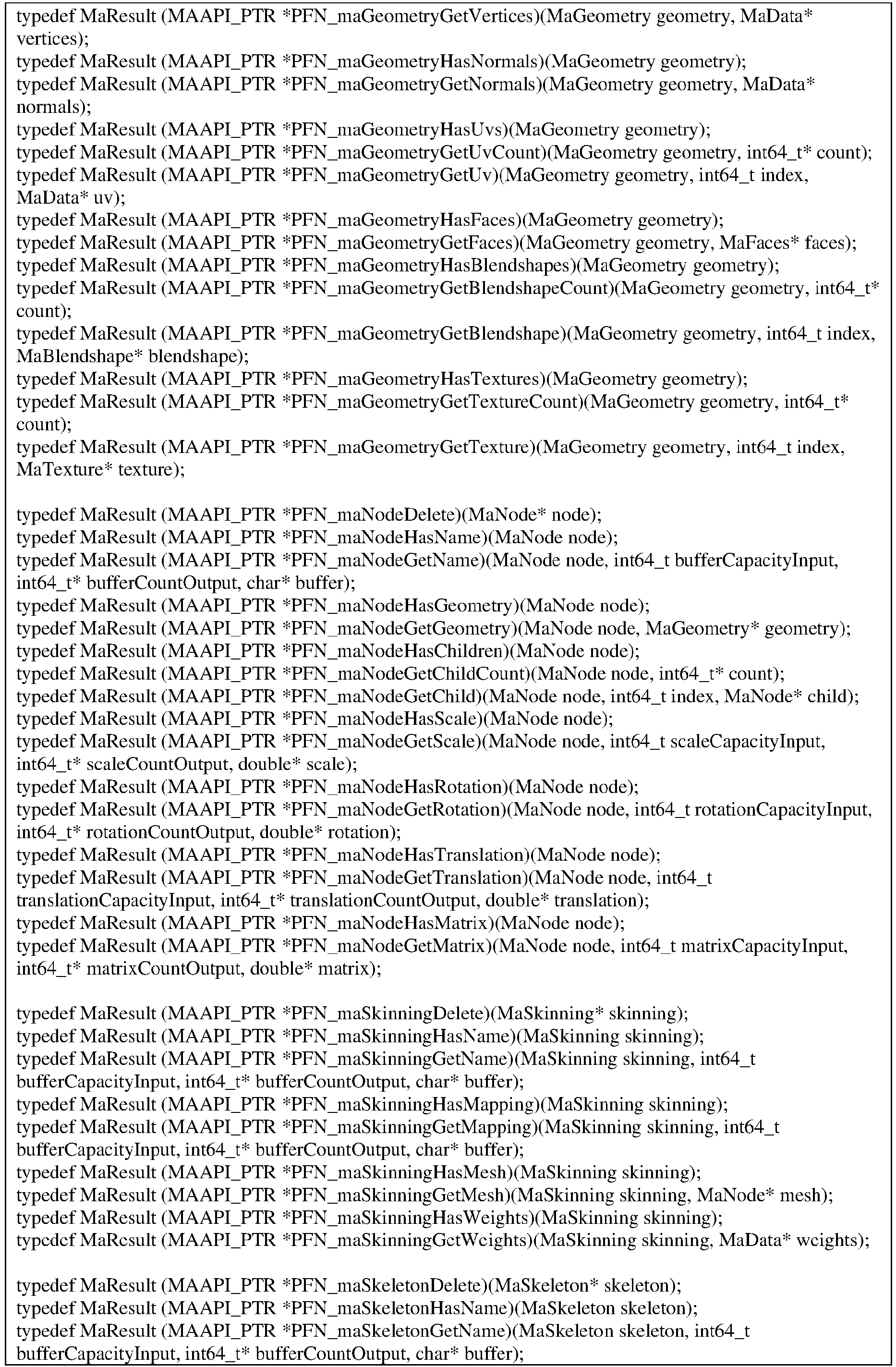

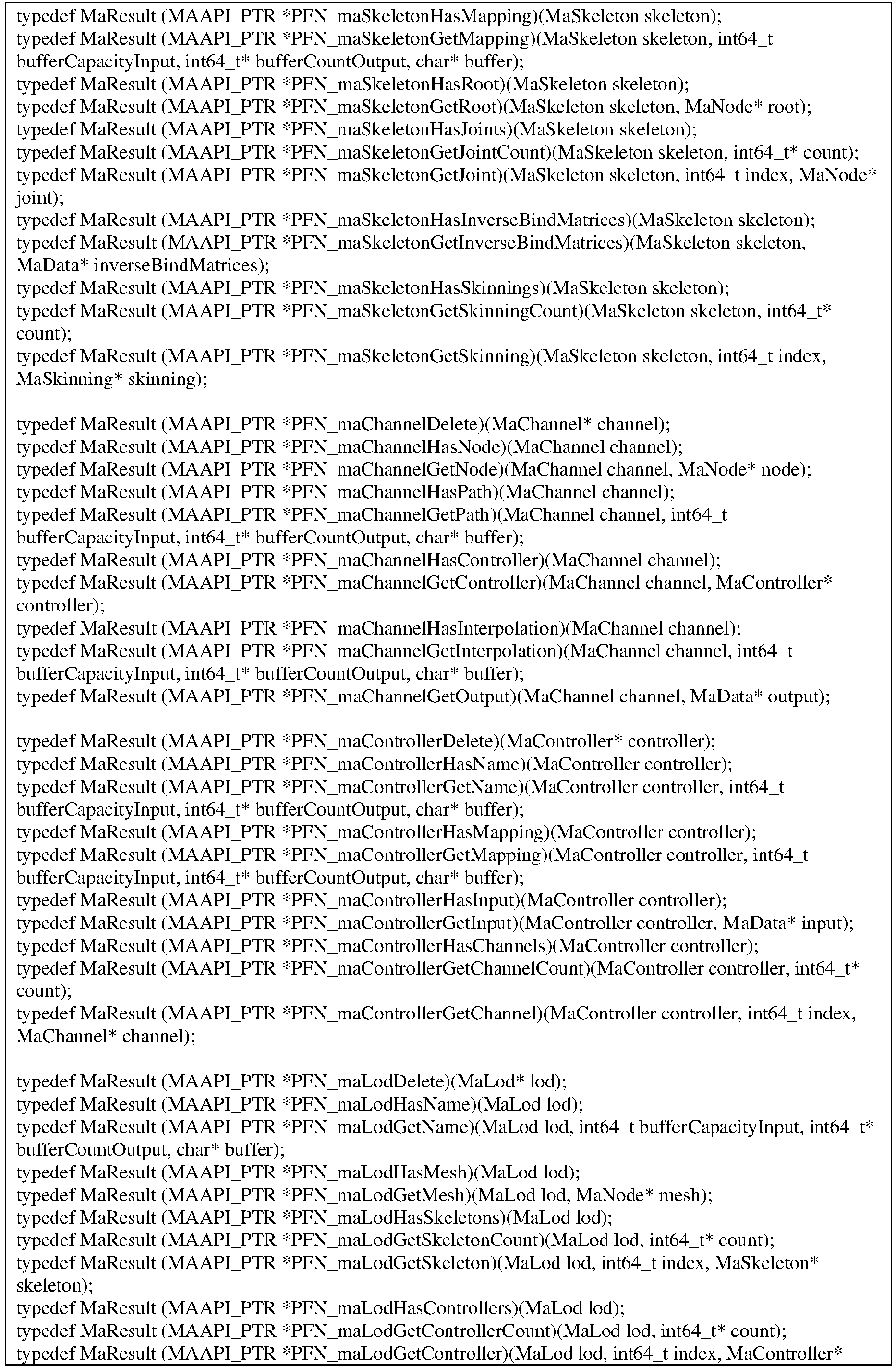

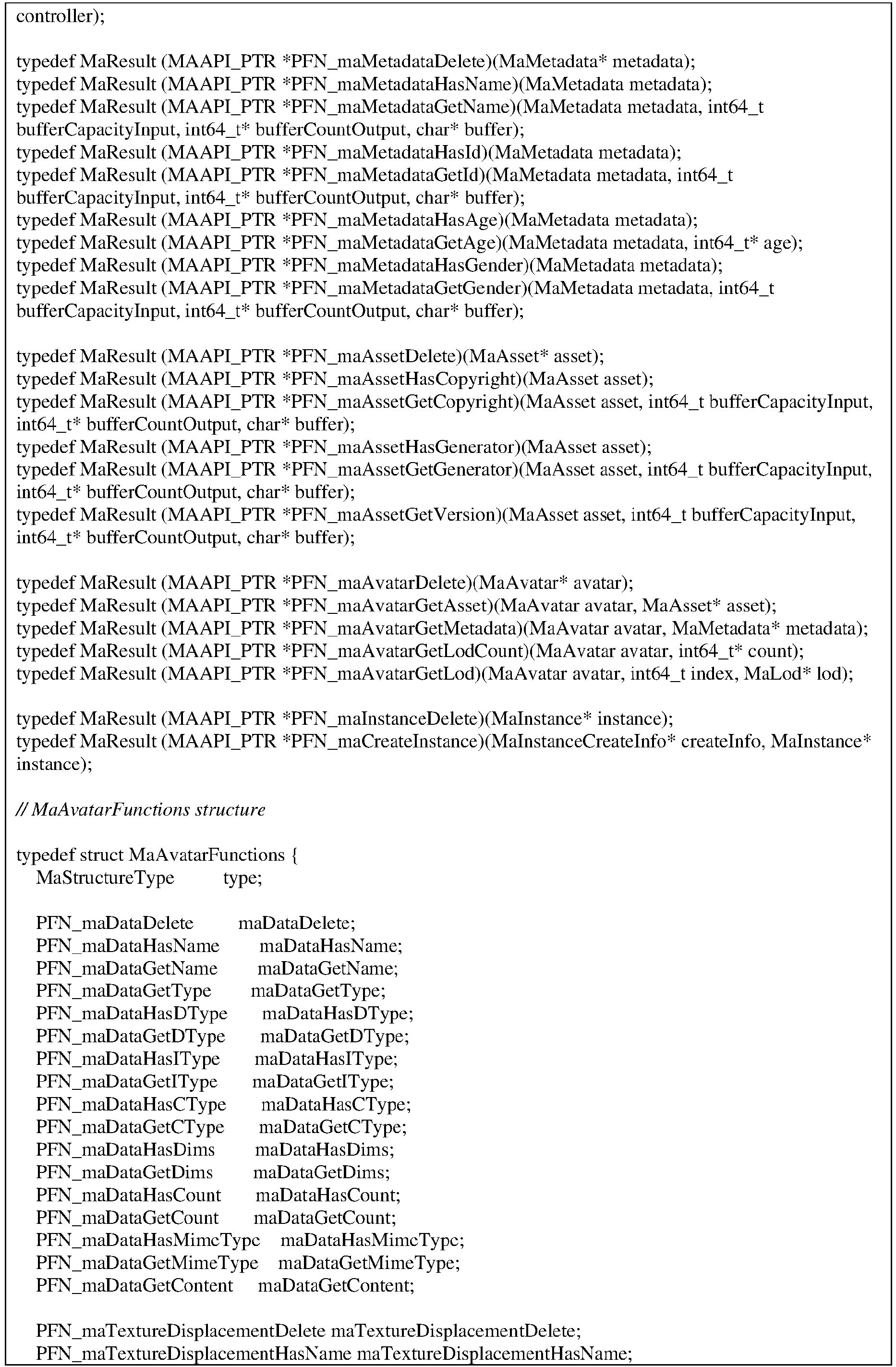

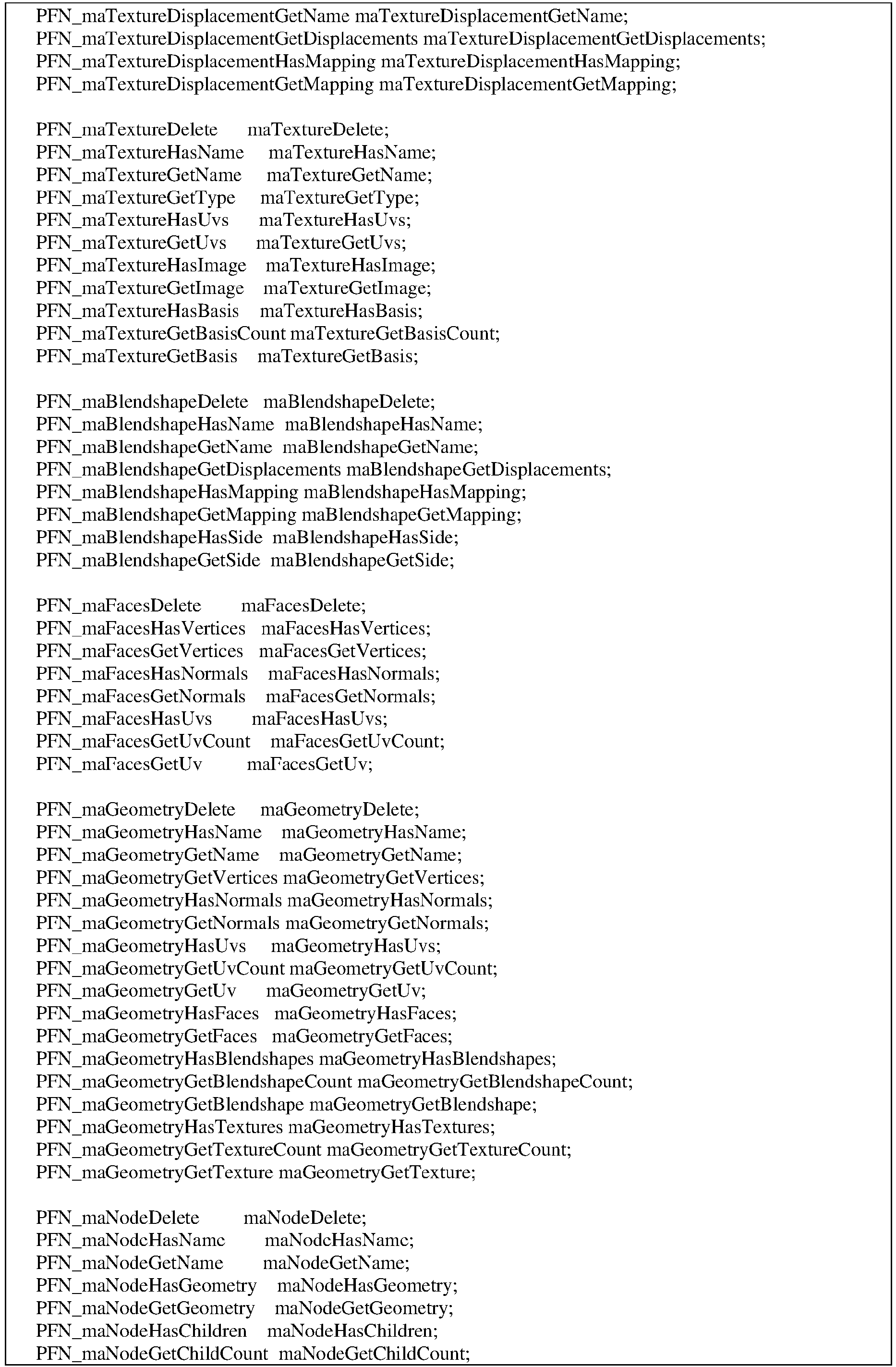

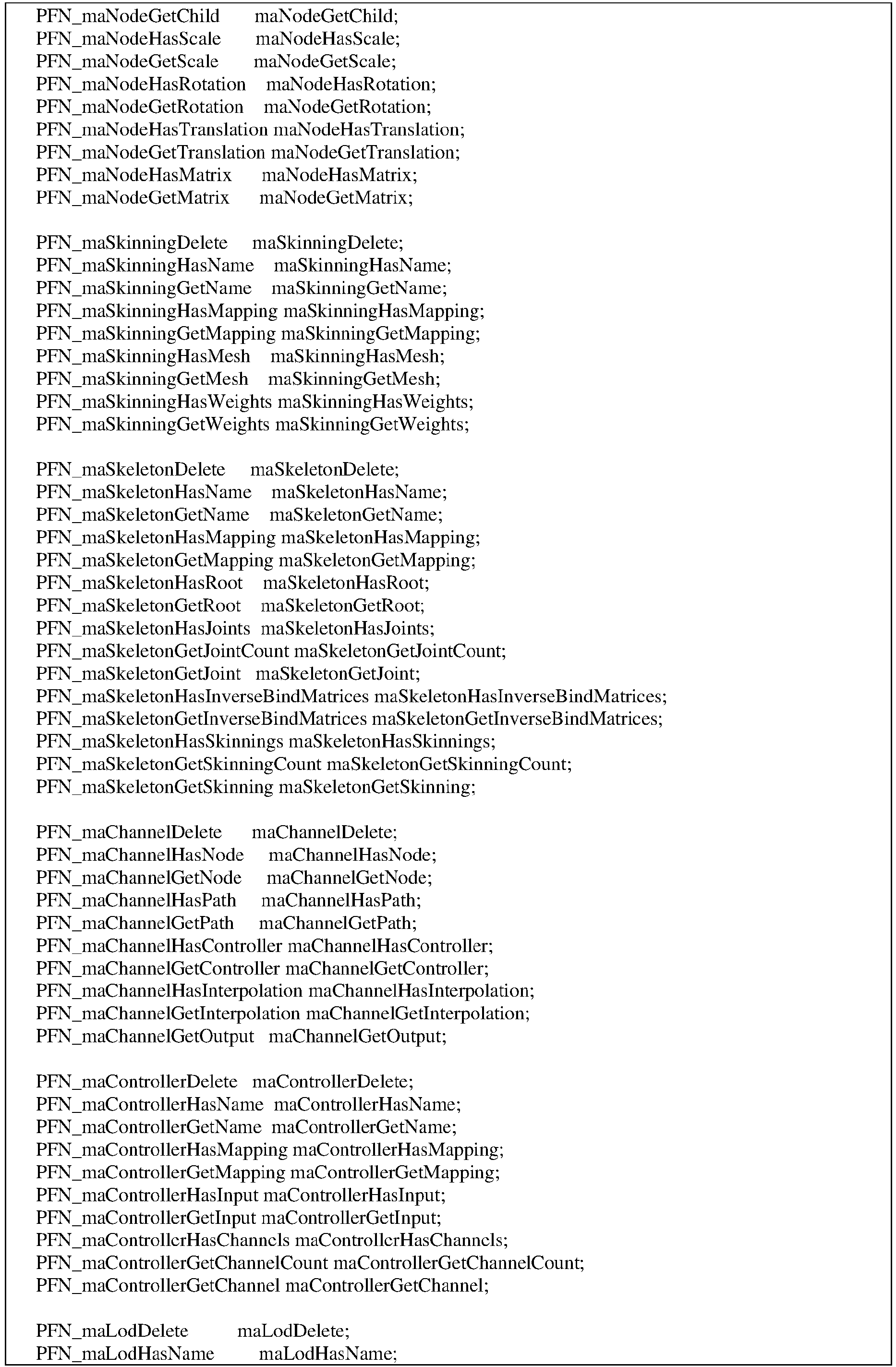

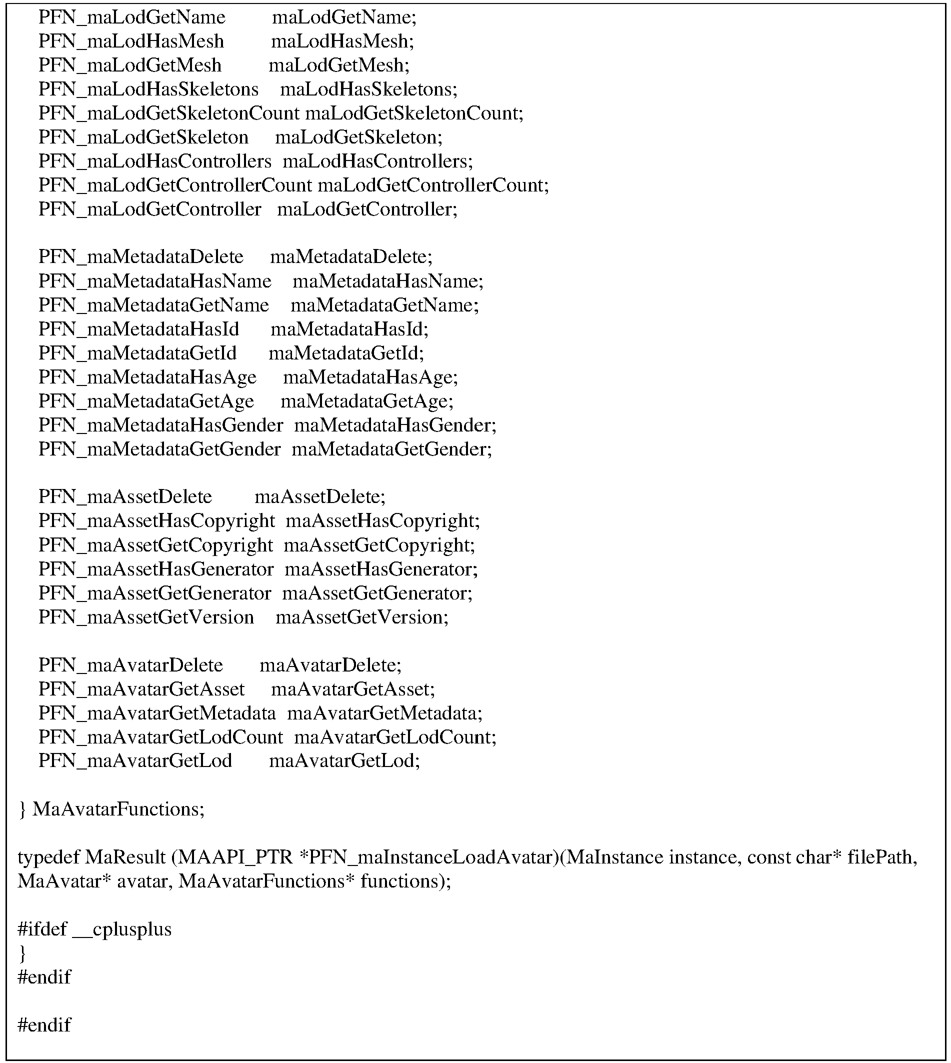

This header file can be included by API clients and implementations. In the former case, the maCreateInstance(), maInstanceDelete() and maInstanceLoadAvatar() functions are loaded in a dynamic library file, and the others through the call to maInstanceLoadAvatar(). In the latter case, the maCreateInstance(), maInstanceDelete() and maInstanceLoadAvatar() functions are implemented, and the other functions may or may not be implemented.

### 2 Client

The following listing shows an example of the API client in C language:

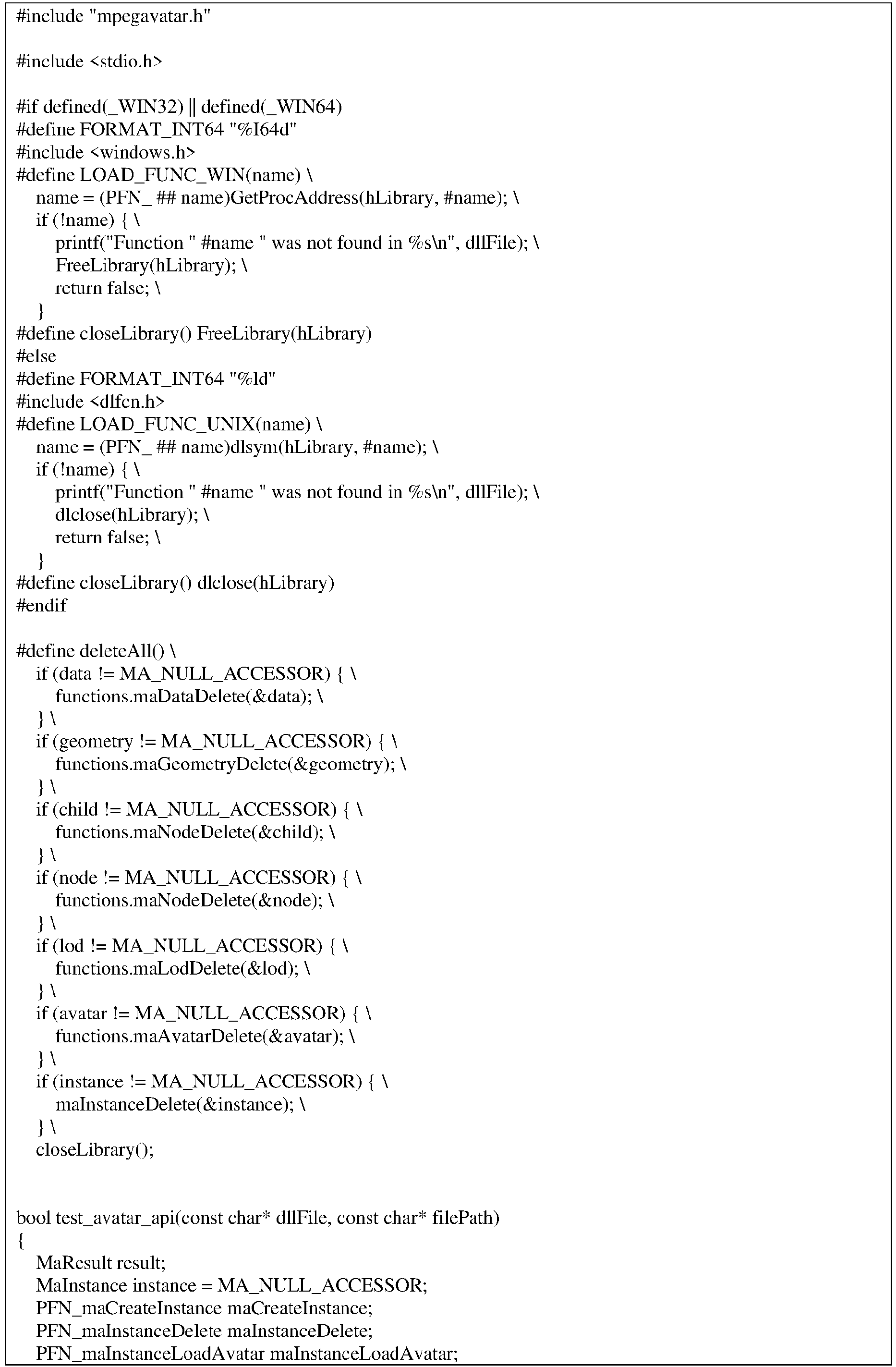

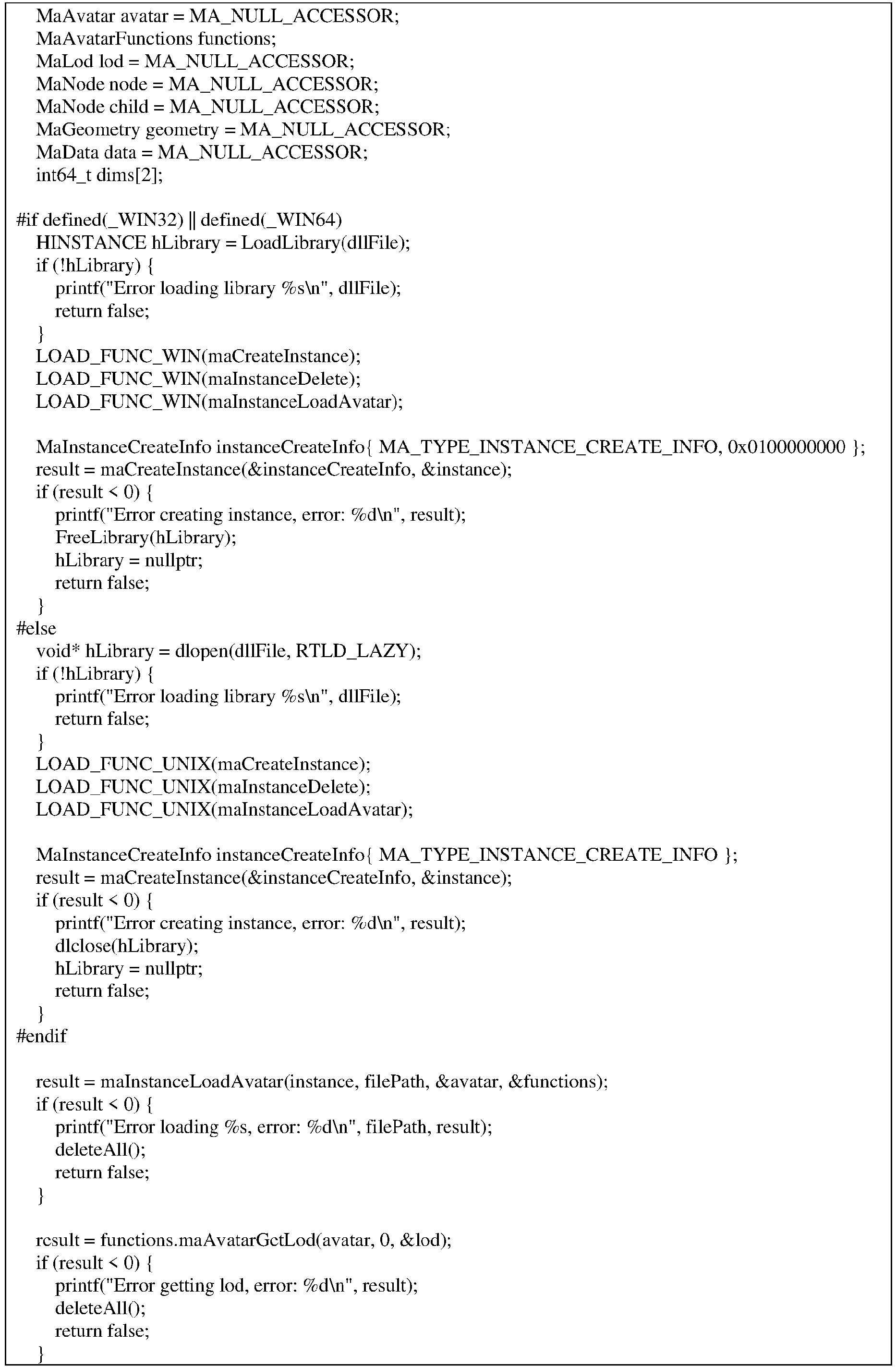

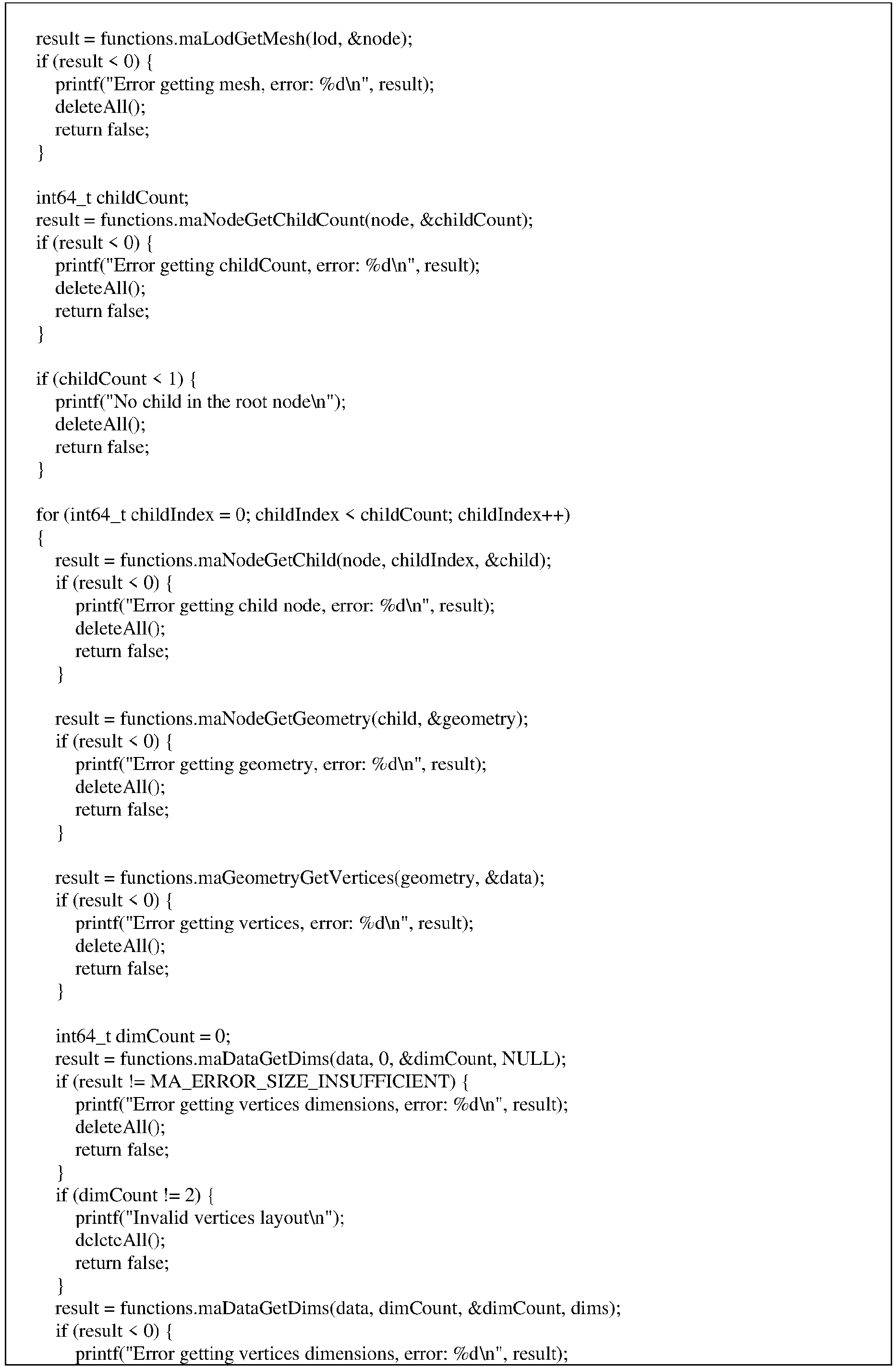

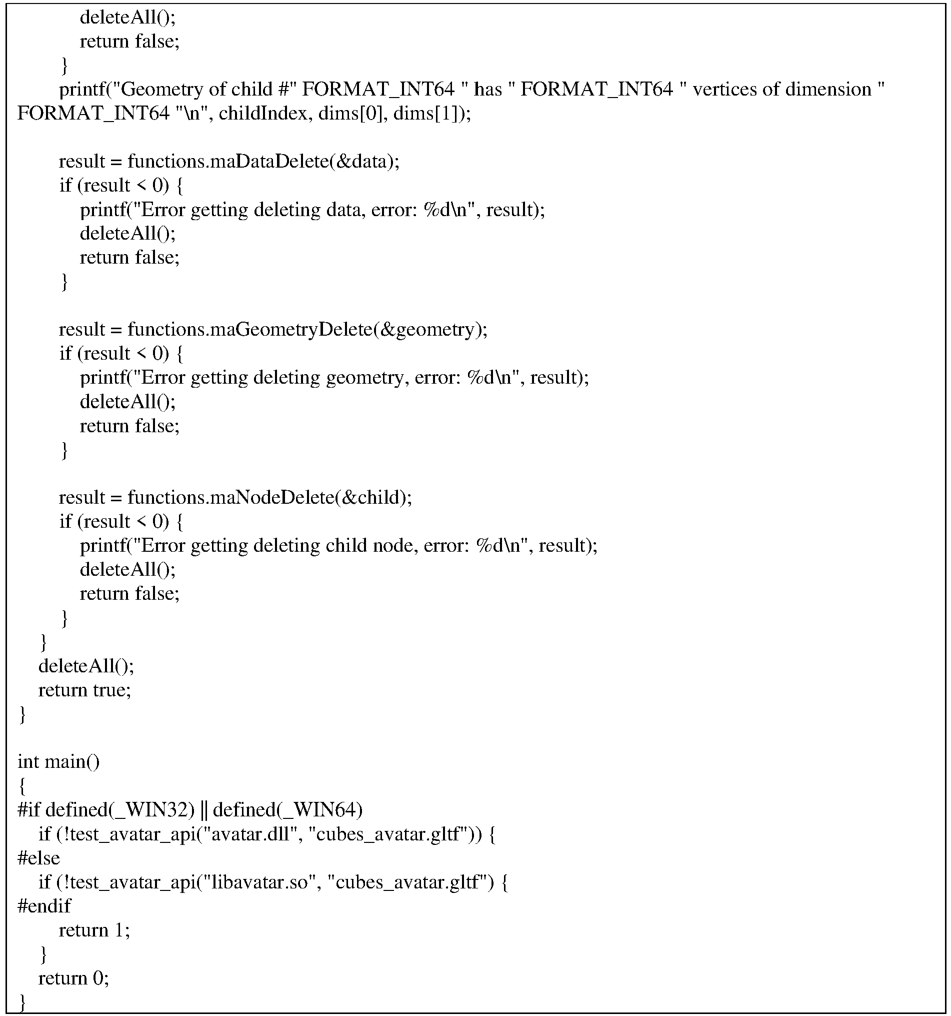

This example includes a "mpegavatar.h" which declares the API components, for instance the file in Section 3.1.

Depending on the operating system (e.g., Windows or Posix), a dynamic library which implements the API is loaded ("avatar.dll" or "libaravatar.so"). Then, the operating system loads the following glTF file "cubes_avatar.glTF":

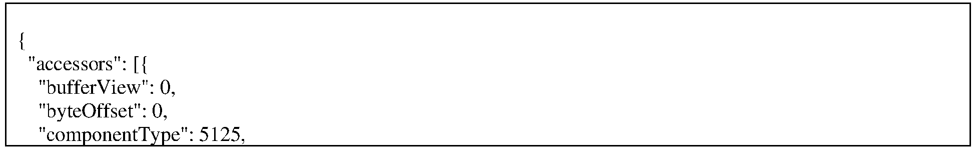

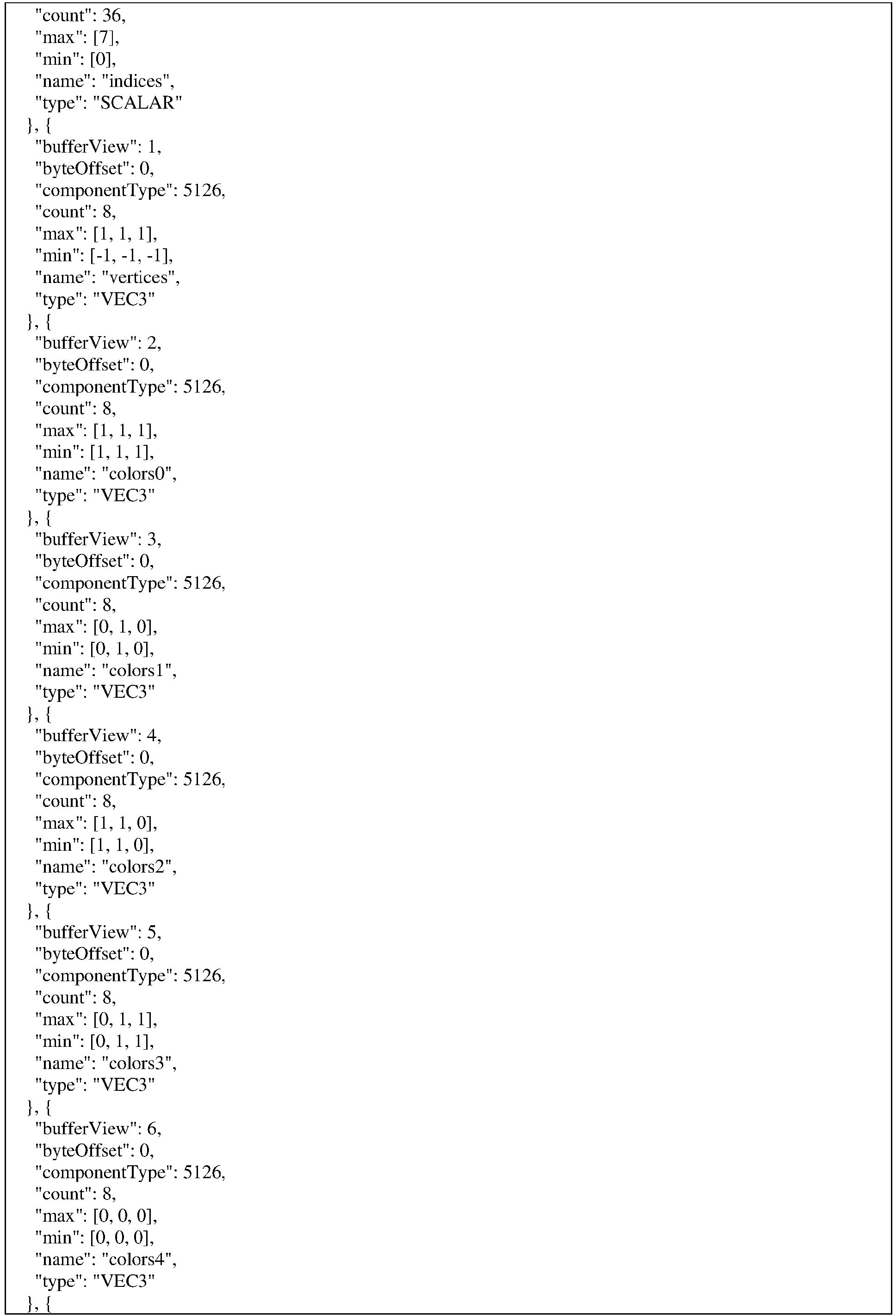

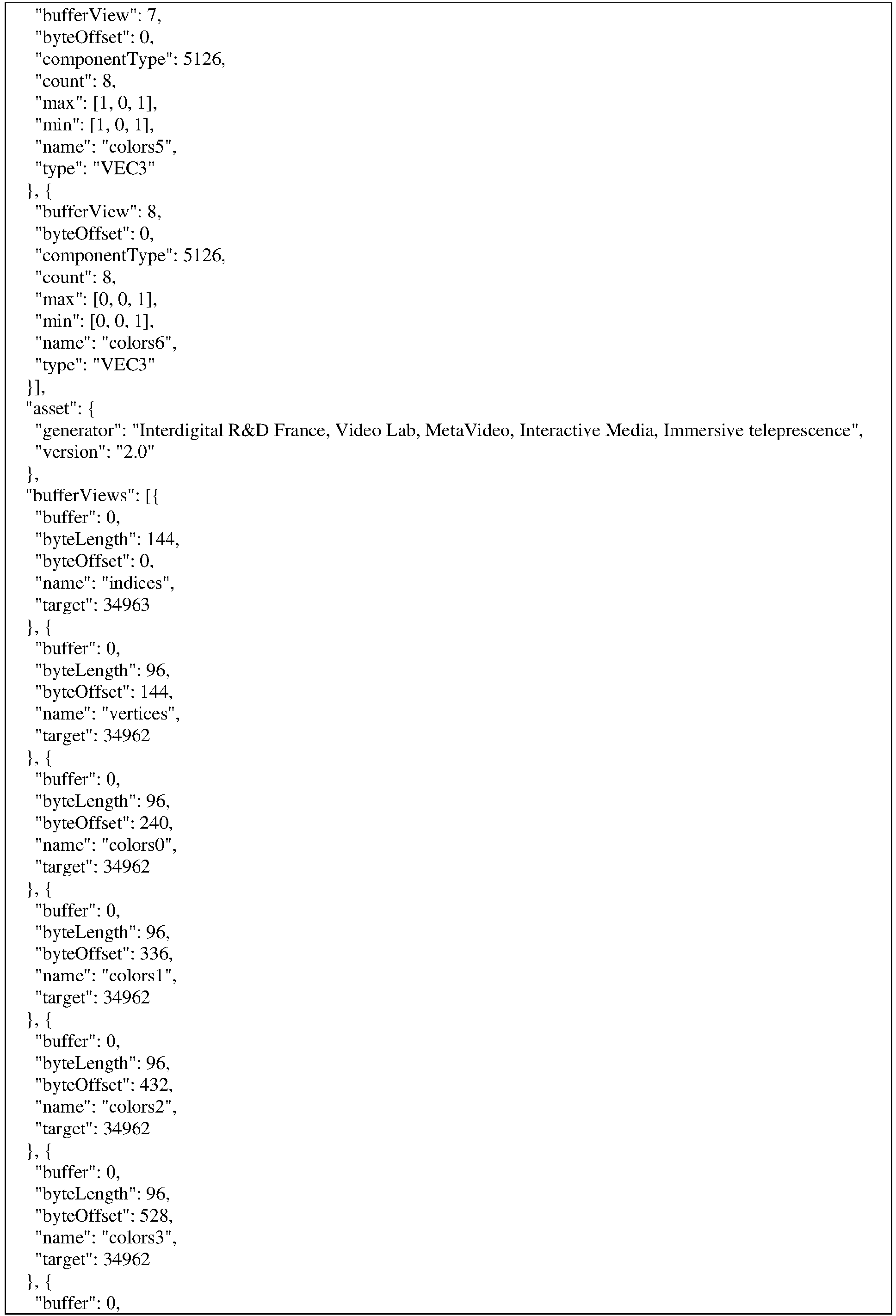

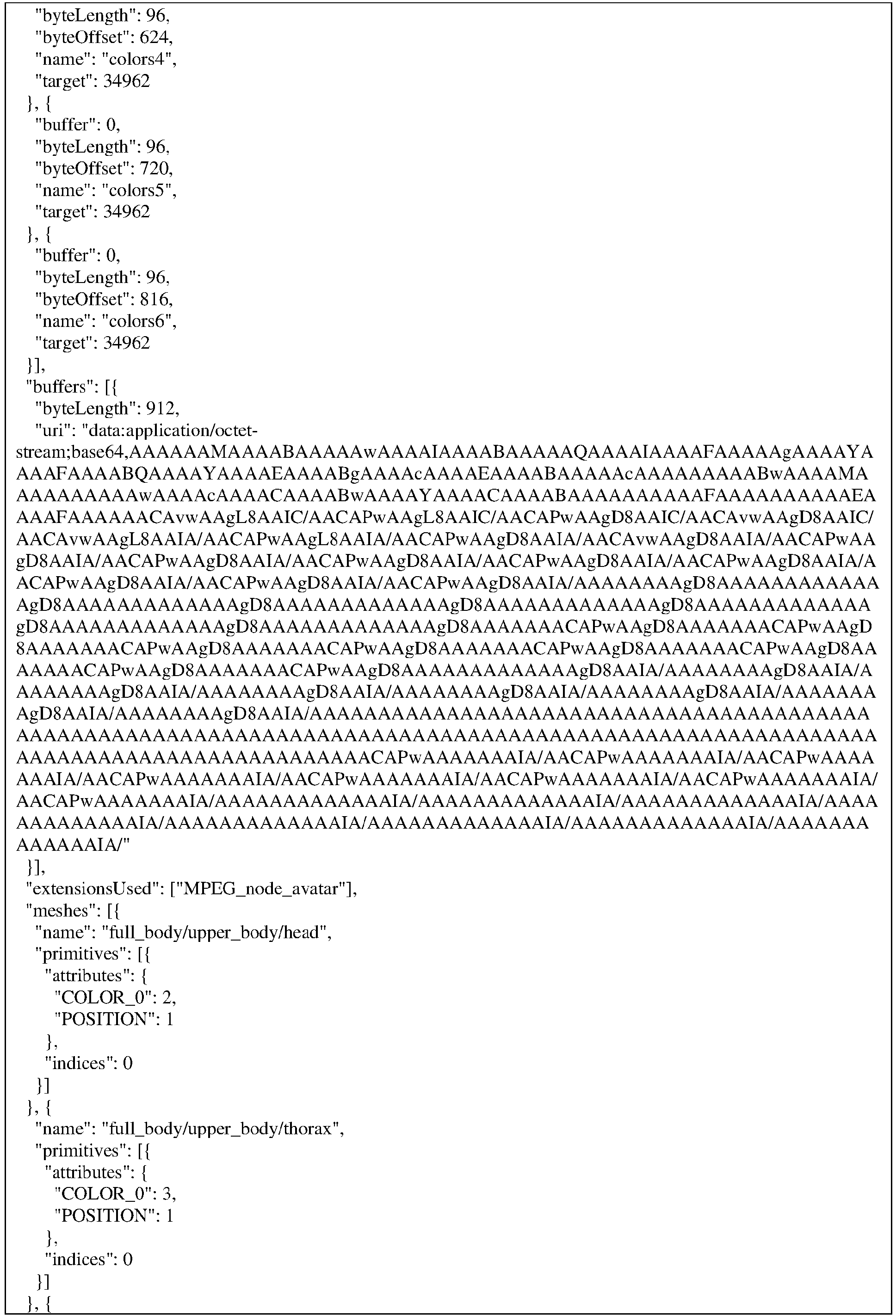

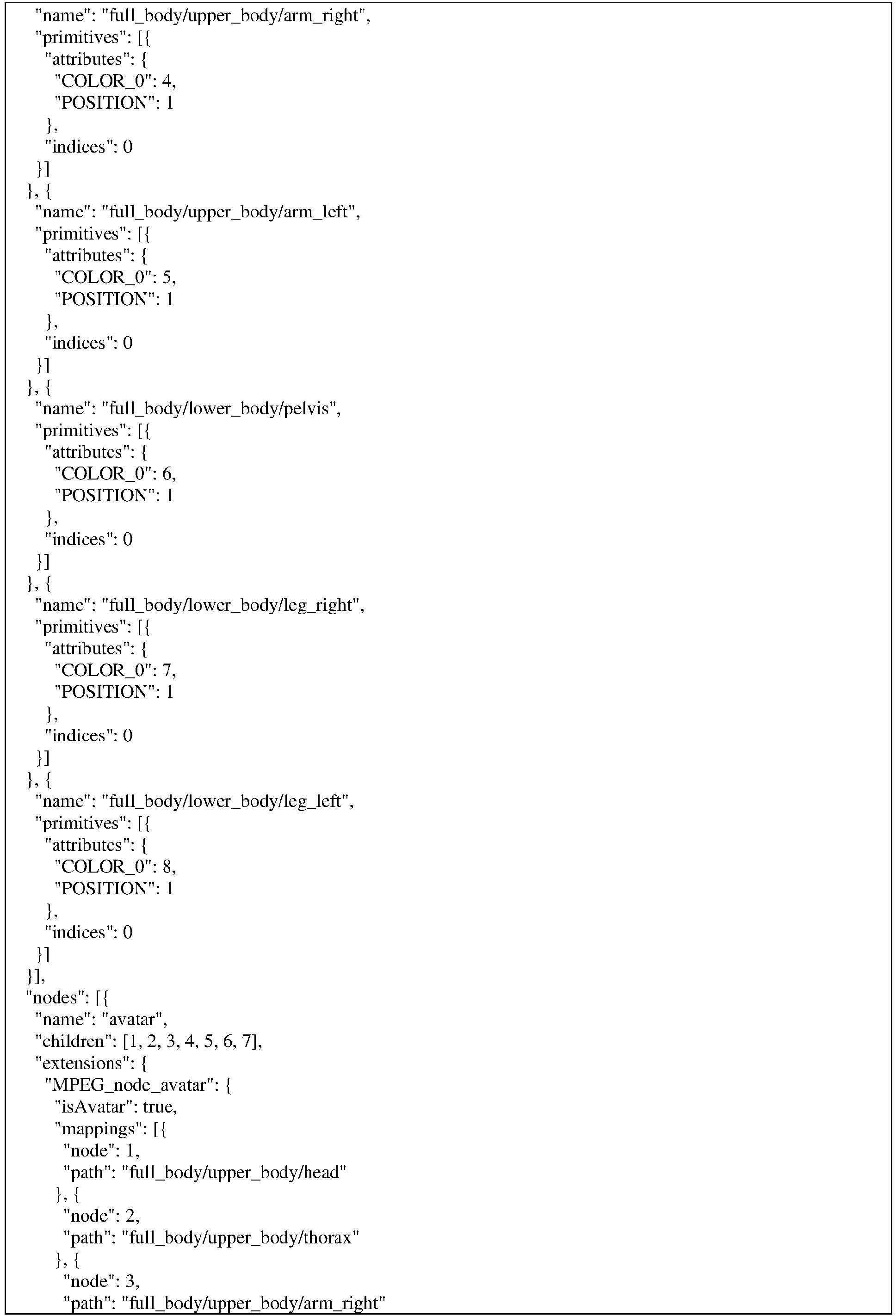

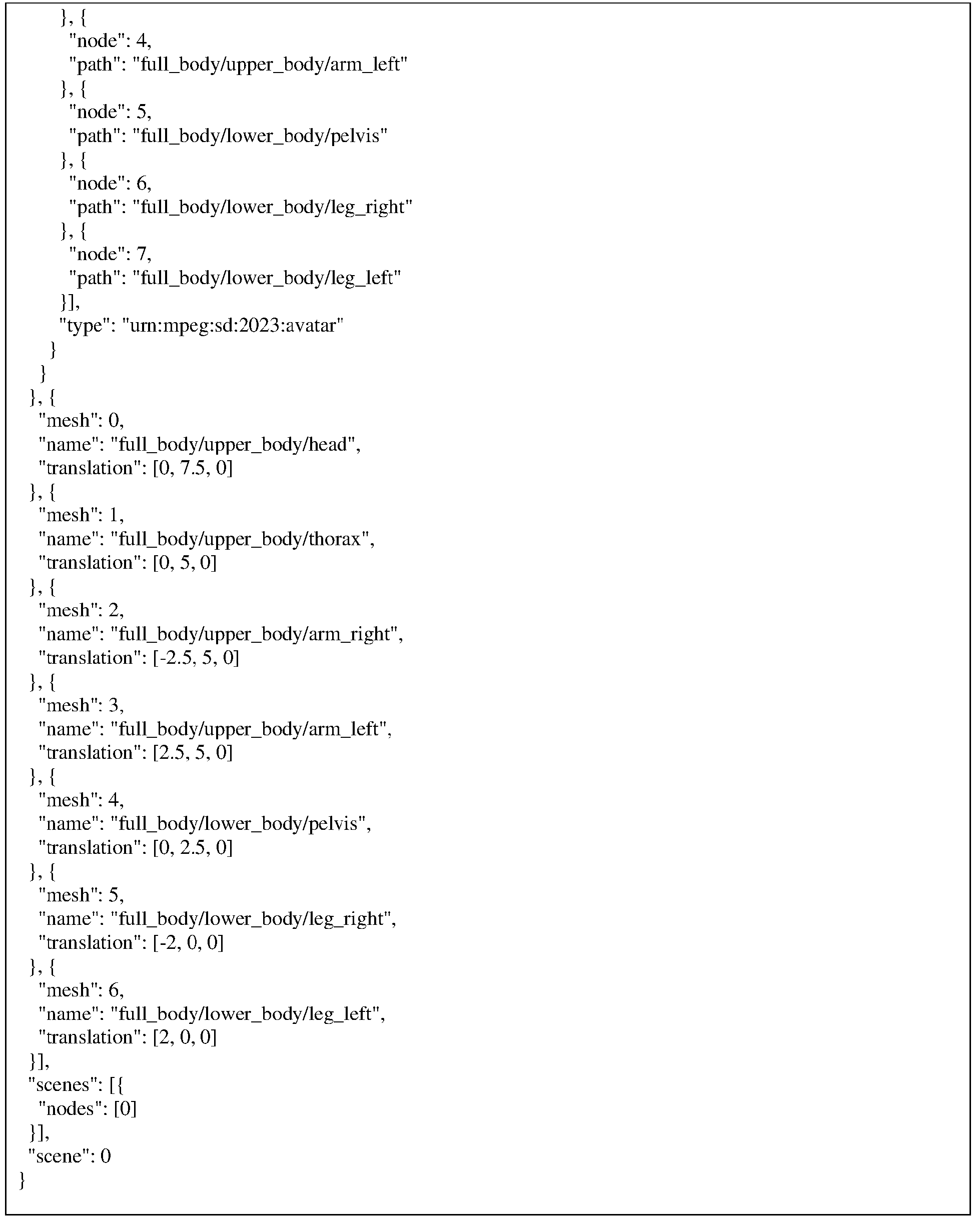

The Dynamic Avatar API implementation maps the content of this glTF file into AJIF properties: other mapping may be possible, here is one. Since it has a single node with a MPEG_avatar_node extension, the API implementation considers that there is a single AJIF LOD in this avatar representation. The implementation also considers this node with a MPEG_avatar_node extension as the AJIF mesh of the AJIF LOD. This node has seven children, each one having a different glTF Mesh, each one being considered as an AJIF geometry. The API client may walk through this structure (without knowing that this is a glTF in fact), and print the number of vertices of each geometry.

### 3 MaAssetFunctions structure

**Table 8 - Fields of MaAssetFunctions structure type.**

| **Name** | **Type** | **Description** |
|---|---|---|
| type | MaStructureType | Definite the type of this structure |
| maDataDelete | PFN_maDataDelete | Pointer to the maDataDelete API function |
| maDataHasName | PFN_maDataHasName | Pointer to the maDataHasName API function |
| maDataGetName | PFN_maDataGetName | Pointer to the maDataGetName API function |
| maDataGetType | PFN_maDataGetType | Pointer to the maDataGetType API function |
| maDataHasDType | PFN_maDataHasDType | Pointer to the maDataHasDType API function |
| maDataGetDType | PFN_maDataGetDType | Pointer to the maDataGetDType API function |
| maDataHasIType | PFN_maDataHasIType | Pointer to the maDataHasIType API function |
| maDataGetIType | PFN_maDataGetIType | Pointer to the maDataGetIType API function |
| maDataHasCType | PFN_maDataHasCType | Pointer to the maDataHasCType API function |
| maDataGetCType | PFN_maDataGetCType | Pointer to the maDataGetCType API function |
| maDataHasDims | PFN_maDataHasDims | Pointer to the maDataHasDims API function |
| maDataGetDims | PFN_maDataGetDims | Pointer to the maDataGetDims API function |
| maDataHasCount | PFN_maDataHasCount | Pointer to the maDataHasCount API function |
| maDataGetCount | PFN_maDataGetCount | Pointer to the maDataGetCount API function |
| maDataHasMimeType | PFN_maDataHasMimeType | Pointer to the maDataHasMimeType API function |
| maDataGetMimeType | PFN_maDataGetMimeType | Pointer to the maDataGetMimeType API function |
| maDataGetContent | PFN_maDataGetContent | Pointer to the maDataGetContent API function |
| maTextureDisplacementDel ete | PFN_maTextureDisplacementD elete | Pointer to the maTextureDisplacementDel ete API function |
| maTextureDisplacementHas Name | PFN_maTextureDisplacementH asName | Pointer to the maTextureDisplacementHas Name API function |
| maTextureDisplacementGet Name | PFN_maTextureDisplacementG etName | Pointer to the maTextureDisplacementGet Name API function |
| maTextureDisplacementGet Displacements | PFN_maTextureDisplacementG etDisplacements | Pointer to the maTextureDisplacementGet Displacements API function |
| maTextureDisplacementHas Mapping | PFN_maTextureDisplacementH asMapping | Pointer to the maTextureDisplacementHas Mapping API function |
| maTextureDisplacementGet Mapping | PFN_maTextureDisplacementG etMapping | Pointer to the maTextureDisplacementGet Mapping API function |
| maTextureDelete | PFN_maTextureDelete | Pointer to the maTextureDelete API function |
| maTextureHasName | PFN_maTextureHasName | Pointer to the maTextureHasName API function |
| maTextureGetName | PFN_maTextureGetName | Pointer to the maTextureGetName API function |
| maTextureGetType | PFN_maTextureGetType | Pointer to the maTextureGetType API function |
| maTextureHasUvs | PFN_maTextureHasUvs | Pointer to the maTextureHasUvs API function |
| maTextureGetUvs | PFN_maTextureGetUvs | Pointer to the maTextureGetUvs API function |
| maTextureHasImage | PFN_maTextureHasImage | Pointer to the maTextureHasImage API function |
| maTextureGetImage | PFN_maTextureGetImage | Pointer to the maTextureGetImage API function |
| maTextureHasBasis | PFN_maTextureHasBasis | Pointer to the maTextureHasBasis API function |
| maTextureGetBasisCount | PFN_maTextureGetBasisCount | Pointer to the maTextureGetBasisCount API function |
| maTextureGetBasis | PFN_maTextureGetBasis | Pointer to the maTextureGetBasis API function |
| maBlendshapeDelete | PFN_maBlendshapeDelete | Pointer to the maBlendshapeDelete API function |
| maBlendshapeHasName | PFN_maBlendshapeHasName | Pointer to the maBlendshapeHasName API function |
| maBlendshapeGetName | PFN_maBlendshapeGetName | Pointer to the maBlendshapeGetName API function |
| maBlendshapeGetDisplace ments | PFN_maBlendshapeGetDisplac ements | Pointer to the maBlendshapeGetDisplace ments API function |
| maBlendshapeHasMapping | PFN_maBlendshapeHasMappin g | Pointer to the maBlendshapeHasMapping API function |
| maBlendshapeGetMapping | PFN_maBlendshapeGetMappin g | Pointer to the maBlendshapeGetMapping API function |
| maBlendshapeHasSide | PFN_maBlendshapeHasSide | Pointer to the maBlendshapeHasSide API function |
| maBlendshapeGetSide | PFN_maBlendshapeGetSide | Pointer to the maBlendshapeGetSide API function |
| maFacesDelete | PFN_maFacesDelete | Pointer to the maFacesDelete API function |
| maFacesHas Vertices | PFN_maFacesHas Vertices | Pointer to the maFacesHasVertices API function |
| maFacesGetVertices | PFN_maFacesGetVertices | Pointer to the maFacesGetVertices API function |
| maFacesHasNormals | PFN_maFacesHasNormals | Pointer to the maFacesHasNormals API function |
| maFacesGetNormals | PFN_maFacesGetNormals | Pointer to the maFacesGetNormals API function |
| maFacesHasUvs | PFN_maFacesHasUvs | Pointer to the maFacesHasUvs API function |
| maFacesGetUvCount | PFN_maFacesGetUvCount | Pointer to the maFacesGetUvCount API function |
| maFacesGetUv | PFN_maFacesGetUv | Pointer to the maFacesGetUv API function |
| maGeometryDelete | PFN_maGeometryDelete | Pointer to the maGeometryDelete API function |
| maGeometryHasName | PFN_maGeometryHasName | Pointer to the maGeometryHasName API function |
| maGeometryGetName | PFN_maGeometryGetName | Pointer to the maGeometryGetName API function |
| maGeometryGetVertices | PFN_maGeometryGetVertices | Pointer to the maGeometryGetVertices API function |
| maGeometryHasNormals | PFN_maGeometryHasNormals | Pointer to the maGeometryHasNormals API function |
| maGeometryGetNormals | PFN_maGeometryGetNormals | Pointer to the maGeometryGetNormals API function |
| maGeometryHasUvs | PFN_maGeometryHasUvs | Pointer to the maGeometryHasUvs API function |
| maGeometryGetUvCount | PFN_maGeometryGetUvCount | Pointer to the maGeometryGetUvCount API function |
| maGeometryGetUv | PFN_maGeometryGetUv | Pointer to the maGeometryGetUv API function |
| maGeometryHasFaces | PFN_maGeometryHasFaces | Pointer to the maGeometryHasFaces API function |
| maGeometryGetFaces | PFN_maGeometryGetFaces | Pointer to the maGeometryGetFaces API function |
| maGeometryHasBlendshape s | PFN_maGeometryHasBlendsha pes | Pointer to the maGeometryHasBlendshape s API function |
| maGeometryGetBlendshape Count | PFN_maGeometryGetBlendsha peCount | Pointer to the maGeometryGetBlendshape Count API function |
| maGeometryGetBlendshape | PFN_maGeometryGetBlendsha pe | Pointer to the maGeometryGetBlendshape API function |
| maGeometryHasTextures | PFN_maGeometryHasTextures | Pointer to the maGeometryHasTextures API function |
| maGeometryGetTextureCou nt | PFN_maGeometryGetTextureC ount | Pointer to the maGeometryGetTextureCou nt API function |
| maGeometryGetTexture | PFN_maGeometryGetTexture | Pointer to the maGeometryGetTexture API function |
| maNodeDelete | PFN_maNodeDelete | Pointer to the maNodeDelete API function |
| maNodeHasName | PFN_maNodeHasName | Pointer to the maNodeHasName API function |
| maNodeGetName | PFN_maNodeGetName | Pointer to the maNodeGetName API function |
| maNodeHasGeometry | PFN_maNodeHasGeometry | Pointer to the maNodeHasGeometry API function |
| maNodeGetGeometry | PFN_maNodeGetGeometry | Pointer to the maNodeGetGeometry API function |
| maNodeHasChildren | PFN_maNodeHasChildren | Pointer to the maNodeHasChildren API function |
| maNodeGetChildCount | PFN_maNodeGetChildCount | Pointer to the maNodeGetChildCount API function |
| maNodeGetChild | PFN_maNodeGetChild | Pointer to the maNodeGetChild API function |
| maNodeHasScale | PFN_maNodeHasScale | Pointer to the maNodeHasScale API function |
| maNodeGetScale | PFN_maNodeGetScale | Pointer to the maNodeGetScale API function |
| maNodeHasRotation | PFN_maNodeHasRotation | Pointer to the maNodeHasRotation API function |
| maNodeGetRotation | PFN_maNodeGetRotation | Pointer to the maNodeGetRotation API function |
| maNodeHasTranslation | PFN_maNodeHasTranslation | Pointer to the maNodeHasTranslation API function |
| maNodeGetTranslation | PFN_maNodeGetTranslation | Pointer to the maNodeGetTranslation API function |
| maNodeHasMatrix | PFN_maNodeHasMatrix | Pointer to the maNodeHasMatrix API function |
| maNodeGetMatrix | PFN_maNodeGetMatrix | Pointer to the maNodeGetMatrix API function |
| maSkinningDelete | PFN_maSkinningDelete | Pointer to the maSkinningDelete API function |
| maSkinningHasName | PFN_maSkinningHasN ame | Pointer to the maSkinningHasName API function |
| maSkinningGetName | PFN_maSkinningGetN ame | Pointer to the maSkinningGetName API function |
| maSkinningHasMapping | PFN_maSkinningHasMapping | Pointer to the maSkinningHasMapping API function |
| maSkinningGetMapping | PFN_maSkinningGetMapping | Pointer to the maSkinningGetMapping API function |
| maSkinningHasMesh | PFN_maSkinningHasMesh | Pointer to the maSkinningHasMesh API function |
| maSkinningGetMesh | PFN_maSkinningGetMesh | Pointer to the maSkinningGetMesh API function |
| maSkinningHasWeights | PFN_maSkinningHasWeights | Pointer to the maSkinningHasWeights API function |
| maSkinningGetWeights | PFN_maSkinningGetWeights | Pointer to the maSkinningGetWeights API function |
| maSkeletonDelete | PFN_maSkeletonDelete | Pointer to the maSkeletonDelete API function |
| maSkeletonHasName | PFN_maSkeletonHasName | Pointer to the maSkeletonHasName API function |
| maSkeletonGetName | PFN_maSkeletonGetName | Pointer to the maSkeletonGetName API function |
| maSkeletonHasMapping | PFN_maSkeletonHasMapping | Pointer to the maSkeletonHasMapping API function |
| maSkeletonGetMapping | PFN_maSkeletonGetMapping | Pointer to the maSkeletonGetMapping API function |
| maSkeletonHasRoot | PFN_maSkeletonHasRoot | Pointer to the maSkeletonHasRoot API function |
| maSkeletonGetRoot | PFN_maSkeletonGetRoot | Pointer to the maSkeletonGetRoot API function |
| maSkeletonHasJoints | PFN_maSkeletonHas Joints | Pointer to the maSkeletonHasJoints API function |
| maSkeletonGetJointCount | PFN_maSkeletonGetJointCount | Pointer to the maSkeletonGetJointCount API function |
| maSkeletonGetJoint | PFN_maSkeletonGetJoint | Pointer to the maSkeletonGetJoint API function |
| maSkeletonHasInverseBind Matrices | PFN_maSkeletonHasInverseBin dMatrices | Pointer to the maSkeletonHasInverseBind Matrices API function |
| maSkeletonGetInverseBind Matrices | PFN_maSkeletonGetInverseBin dMatrices | Pointer to the maSkeletonGetInverseBind Matrices API function |
| maSkeletonHasSkinnings | PFN_maSkeletonHasSkinnings | Pointer to the maSkeletonHasSkinnings API function |
| maSkeletonGetSkinningCou nt | PFN_maSkeletonGetSkinningC ount | Pointer to the maSkeletonGetSkinningCou nt API function |
| maSkeletonGetSkinning | PFN_maSkeletonGetSkinning | Pointer to the maSkeletonGetSkinning API function |
| maChannelDelete | PFN_maChannelDelete | Pointer to the maChannelDelete API function |
| maChannelHasNode | PFN_maChannelHasNode | Pointer to the maChannelHasNode API function |
| maChannelGetNode | PFN_maChannelGetNode | Pointer to the maChannelGetNode API function |
| maChannelHasPath | PFN_maChannelHasPath | Pointer to the maChannelHasPath API function |
| maChannelGetPath | PFN_maChannelGetPath | Pointer to the maChannelGetPath API function |
| maChannelHasController | PFN_maChannelHasController | Pointer to the maChannelHasController API function |
| maChannelGetController | PFN_maChannelGetController | Pointer to the maChannelGetController API function |
| maChannelHasInterpolation | PFN_maChannelHasInterpolatio n | Pointer to the maChannelHasInterpolation API function |
| maChannelGetInterpolation | PFN_maChannelGetInterpolatio n | Pointer to the maChannelGetInterpolation API function |
| maChannelGetOutput | PFN_maChannelGetOutput | Pointer to the maChannelGetOutput API function |
| maControllerDelete | PFN_maControllerDelete | Pointer to the maControllerDelete API function |
| maControllerHasName | PFN_maControllerHasName | Pointer to the maControllerHasName API function |
| maControllerGetName | PFN_maControllerGetName | Pointer to the maControllerGetName API function |
| maControllerHasMapping | PFN_maControllerHasMapping | Pointer to the maControllerHasMapping API function |
| maControllerGetMapping | PFN_maControllerGetMapping | Pointer to the maControllerGetMapping API function |
| maControllerHasInput | PFN_maControllerHasInput | Pointer to the maControllerHasInput API function |
| maControllerGetInput | PFN_maControllerGetInput | Pointer to the maControllerGetInput API function |
| maControllerHasChannels | PFN_maControllerHasChannels | Pointer to the maControllerHasChannels API function |
| maControllerGetChannelCo unt | PFN_maControllerGetChannelC ount | Pointer to the maControllerGetChannelCo unt API function |
| maControllerGetChannel | PFN_maControllerGetChannel | Pointer to the maControllerGetChannel API function |
| maLodDelete | PFN_maLodDelete | Pointer to the maLodDelete API function |
| maLodHasName | PFN_maLodHasName | Pointer to the maLodHasName API function |
| maLodGetName | PFN_maLodGetName | Pointer to the maLodGetName API function |
| maLodHasMesh | PFN_maLodHasMesh | Pointer to the maLodHasMesh API function |
| maLodGetMesh | PFN_maLodGetMesh | Pointer to the maLodGetMesh API function |
| maLodHasSkeletons | PFN_maLodHasSkeletons | Pointer to the maLodHasSkeletons API function |
| maLodGetSkeletonCount | PFN_maLodGetSkeletonCount | Pointer to the maLodGetSkeletonCount API function |
| maLodGetSkeleton | PFN_maLodGetSkeleton | Pointer to the maLodGetSkeleton API function |
| maLodHasControllers | PFN_maLodHasControllers | Pointer to the maLodHasControllers API function |
| maLodGetControllerCount | PFN_maLodGetControllerCoun t | Pointer to the maLodGetControllerCount API function |
| maLodGetController | PFN_maLodGetController | Pointer to the maLodGetController API function |
| maMetadataDelete | PFN_maMetadataDelete | Pointer to the maMetadataDelete API function |
| maMetadataHasName | PFN_maMetadataHasName | Pointer to the maMetadataHasName API function |
| maMetadataGetName | PFN_maMetadataGetN ame | Pointer to the maMetadataGetName API function |
| maMetadataHasId | PFN_maMetadataHasId | Pointer to the maMetadataHasId API function |
| maMetadataGetId | PFN_maMetadataGetId | Pointer to the maMetadataGetId API function |
| maMetadataHasAge | PFN_maMetadataHasAge | Pointer to the maMetadataHasAge API function |
| maMetadataGetAge | PFN_maMetadataGetAge | Pointer to the maMetadataGetAge API function |
| maMetadataHasGender | PFN_maMetadataHas Gender | Pointer to the maMetadataHasGender API function |
| maMetadataGetGender | PFN_maMetadataGetGender | Pointer to the maMetadataGetGender API function |
| maAssetDelete | PFN_maAs setDelete | Pointer to the maAssetDelete API function |
| maAssetHasCopyright | PFN_maAs setHasCopyright | Pointer to the maAssetHasCopyright API function |
| maAssetGetCopyright | PFN_maAs setGetCopyright | Pointer to the maAssetGetCopyright API function |
| maAssetHasGenerator | PFN_maAs setHas Generator | Pointer to the maAssetHasGenerator API function |
| maAssetGetGenerator | PFN_maAs setGetGenerator | Pointer to the maAssetGetGenerator API function |
| maAssetGetVersion | PFN_maAssetGetVersion | Pointer to the maAssetGetVersion API function |
| maAvatarDelete | PFN_maAvatarDelete | Pointer to the maAvatarDelete API function |
| maAvatarGetAsset | PFN_maA vatarGetAsset | Pointer to the maAvatarGetAsset API function |
| maAvatarGetMetadata | PFN_maAvatarGetMetadata | Pointer to the maAvatarGetMetadata API function |
| maAvatarGetLodCount | PFN_maAvatarGetLodCount | Pointer to the maAvatarGetLodCount API function |
| maAvatarGetLod | PFN_maAvatarGetLod | Pointer to the maAvatarGetLod API function |

### 4 API functions

### 5 Instance functions

### 6 maInstanceDelete()

### 7 Name

malnstanceDelete - Deletes an Instance accessor.

### 8 C Specification

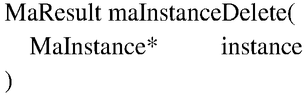

### 9 Output parameters

- instance is the Instance accessor to delete.

### 10 Description

Deletes an accessor to a Instance.

### 11 Return codes

- MA_SUCESS
- MA_ERROR_VALIDATION_FAILURE
- MA_ERROR_RUNTIME_FAILURE

### 12 maCreateInstance()

### 13 Name

maCreateInstance - Creates a new instance of Avatar API implementation.

### 14 C Specification

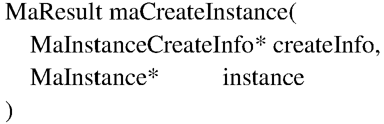

### 15 Input parameters

- createInfo is a structure with options for creating the new instance.

### 16 Output parameters

- instance is an accessor to an Instance.

### 17 Description

Creates a new instance of Avatar API implementation.

The "version" field of createInfo defines the API version supported by the client. The implementation must provide a MaInstance compatible with this version or return MA_ERROR_API_VERSION_UNSUPPORTED.

### 18 Return codes

- MA_SUCCESS
- MA_ERROR_VALIDATION_FAILURE
- MA_ERROR_RUNTIME_FAILURE
- MA_ERROR_API_VERSION_UNSUPPORTED

### 19 maInstanceLoadAvatar()

### 20 Name

maInstanceLoadAvatar - Loads a file containing an avatar representation.

### 21 C Specification

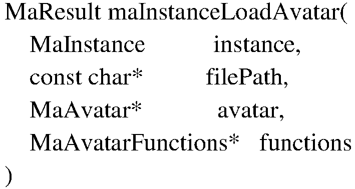

### 22 Input parameters

- instance is an accessor to an Instance.
- filePath is the path of a file container an avatar representation.

### 23 Output parameters

- avatar is an accessor to an Avatar.
- functions is a MaAvatarFunctions with API functions to access avatar data. Unsupported functions are NULL.

### 24 Description

Loads a file containing an avatar representation.

The implementation may return an error if the file does not exist or its format is not supported.

### 25 Return codes

- MA_SUCCESS
- MA_MORE_THAN_ONE_AVATAR
- MA_ERROR_VALIDATION_FAILURE
- MA_ERROR_RUNTIME_FAILURE
- MA_ERROR_UNSUPPORTED_FORMAT
- MA_ERROR_FILE_NOT_FOUND

### 26 Avatar functions

### 27 maAvatarDelete()

### 28 Name

maAvatarDelete - Deletes an Avatar accessor.

### 29 C Specification

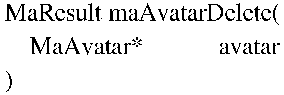

### 30 Output parameters

- avatar is the Avatar accessor to delete.

### 31 Description

Deletes an accessor to a Avatar.

### 32 Return codes

- MA_SUCESS
- MA_ERROR_VALIDATION_FAILURE
- MA_ERROR_RUNTIME_FAILURE

### 33 maAvatarGetAsset()

### 34 Name

maAvatarGetAsset - Returns an accessor to the asset of a Avatar.

### 35 C Specification

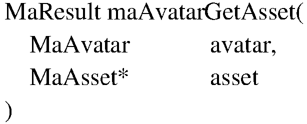

### 36 Input parameters

- avatar is the Avatar accessor where a Asset property is retrieved.

### 37 Output parameters

- asset is an Asset accessor of the Asset in the Avatar referenced by avatar.

### 38 Description

Returns an accessor to the asset of a Avatar.

### 39 Return codes

- MA_SUCESS
- MA_ERROR_VALIDATION_FAILURE
- MA_ERROR_RUNTIME_FAILURE

### 40 maAvatarGetMetadata()

### 41 Name

maAvatarGetMetadata - Returns an accessor to the metadata of a Avatar.

### 42 C Specification

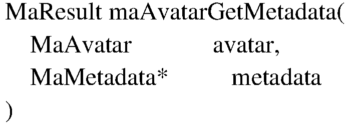

### 43 Input parameters

- avatar is the Avatar accessor where a Metadata property is retrieved.

### 44 Output parameters

- metadata is an Metadata accessor of the Metadata in the Avatar referenced by avatar.

### 45 Description

Returns an accessor to the metadata of a Avatar.

### 46 Return codes

- MA_SUCESS
- MA_ERROR_VALIDATION_FAILURE
- MA_ERROR_RUNTIME_FAILURE

### 47 maAvatarGetLodCount()

### 48 Name

maAvatarGetLodCount - Returns the number of Lod in a Avatar.

### 49 C Specification

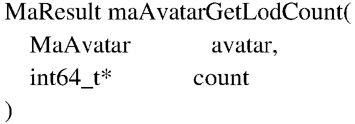

### 50 Input parameters

- avatar is a Avatar accessor which references a Avatar where the number of Lod is counted.

### 51 Output parameters

- count is the number of Lod in the Avatar referenced by avatar.

### 52 Description

Returns the number of Lod in a Avatar.

### 53 Return codes

- MA_SUCESS
- MA_ERROR_VALIDATION_FAILURE
- MA_ERROR_RUNTIME_FAILURE

### 54 maAvatarGetLod()

### 55 Name

maAvatarGetLod - Returns a Lod in a Avatar.

### 56 C Specification

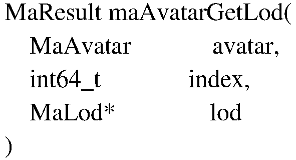

### 57 Input parameters

- avatar is the Avatar accessor which references a Avatar where a list of Lod is present.
- index is the index of a Lod in the Avatar referenced by Avatar.

### 58 Output parameters

- lod is the Lod of the index in the Avatar referenced by Avatar.

### 59 Description

Returns a Lod in a Avatar.

### 60 Return codes

- MA_SUCESS
- MA_ERROR_VALIDATION_FAILURE
- MA_ERROR_RUNTIME_FAILURE

### 61 Asset functions

### 62 maAssetDelete()

### 63 Name

maAssetDelete - Deletes an Asset accessor.

### 64 C Specification

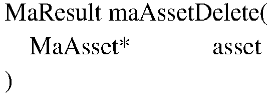

### 65 Output parameters

- asset is the Asset accessor to delete.

### 66 Description

Deletes an accessor to a Asset.

### 67 Return codes

- MA_SUCESS
- MA_ERROR_VALIDATION_FAILURE
- MA_ERROR_RUNTIME_FAILURE

### 68 maAssetHasCopyright()

### 69 Name

maAssetHasCopyright - Returns MA_SUCCESS if a copyright is present in a Asset, MA_UNAVAILABLE otherwise.

### 70 C Specification

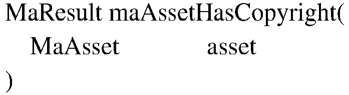

### 71 Input parameters

- asset is the Asset accessor where a copyright can be present.

### 72 Description

Returns MA_SUCCESS if a copyright is present in a Asset, MA_UNAVAILABLE otherwise.

### 73 Return codes

- MA_UNAVAILABLE
- MA_ERROR_VALIDATION_FAILURE
- MA_ERROR_RUNTIME_FAILURE

### 74 maAssetGetCopyright()

### 75 Name

maAssetGetCopyright - Returns the copyright of a Asset.

### 76 C Specification

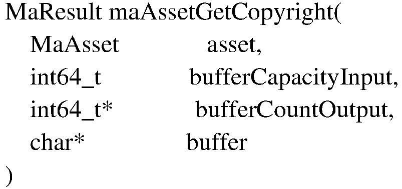

### 77 Input parameters

- asset is the Asset accessor where a copyright is retrieved.
- bufferCapacityInput is the capacity of the buffer output argument, or 0 to indicate a request to retrieve the required capacity.

### 78 Output parameters

- bufferCountOutput is the count of characters written, or the required capacity in the case that bufferCapacityInput is insufficient.
- buffer is a buffer filled with characters of the copyright but is not required if bufferCapacityInput is 0.

### 79 Description

This function follows the two-call idiom for retrieving the copyright of a Asset referenced by the asset input argument.

Unless the length of the copyright is already known, a first call is required where bufferCapacityInput input argument equals 0. In this case, there is no buffer output argument, and bufferCountOutput output argument contains the length of the copyright.

Once the length of the copyright is known, a call is required where bufferCapacityInput is the length of the buffer output argument and must be equal or higher than the length of the copyright. In this case the buffer output argument is filled with the characters of the copyright, and bufferCountOutput output argument contains the number of characters written.

### 80 Return codes

- MA_SUCCESS
- MA_ERROR_SIZE_INSUFFICIENT
- MA_ERROR_VALIDATION_FAILURE
- MA_ERROR_RUNTIME_FAILURE

### 81 maAssetHasGenerator()

### 82 Name

maAssetHasGenerator - Returns MA_SUCCESS if a generator is present in a Asset, MA_UNAVAILABLE otherwise.

### 83 C Specification

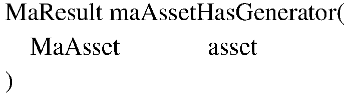

### 84 Input parameters

- asset is the Asset accessor where a generator can be present.

### 85 Description

Returns MA_SUCCESS if a generator is present in a Asset, MA_UNAVAILABLE otherwise.

### 86 Return codes

- MA_UNAVAILABLE
- MA_ERROR_VALIDATION_FAILURE
- MA_ERROR_RUNTIME_FAILURE

### 87 maAssetGetGenerator()

### 88 Name

maAssetGetGenerator - Returns the generator of a Asset.

### 89 C Specification

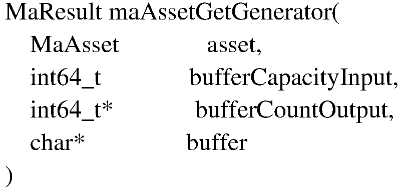

### 90 Input parameters

- asset is the Asset accessor where a generator is retrieved.
- bufferCapacityInput is the capacity of the buffer output argument, or 0 to indicate a request to retrieve the required capacity.

### 91 Output parameters

- bufferCountOutput is the count of characters written, or the required capacity in the case that bufferCapacityInput is insufficient.
- buffer is a buffer filled with characters of the generator but is not required if bufferCapacityInput is 0.

### 92 Description

This function follows the two-call idiom for retrieving the generator of a Asset referenced by the asset input argument.

Unless the length of the generator is already known, a first call is required where bufferCapacityInput input argument equals 0. In this case, there is no buffer output argument, and bufferCountOutput output argument contains the length of the generator.

Once the length of the generator is known, a call is required where bufferCapacityInput is the length of the buffer output argument and must be equal or higher than the length of the generator. In this case the buffer output argument is filled with the characters of the generator, and bufferCountOutput output argument contains the number of characters written.

### 93 Return codes

- MA_SUCCESS
- MA_ERROR_SIZE_INSUFFICIENT
- MA_ERROR_VALIDATION_FAILURE
- MA_ERROR_RUNTIME_FAILURE

### 94 maAssetGetVersion()

### 95 Name

maAssetGetVersion - Returns the version of a Asset.

### 96 C Specification

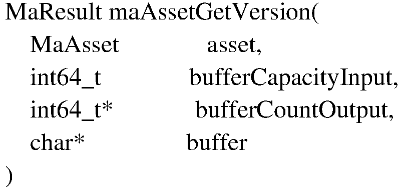

### 97 Input parameters

- asset is the Asset accessor where a version is retrieved.
- bufferCapacityInput is the capacity of the buffer output argument, or 0 to indicate a request to retrieve the required capacity.

### 98 Output parameters

- bufferCountOutput is the count of characters written, or the required capacity in the case that bufferCapacityInput is insufficient.
- buffer is a buffer filled with characters of the version but is not required if bufferCapacityInput is 0.

### 99 Description

This function follows the two-call idiom for retrieving the version of a Asset referenced by the asset input argument.

Unless the length of the version is already known, a first call is required where bufferCapacityInput input argument equals 0. In this case, there is no buffer output argument, and bufferCountOutput output argument contains the length of the version.

Once the length of the version is known, a call is required where bufferCapacityInput is the length of the buffer output argument and must be equal or higher than the length of the version. In this case the buffer output argument is filled with the characters of the version, and bufferCountOutput output argument contains the number of characters written.

### 100 Return codes

- MA_SUCCESS
- MA_ERROR_SIZE_INSUFFICIENT
- MA_ERROR_VALIDATION_FAILURE
- MA_ERROR_RUNTIME_FAILURE

### 101 Metadata functions

### 102 maMetadataDelete()

### 103 Name

maMetadataDelete - Deletes an Metadata accessor.

### 104 C Specification

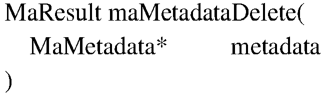

### 105 Output parameters

- metadata is the Metadata accessor to delete.

### 106 Description

Deletes an accessor to a Metadata.

### 107 Return codes

- MA_SUCESS
- MA_ERROR_VALIDATION_FAILURE
- MA_ERROR_RUNTIME_FAILURE

### 108 maMetadataHasName()

### 109 Name

maMetadataHasName - Returns MA_SUCCESS if a name is present in a Metadata, MA_UNAVAILABLE otherwise.

### 110 C Specification

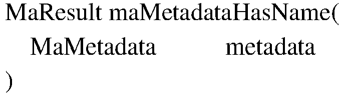

### 111 Input parameters

- metadata is the Metadata accessor where a name can be present.

### 112 Description

Returns MA_SUCCESS if a name is present in a Metadata, MA_UNAVAILABLE otherwise.

### 113 Return codes

- MA_UNAVAILABLE
- MA_ERROR_VALIDATION_FAILURE
- MA_ERROR_RUNTIME_FAILURE

### 114 maMetadataGetName()

### 115 Name

maMetadataGetName - Returns the name of a Metadata.

### 116 C Specification

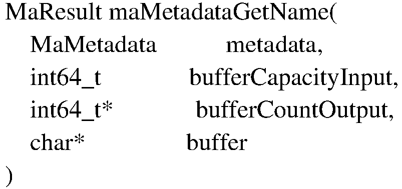

### 117 Input parameters

- metadata is the Metadata accessor where a name is retrieved.
- bufferCapacityInput is the capacity of the buffer output argument, or 0 to indicate a request to retrieve the required capacity.

### 118 Output parameters

- bufferCountOutput is the count of characters written, or the required capacity in the case that bufferCapacityInput is insufficient.
- buffer is a buffer filled with characters of the name but is not required if bufferCapacityInput is 0.

### 119 Description

This function follows the two-call idiom for retrieving the name of a Metadata referenced by the metadata input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 120 Return codes

- MA_SUCCESS
- MA_ERROR_SIZE_INSUFFICIENT
- MA_ERROR_VALIDATION_FAILURE
- MA_ERROR_RUNTIME_FAILURE

### 121 maMetadataHasIdQ

### 122 Name

maMetadataHasId - Returns MA_SUCCESS if a id is present in a Metadata, MA_UNAVAILABLE otherwise.

### 123 C Specification

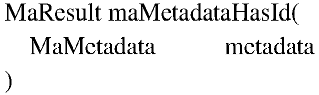

### 124 Input parameters

- metadata is the Metadata accessor where a id can be present.

### 125 Description

Returns MA_SUCCESS if a id is present in a Metadata, MA_UNAVAILABLE otherwise.

### 126 Return codes

- MA_UNAVAILABLE
- MA_ERROR_VALIDATION_FAILURE
- MA_ERROR_RUNTIME_FAILURE

### 127 maMetadataGetId()

### 128 Name

maMetadataGetld - Returns the id of a Metadata.

### 129 C Specification

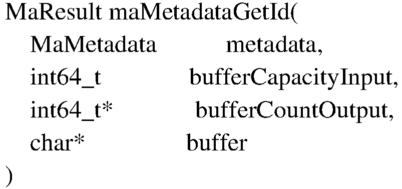

### 130 Input parameters

- metadata is the Metadata accessor where a id is retrieved.
- bufferCapacityInput is the capacity of the buffer output argument, or 0 to indicate a request to retrieve the required capacity.

### 131 Output parameters

- bufferCountOutput is the count of characters written, or the required capacity in the case that bufferCapacityInput is insufficient.
- buffer is a buffer filled with characters of the id but is not required if bufferCapacityInput is 0.

### 132 Description

This function follows the two-call idiom for retrieving the id of a Metadata referenced by the metadata input argument.

Unless the length of the id is already known, a first call is required where bufferCapacityInput input argument equals 0. In this case, there is no buffer output argument, and bufferCountOutput output argument contains the length of the id.

Once the length of the id is known, a call is required where bufferCapacityInput is the length of the buffer output argument and must be equal or higher than the length of the id. In this case the buffer output argument is filled with the characters of the id, and bufferCountOutput output argument contains the number of characters written.

### 133 Return codes

- MA_SUCCESS
- MA_ERROR_SIZE_INSUFFICIENT
- MA_ERROR_VALIDATION_FAILURE
- MA_ERROR_RUNTIME_FAILURE

### 134 maMetadataHasAge()

### 135 Name

maMetadataHasAge - Returns MA_SUCCESS if a Age is present in a Metadata, MA_UNAVAILABLE otherwise.

### 136 C Specification

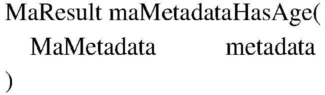

### 137 Input parameters

- metadata is the Metadata accessor where a Age property can be present.

### 138 Description

Returns MA_SUCCESS if a Age is present in a Metadata, MA_UNAVAILABLE otherwise.

### 139 Return codes

- MA_UNAVAILABLE
- MA_ERROR_VALIDATION_FAILURE
- MA_ERROR_RUNTIME_FAILURE

### 140 maMetadataGetAge()

### 141 Name

maMetadataGetAge - Returns the age of a Metadata.

### 142 C Specification

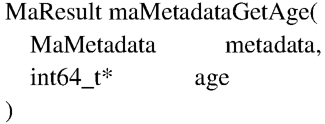

### 143 Input parameters

- metadata is the Metadata accessor where a Age property is retrieved.

### 144 Output parameters

- age is the value of the Age in the Metadata referenced by metadata.

### 145 Description

Returns the age of a Metadata.

### 146 Return codes

- MA_SUCESS
- MA_ERROR_VALIDATION_FAILURE
- MA_ERROR_RUNTIME_FAILURE

### 147 maMetadataHasGender()

### 148 Name

maMetadataHasGender - Returns MA_SUCCESS if a gender is present in a Metadata, MA_UNAVAILABLE otherwise.

### 149 C Specification

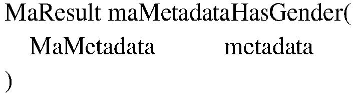

### 150 Input parameters

- metadata is the Metadata accessor where a gender can be present.

### 151 Description

Returns MA_SUCCESS if a gender is present in a Metadata, MA_UNAVAILABLE otherwise.

### 152 Return codes

- MA_UNAVAILABLE
- MA_ERROR_VALIDATION_FAILURE
- MA_ERROR_RUNTIME_FAILURE

### 153 maMetadataGetGender()

### 154 Name

maMetadataGetGender - Returns the gender of a Metadata.

### 155 C Specification

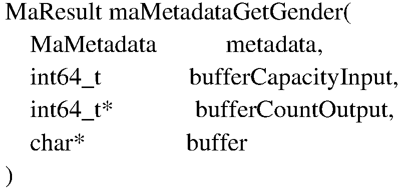

### 156 Input parameters

- metadata is the Metadata accessor where a gender is retrieved.
- bufferCapacityInput is the capacity of the buffer output argument, or 0 to indicate a request to retrieve the required capacity.

### 157 Output parameters

- bufferCountOutput is the count of characters written, or the required capacity in the case that bufferCapacityInput is insufficient.
- buffer is a buffer filled with characters of the gender but is not required if bufferCapacityInput is 0.

### 158 Description

This function follows the two-call idiom for retrieving the gender of a Metadata referenced by the metadata input argument.

Unless the length of the gender is already known, a first call is required where bufferCapacityInput input argument equals 0. In this case, there is no buffer output argument, and bufferCountOutput output argument contains the length of the gender.

Once the length of the gender is known, a call is required where bufferCapacityInput is the length of the buffer output argument and must be equal or higher than the length of the gender. In this case the buffer output argument is filled with the characters of the gender, and bufferCountOutput output argument contains the number of characters written.

### 159 Return codes

- MA_SUCCESS
- MA_ERROR_SIZE_INSUFFICIENT
- MA_ERROR_VALIDATION_FAILURE
- MA_ERROR_RUNTIME_FAILURE

### 160 Lod functions

### 161 maLodDelete()

### 162 Name

maLodDelete - Deletes an Lod accessor.

### 163 C Specification

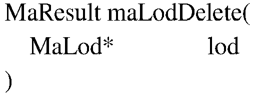

### 164 Output parameters

- lod is the Lod accessor to delete.

### 165 Description

Deletes an accessor to a Lod.

### 166 Return codes

- MA_SUCESS
- MA_ERROR_VALIDATION_FAILURE
- MA_ERROR_RUNTIME_FAILURE

### 167 maLodHasName()

### 168 Name

maLodHasName - Returns MA_SUCCESS if a name is present in a Lod, MA_UNAVAILABLE otherwise.

### 169 C Specification

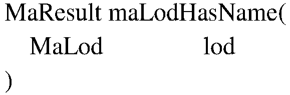

### 170 Input parameters

- lod is the Lod accessor where a name can be present.

### 171 Description

Returns MA_SUCCESS if a name is present in a Lod, MA_UNAVAILABLE otherwise.

### 172 Return codes

- MA_UNAVAILABLE
- MA_ERROR_VALIDATION_FAILURE
- MA_ERROR_RUNTIME_FAILURE

### 173 maLodGetName()

### 174 Name

maLodGetName - Returns the name of a Lod.

### 175 C Specification

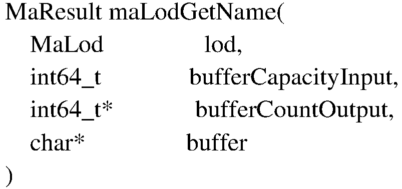

### 176 Input parameters

- lod is the Lod accessor where a name is retrieved.
- bufferCapacityInput is the capacity of the buffer output argument, or 0 to indicate a request to retrieve the required capacity.

### 177 Output parameters

- bufferCountOutput is the count of characters written, or the required capacity in the case that bufferCapacityInput is insufficient.
- buffer is a buffer filled with characters of the name but is not required if bufferCapacityInput is 0.

### 178 Description

This function follows the two-call idiom for retrieving the name of a Lod referenced by the lod input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 179 Return codes

- MA_SUCCESS
- MA_ERROR_SIZE_INSUFFICIENT
- MA_ERROR_VALIDATION_FAILURE
- MA_ERROR_RUNTIME_FAILURE

### 180 maLodHasMesh()

### 181 Name

maLodHasMesh - Returns MA_SUCCESS if a Mesh is present in a Lod, MA_UNAVAILABLE otherwise.

### 182 C Specification

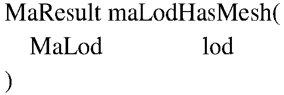

### 183 Input parameters

- lod is the Lod accessor where a Mesh property can be present.

### 184 Description

Returns MA_SUCCESS if a Mesh is present in a Lod, MA_UNAVAILABLE otherwise.

### 185 Return codes

- MA_UNAVAILABLE
- MA_ERROR_VALIDATION_FAILURE
- MA_ERROR_RUNTIME_FAILURE

### 186 maLodGetMesh()

### 187 Name

maLodGetMesh - Returns an accessor to the mesh of a Lod.

### 188 C Specification

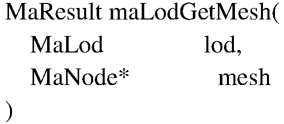

### 189 Input parameters

- lod is the Lod accessor where a Mesh property is retrieved.

### 190 Output parameters

- mesh is an Mesh accessor of the Mesh in the Lod referenced by lod.

### 191 Description

Returns an accessor to the mesh of a Lod.

### 192 Return codes

- MA_SUCESS
- MA_ERROR_VALIDATION_FAILURE
- MA_ERROR_RUNTIME_FAILURE

### 193 maLodHasSkeletons()

### 194 Name

maLodHasSkeletons - Returns MA_SUCCESS if a list of Skeleton is present in a Lod, MA_UNAVAILABLE otherwise.

### 195 C Specification

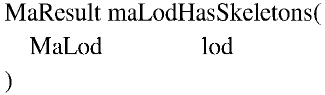

### 196 Input parameters

- lod is the Lod accessor which references a Lod where a list of Skeleton can be present.

### 197 Description

Returns MA_SUCCESS if a list of Skeleton is present in a Lod, MA_UNAVAILABLE otherwise.

### 198 Return codes

- MA_UNAVAILABLE
- MA_ERROR_VALIDATION_FAILURE
- MA_ERROR_RUNTIME_FAILURE

### 199 maLodGetSkeletonCountQ

### 200 Name

maLodGetSkeletonCount - Returns the number of Skeleton in a Lod.

### 201 C Specification

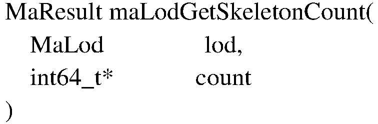

### 202 Input parameters

- lod is a Lod accessor which references a Lod where the number of Skeleton is counted.

### 203 Output parameters

- count is the number of Skeleton in the Lod referenced by lod.

### 204 Description

Returns the number of Skeleton in a Lod.

### 205 Return codes

- MA_SUCESS
- MA_ERROR_VALIDATION_FAILURE
- MA_ERROR_RUNTIME_FAILURE

### 206 maLodGetSkeleton()

### 207 Name

maLodGetSkeleton - Returns a Skeleton in a Lod.

### 208 C Specification

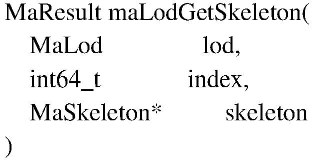

### 209 Input parameters

- lod is the Lod accessor which references a Lod where a list of Skeleton is present.
- index is the index of a Skeleton in the Lod referenced by Lod.

### 210 Output parameters

- skeleton is the Skeleton of the index in the Lod referenced by Lod.

### 211 Description

Returns a Skeleton in a Lod.

### 212 Return codes

- MA_SUCESS
- MA_ERROR_VALIDATION_FAILURE
- MA_ERROR_RUNTIME_FAILURE

### 213 maLodHasControllers()

### 214 Name

maLodHasControllers - Returns MA_SUCCESS if a list of Controller is present in a Lod, MA_UNAVAILABLE otherwise.

### 215 C Specification

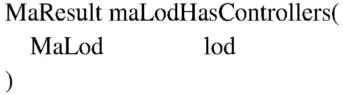

### 216 Input parameters

- lod is the Lod accessor which references a Lod where a list of Controller can be present.

### 217 Description

Returns MA_SUCCESS if a list of Controller is present in a Lod, MA_UNAVAILABLE otherwise.

### 218 Return codes

- MA_UNAVAILABLE
- MA_ERROR_VALIDATION_FAILURE
- MA_ERROR_RUNTIME_FAILURE

### 219 maLodGetControllerCountQ

### 220 Name

maLodGetControllerCount - Returns the number of Controller in a Lod.

### 221 C Specification

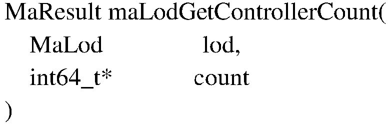

### 222 Input parameters

- lod is a Lod accessor which references a Lod where the number of Controller is counted.

### 223 Output parameters

- count is the number of Controller in the Lod referenced by lod.

### 224 Description

Returns the number of Controller in a Lod.

### 225 Return codes

- MA_SUCESS
- MA_ERROR_VALIDATION_FAILURE
- MA_ERROR_RUNTIME_FAILURE

### 226 maLodGetControllerQ

### 227 Name

maLodGetController - Returns a Controller in a Lod.

### 228 C Specification

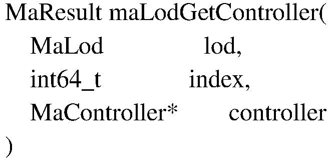

### 229 Input parameters

- lod is the Lod accessor which references a Lod where a list of Controller is present.
- index is the index of a Controller in the Lod referenced by Lod.

### 230 Output parameters

- controller is the Controller of the index in the Lod referenced by Lod.

### 231 Description

Returns a Controller in a Lod.

### 232 Return codes

- MA_SUCESS
- MA_ERROR_VALIDATION_FAILURE
- MA_ERROR_RUNTIME_FAILURE

### 233 Controller functions

### 234 maControllerDelete()

### 235 Name

maControllerDelete - Deletes an Controller accessor.

### 236 C Specification

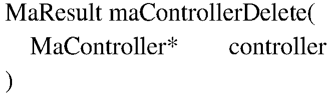

### 237 Output parameters

- controller is the Controller accessor to delete.

### 238 Description

Deletes an accessor to a Controller.

### 239 Return codes

- MA_SUCESS
- MA_ERROR_VALIDATION_FAILURE
- MA_ERROR_RUNTIME_FAILURE

### 240 maControllerHasNameQ

### 241 Name

maControllerHasName - Returns MA_SUCCESS if a name is present in a Controller, MA_UNAVAILABLE otherwise.

### 242 C Specification

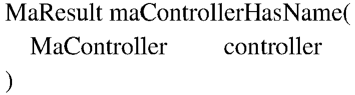

### 243 Input parameters

- controller is the Controller accessor where a name can be present.

### 244 Description

Returns MA_SUCCESS if a name is present in a Controller, MA_UNAVAILABLE otherwise.

### 245 Return codes

- MA_UNAVAILABLE
- MA_ERROR_VALIDATION_FAILURE
- MA_ERROR_RUNTIME_FAILURE

### 246 maControllerGetName()

### 247 Name

maControllerGetName - Returns the name of a Controller.

### 248 C Specification

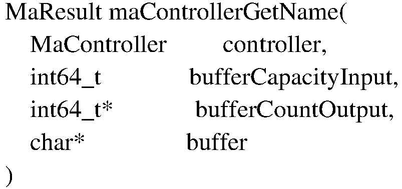

### 249 Input parameters

- controller is the Controller accessor where a name is retrieved.
- bufferCapacityInput is the capacity of the buffer output argument, or 0 to indicate a request to retrieve the required capacity.

### 250 Output parameters

- bufferCountOutput is the count of characters written, or the required capacity in the case that bufferCapacityInput is insufficient.
- buffer is a buffer filled with characters of the name but is not required if bufferCapacityInput is 0.

### 251 Description

This function follows the two-call idiom for retrieving the name of a Controller referenced by the controller input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 252 Return codes

- MA_SUCCESS
- MA_ERROR_SIZE_INSUFFICIENT
- MA_ERROR_VALIDATION_FAILURE
- MA_ERROR_RUNTIME_FAILURE

### 253 maControllerHasMappingQ

### 254 Name

maControllerHasMapping - Returns MA_SUCCESS if a mapping is present in a Controller, MA_UNAVAILABLE otherwise.

### 255 C Specification

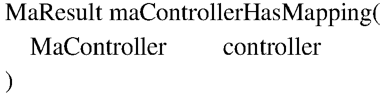

### 256 Input parameters

- controller is the Controller accessor where a mapping can be present.

### 257 Description

Returns MA_SUCCESS if a mapping is present in a Controller, MA_UNAVAILABLE otherwise.

### 258 Return codes

- MA_UNAVAILABLE
- MA_ERROR_VALIDATION_FAILURE
- MA_ERROR_RUNTIME_FAILURE

### 259 maControllerGetMappingQ

### 260 Name

maControllerGetMapping - Returns the mapping of a Controller.

### 261 C Specification

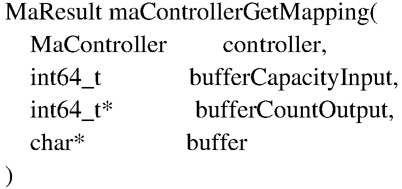

### 262 Input parameters

- controller is the Controller accessor where a mapping is retrieved.
- bufferCapacityInput is the capacity of the buffer output argument, or 0 to indicate a request to retrieve the required capacity.

### 263 Output parameters

- bufferCountOutput is the count of characters written, or the required capacity in the case that bufferCapacityInput is insufficient.
- buffer is a buffer filled with characters of the mapping but is not required if bufferCapacityInput is 0.

### 264 Description

This function follows the two-call idiom for retrieving the mapping of a Controller referenced by the controller input argument.

Unless the length of the mapping is already known, a first call is required where bufferCapacityInput input argument equals 0. In this case, there is no buffer output argument, and bufferCountOutput output argument contains the length of the mapping.

Once the length of the mapping is known, a call is required where bufferCapacityInput is the length of the buffer output argument and must be equal or higher than the length of the mapping. In this case the buffer output argument is filled with the characters of the mapping, and bufferCountOutput output argument contains the number of characters written.

### 265 Return codes

- MA_SUCCESS
- MA_ERROR_SIZE_INSUFFICIENT
- MA_ERROR_VALIDATION_FAILURE
- MA_ERROR_RUNTIME_FAILURE

### 266 maControllerHasInput()

### 267 Name

maControllerHasInput - Returns MA_SUCCESS if a Input data is present in a Controller, MA_UNAVAILABLE otherwise.

### 268 C Specification

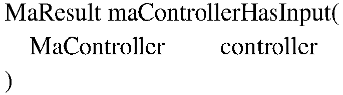

### 269 Input parameters

- controller is the Controller accessor where a Input data property can be present.

### 270 Description

Returns MA_SUCCESS if a Input data is present in a Controller, MA_UNAVAILABLE otherwise.

### 271 Return codes

- MA_UNAVAILABLE
- MA_ERROR_VALIDATION_FAILURE
- MA_ERROR_RUNTIME_FAILURE

### 272 maControllerGetInput()

### 273 Name

maControllerGetInput - Returns an accessor to the input of a Controller.

### 274 C Specification

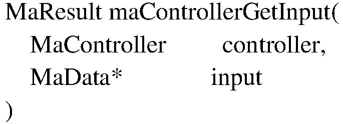

### 275 Input parameters

- controller is the Controller accessor where a Input data property is retrieved.

### 276 Output parameters

- input is an Input data accessor of the Input data in the Controller referenced by controller.

### 277 Description

Returns an accessor to the input of a Controller.

### 278 Return codes

- MA_SUCESS
- MA_ERROR_VALIDATION_FAILURE
- MA_ERROR_RUNTIME_FAILURE

### 279 maControllerHasChannels()

### 280 Name

maControllerHasChannels - Returns MA_SUCCESS if a list of Channel is present in a Controller, MA_UNAVAILABLE otherwise.

### 281 C Specification

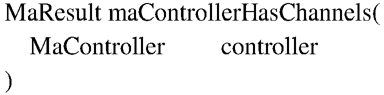

### 282 Input parameters

- controller is the Controller accessor which references a Controller where a list of Channel can be present.

### 283 Description

Returns MA_SUCCESS if a list of Channel is present in a Controller, MA_UNAVAILABLE otherwise.

### 284 Return codes

- MA_UNAVAILABLE
- MA_ERROR_VALIDATION_FAILURE
- MA_ERROR_RUNTIME_FAILURE

### 285 maControllerGetChannelCount()

### 286 Name

maControllerGetChannelCount - Returns the number of Channel in a Controller.

### 287 C Specification

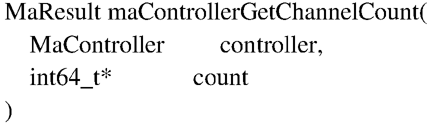

### 288 Input parameters

- controller is a Controller accessor which references a Controller where the number of Channel is counted.

### 289 Output parameters

- count is the number of Channel in the Controller referenced by controller.

### 290 Description

Returns the number of Channel in a Controller.

### 291 Return codes

- MA_SUCESS
- MA_ERROR_VALIDATION_FAILURE
- MA_ERROR_RUNTIME_FAILURE

### 292 maControllerGetChannel()

### 293 Name

maControllerGetChannel - Returns a Channel in a Controller.

### 294 C Specification

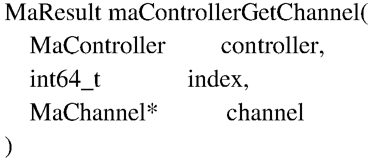

### 295 Input parameters

- controller is the Controller accessor which references a Controller where a list of Channel is present.
- index is the index of a Channel in the Controller referenced by Controller.

### 296 Output parameters

- channel is the Channel of the index in the Controller referenced by Controller.

### 297 Description

Returns a Channel in a Controller.

### 298 Return codes

- MA_SUCESS
- MA_ERROR_VALIDATION_FAILURE
- MA_ERROR_RUNTIME_FAILURE

### 299 Channel functions

### 300 maChannelDeleteQ

### 301 Name

maChannelDelete - Deletes an Channel accessor.

### 302 C Specification

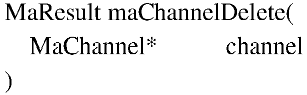

### 303 Output parameters

- channel is the Channel accessor to delete.

### 304 Description

Deletes an accessor to a Channel.

### 305 Return codes

- MA_SUCESS
- MA_ERROR_VALIDATION_FAILURE
- MA_ERROR_RUNTIME_FAILURE

### 306 maChannelHasNodeQ

### 307 Name

maChannelHasNode - Returns MA_SUCCESS if a Node is present in a Channel, MA_UNAVAILABLE otherwise.

### 308 C Specification

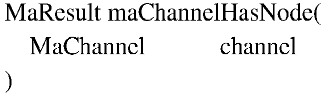

### 309 Input parameters

- channel is the Channel accessor where a Node property can be present.

### 310 Description

Returns MA_SUCCESS if a Node is present in a Channel, MA_UNAVAILABLE otherwise.

### 311 Return codes

- MA_UNAVAILABLE
- MA_ERROR_VALIDATION_FAILURE
- MA_ERROR_RUNTIME_FAILURE

### 312 maChannelGetNode()

### 313 Name

maChannelGetNode - Returns an accessor to the node of a Channel.

### 314 C Specification

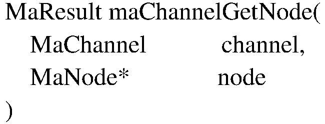

### 315 Input parameters

- channel is the Channel accessor where a Node property is retrieved.

### 316 Output parameters

- node is an Node accessor of the Node in the Channel referenced by channel.

### 317 Description

Returns an accessor to the node of a Channel.

### 318 Return codes

- MA_SUCESS
- MA_ERROR_VALIDATION_FAILURE
- MA_ERROR_RUNTIME_FAILURE

### 319 maChannelHasPath()

### 320 Name

maChannelHasPath - Returns MA_SUCCESS if a path is present in a Channel, MA_UNAVAILABLE otherwise.

### 321 C Specification

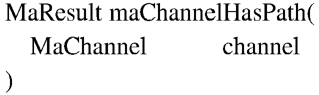

### 322 Input parameters

- channel is the Channel accessor where a path can be present.

### 323 Description

Returns MA_SUCCESS if a path is present in a Channel, MA_UNAVAILABLE otherwise.

### 324 Return codes

- MA_UNAVAILABLE
- MA_ERROR_VALIDATION_FAILURE
- MA_ERROR_RUNTIME_FAILURE

### 325 maChannelGetPath()

### 326 Name

maChannelGetPath - Returns the path of a Channel.

### 327 C Specification

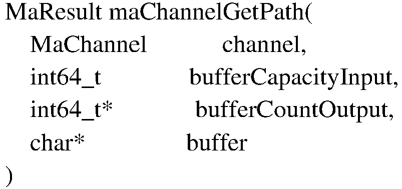

### 328 Input parameters

- channel is the Channel accessor where a path is retrieved.
- bufferCapacityInput is the capacity of the buffer output argument, or 0 to indicate a request to retrieve the required capacity.

### 329 Output parameters

- bufferCountOutput is the count of characters written, or the required capacity in the case that bufferCapacityInput is insufficient.
- buffer is a buffer filled with characters of the path but is not required if bufferCapacityInput is 0.

### 330 Description

This function follows the two-call idiom for retrieving the path of a Channel referenced by the channel input argument.

Unless the length of the path is already known, a first call is required where bufferCapacityInput input argument equals 0. In this case, there is no buffer output argument, and bufferCountOutput output argument contains the length of the path.

Once the length of the path is known, a call is required where bufferCapacityInput is the length of the buffer output argument and must be equal or higher than the length of the path. In this case the buffer output argument is filled with the characters of the path, and bufferCountOutput output argument contains the number of characters written.

### 331 Return codes

- MA_SUCCESS
- MA_ERROR_SIZE_INSUFFICIENT
- MA_ERROR_VALIDATION_FAILURE
- MA_ERROR_RUNTIME_FAILURE

### 332 maChannelHasController()

### 333 Name

maChannelHasController - Returns MA_SUCCESS if a Controller is present in a Channel, MA_UNAVAILABLE otherwise.

### 334 C Specification

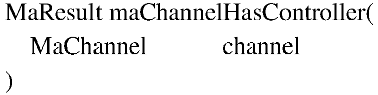

### 335 Input parameters

- channel is the Channel accessor where a Controller property can be present.

### 336 Description

Returns MA_SUCCESS if a Controller is present in a Channel, MA_UNAVAILABLE otherwise.

### 337 Return codes

- MA_UNAVAILABLE
- MA_ERROR_VALIDATION_FAILURE
- MA_ERROR_RUNTIME_FAILURE

### 338 maChannelGetController()

### 339 Name

maChannelGetController - Returns an accessor to the controller of a Channel.

### 340 C Specification

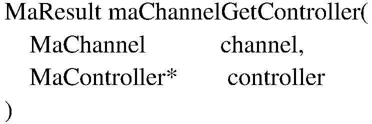

### 341 Input parameters

- channel is the Channel accessor where a Controller property is retrieved.

### 342 Output parameters

- controller is an Controller accessor of the Controller in the Channel referenced by channel.

### 343 Description

Returns an accessor to the controller of a Channel.

### 344 Return codes

- MA_SUCESS
- MA_ERROR_VALIDATION_FAILURE
- MA_ERROR_RUNTIME_FAILURE

### 345 maChannelHasInterpolation()

### 346 Name

maChannelHasInterpolation - Returns MA_SUCCESS if a interpolation is present in a Channel, MA_UNAVAILABLE otherwise.

### 347 C Specification

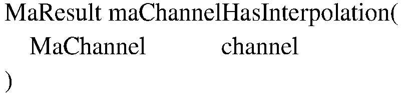

### 348 Input parameters

- channel is the Channel accessor where a interpolation can be present.

### 349 Description

Returns MA_SUCCESS if a interpolation is present in a Channel, MA_UNAVAILABLE otherwise.

### 350 Return codes

- MA_UNAVAILABLE
- MA_ERROR_VALIDATION_FAILURE
- MA_ERROR_RUNTIME_FAILURE

### 351 maChannelGetInterpolation()

### 352 Name

maChannelGetInterpolation - Returns the interpolation of a Channel.

### 353 C Specification

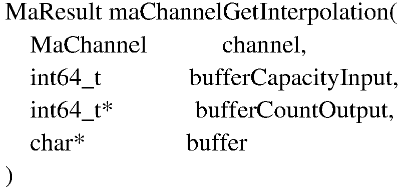

### 354 Input parameters

- channel is the Channel accessor where a interpolation is retrieved.
- bufferCapacityInput is the capacity of the buffer output argument, or 0 to indicate a request to retrieve the required capacity.

### 355 Output parameters

- bufferCountOutput is the count of characters written, or the required capacity in the case that bufferCapacityInput is insufficient.
- buffer is a buffer filled with characters of the interpolation but is not required if bufferCapacityInput is 0.

### 356 Description

This function follows the two-call idiom for retrieving the interpolation of a Channel referenced by the channel input argument.

Unless the length of the interpolation is already known, a first call is required where bufferCapacityInput input argument equals 0. In this case, there is no buffer output argument, and bufferCountOutput output argument contains the length of the interpolation.

Once the length of the interpolation is known, a call is required where bufferCapacityInput is the length of the buffer output argument and must be equal or higher than the length of the interpolation. In this case the buffer output argument is filled with the characters of the interpolation, and bufferCountOutput output argument contains the number of characters written.

### 357 Return codes

- MA_SUCCESS
- MA_ERROR_SIZE_INSUFFICIENT
- MA_ERROR_VALIDATION_FAILURE
- MA_ERROR_RUNTIME_FAILURE

### 358 maChannelGetOutput()

### 359 Name

maChannelGetOutput - Returns an accessor to the output of a Channel.

### 360 C Specification

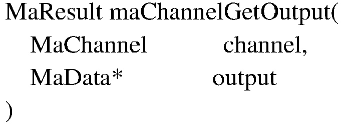

### 361 Input parameters

- channel is the Channel accessor where a Output data property is retrieved.

### 362 Output parameters

- output is an Output data accessor of the Output data in the Channel referenced by channel.

### 363 Description

Returns an accessor to the output of a Channel.

### 364 Return codes

- MA_SUCESS
- MA_ERROR_VALIDATION_FAILURE
- MA_ERROR_RUNTIME_FAILURE

### 365 Skeleton functions

### 366 maSkeletonDelete()

### 367 Name

maSkeletonDelete - Deletes an Skeleton accessor.

### 368 C Specification

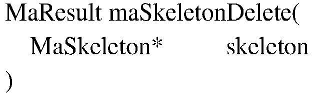

### 369 Output parameters

- skeleton is the Skeleton accessor to delete.

### 370 Description

Deletes an accessor to a Skeleton.

### 371 Return codes

- MA_SUCESS
- MA_ERROR_VALIDATION_FAILURE
- MA_ERROR_RUNTIME_FAILURE

### 372 maSkeletonHasNameQ

### 373 Name

maSkeletonHasName - Returns MA_SUCCESS if a name is present in a Skeleton, MA_UNAVAILABLE otherwise.

### 374 C Specification

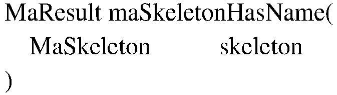

### 375 Input parameters

- skeleton is the Skeleton accessor where a name can be present.

### 376 Description

Returns MA_SUCCESS if a name is present in a Skeleton, MA_UNAVAILABLE otherwise.

### 377 Return codes

- MA_UNAVAILABLE
- MA_ERROR_VALIDATION_FAILURE
- MA_ERROR_RUNTIME_FAILURE

### 378 maSkeletonGetName()

### 379 Name

maSkeletonGetName - Returns the name of a Skeleton.

### 380 C Specification

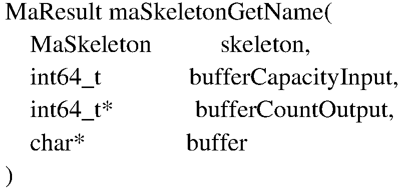

### 381 Input parameters

- skeleton is the Skeleton accessor where a name is retrieved.
- bufferCapacityInput is the capacity of the buffer output argument, or 0 to indicate a request to retrieve the required capacity.

### 382 Output parameters

- bufferCountOutput is the count of characters written, or the required capacity in the case that bufferCapacityInput is insufficient.
- buffer is a buffer filled with characters of the name but is not required if bufferCapacityInput is 0.

### 383 Description

This function follows the two-call idiom for retrieving the name of a Skeleton referenced by the skeleton input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 384 Return codes

- MA_SUCCESS
- MA_ERROR_SIZE_INSUFFICIENT
- MA_ERROR_VALIDATION_FAILURE
- MA_ERROR_RUNTIME_FAILURE

### 385 maSkeletonHasMappingQ

### 386 Name

maSkeletonHasMapping - Returns MA_SUCCESS if a mapping is present in a Skeleton, MA_UNAVAILABLE otherwise.

### 387 C Specification

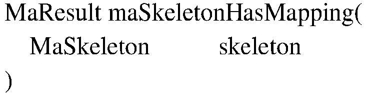

### 388 Input parameters

- skeleton is the Skeleton accessor where a mapping can be present.

### 389 Description

Returns MA_SUCCESS if a mapping is present in a Skeleton, MA_UNAVAILABLE otherwise.

### 390 Return codes

- MA_UNAVAILABLE
- MA_ERROR_VALIDATION_FAILURE
- MA_ERROR_RUNTIME_FAILURE

### 391 maSkeletonGetMapping()

### 392 Name

maSkeletonGetMapping - Returns the mapping of a Skeleton.

### 393 C Specification

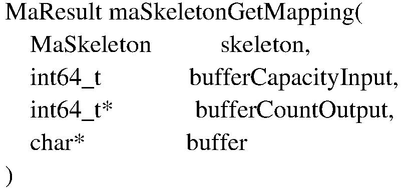

### 394 Input parameters

- skeleton is the Skeleton accessor where a mapping is retrieved.
- bufferCapacityInput is the capacity of the buffer output argument, or 0 to indicate a request to retrieve the required capacity.

### 395 Output parameters

- bufferCountOutput is the count of characters written, or the required capacity in the case that bufferCapacityInput is insufficient.
- buffer is a buffer filled with characters of the mapping but is not required if bufferCapacityInput is 0.

### 396 Description

This function follows the two-call idiom for retrieving the mapping of a Skeleton referenced by the skeleton input argument.

Unless the length of the mapping is already known, a first call is required where bufferCapacityInput input argument equals 0. In this case, there is no buffer output argument, and bufferCountOutput output argument contains the length of the mapping.

Once the length of the mapping is known, a call is required where bufferCapacityInput is the length of the buffer output argument and must be equal or higher than the length of the mapping. In this case the buffer output argument is filled with the characters of the mapping, and bufferCountOutput output argument contains the number of characters written.

### 397 Return codes

- MA_SUCCESS
- MA_ERROR_SIZE_INSUFFICIENT
- MA_ERROR_VALIDATION_FAILURE
- MA_ERROR_RUNTIME_FAILURE

### 398 maSkeletonHasRoot()

### 399 Name

maSkeletonHasRoot - Returns MA_SUCCESS if a Root is present in a Skeleton, MA_UNAVAILABLE otherwise.

### 400 C Specification

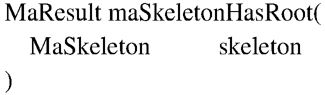

### 401 Input parameters

- skeleton is the Skeleton accessor where a Root property can be present.

### 402 Description

Returns MA_SUCCESS if a Root is present in a Skeleton, MA_UNAVAILABLE otherwise.

### 403 Return codes

- MA_UNAVAILABLE
- MA_ERROR_VALIDATION_FAILURE
- MA_ERROR_RUNTIME_FAILURE

### 404 maSkeletonGetRoot()

### 405 Name

maSkeletonGetRoot - Returns an accessor to the root of a Skeleton.

### 406 C Specification

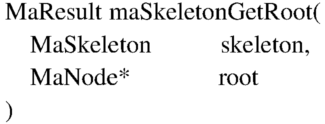

### 407 Input parameters

- skeleton is the Skeleton accessor where a Root property is retrieved.

### 408 Output parameters

- root is an Root accessor of the Root in the Skeleton referenced by skeleton.

### 409 Description

Returns an accessor to the root of a Skeleton.

### 410 Return codes

- MA_SUCESS
- MA_ERROR_VALIDATION_FAILURE
- MA_ERROR_RUNTIME_FAILURE

### 411 maSkeletonHasJoints()

### 412 Name

maSkeletonHasJoints - Returns MA_SUCCESS if a list of Joint is present in a Skeleton, MA_UNAVAILABLE otherwise.

### 413 C Specification

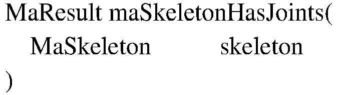

### 414 Input parameters

- skeleton is the Skeleton accessor which references a Skeleton where a list of Joint can be present.

### 415 Description

Returns MA_SUCCESS if a list of Joint is present in a Skeleton, MA_UNAVAILABLE otherwise.

### 416 Return codes

- MA_UNAVAILABLE
- MA_ERROR_VALIDATION_FAILURE
- MA_ERROR_RUNTIME_FAILURE

### 417 maSkeletonGetJointCount()

### 418 Name

maSkeletonGetJointCount - Returns the number of Joint in a Skeleton.

### 419 C Specification

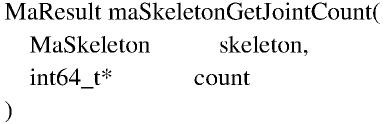

### 420 Input parameters

- skeleton is a Skeleton accessor which references a Skeleton where the number of Joint is counted.

### 421 Output parameters

- count is the number of Joint in the Skeleton referenced by skeleton.

### 422 Description

Returns the number of Joint in a Skeleton.

### 423 Return codes

- MA_SUCESS
- MA_ERROR_VALIDATION_FAILURE
- MA_ERROR_RUNTIME_FAILURE

### 424 maSkeletonGetJoint()

### 425 Name

maSkeletonGetJoint - Returns a Joint in a Skeleton.

### 426 C Specification

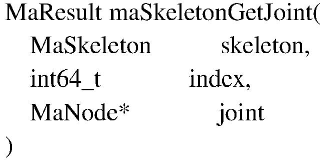

### 427 Input parameters

- skeleton is the Skeleton accessor which references a Skeleton where a list of Joint is present.
- index is the index of a Joint in the Skeleton referenced by Skeleton.

### 428 Output parameters

- joint is the Joint of the index in the Skeleton referenced by Skeleton.

### 429 Description

Returns a Joint in a Skeleton.

### 430 Return codes

- MA_SUCESS
- MA_ERROR_VALIDATION_FAILURE
- MA_ERROR_RUNTIME_FAILURE

### 431 maSkeletonHasInverseBindMatrices()

### 432 Name

maSkeletonHasInverseBindMatrices - Returns MA_SUCCESS if a Inversebindmatrice data is present in a Skeleton, MA_UNAVAILABLE otherwise.

### 433 C Specification

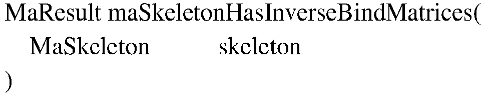

### 434 Input parameters

- skeleton is the Skeleton accessor where a Inversebindmatrice data property can be present.

### 435 Description

Returns MA_SUCCESS if a Inversebindmatrice data is present in a Skeleton, MA_UNAVAILABLE otherwise.

### 436 Return codes

- MA_UNAVAILABLE
- MA_ERROR_VALIDATION_FAILURE
- MA_ERROR_RUNTIME_FAILURE

### 437 maSkeletonGetInverseBindMatrices()

### 438 Name

maSkeletonGetInverseBindMatrices - Returns an accessor to the inverseBindMatrices of a Skeleton.

### 439 C Specification

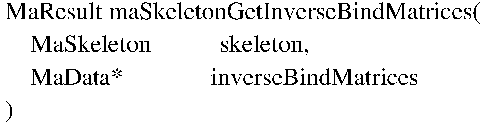

### 440 Input parameters

- skeleton is the Skeleton accessor where a Inversebindmatrice data property is retrieved.

### 441 Output parameters

- inverseBindMatrices is an Inversebindmatrice data accessor of the Inversebindmatrice data in the Skeleton referenced by skeleton.

### 442 Description

Returns an accessor to the inverseBindMatrices of a Skeleton.

### 443 Return codes

- MA_SUCESS
- MA_ERROR_VALIDATION_FAILURE
- MA_ERROR_RUNTIME_FAILURE

### 444 maSkeletonHasSkinnings()

### 445 Name

maSkeletonHasSkinnings - Returns MA_SUCCESS if a list of Skinning is present in a Skeleton, MA_UNAVAILABLE otherwise.

### 446 C Specification

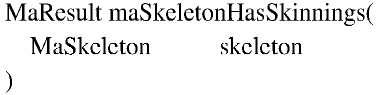

### 447 Input parameters

- skeleton is the Skeleton accessor which references a Skeleton where a list of Skinning can be present.

### 448 Description

Returns MA_SUCCESS if a list of Skinning is present in a Skeleton, MA_UNAVAILABLE otherwise.

### 449 Return codes

- MA_UNAVAILABLE
- MA_ERROR_VALIDATION_FAILURE
- MA_ERROR_RUNTIME_FAILURE

### 450 maSkeletonGetSkinningCount()

### 451 Name

maSkeletonGetSkinningCount - Returns the number of Skinning in a Skeleton.

### 452 C Specification

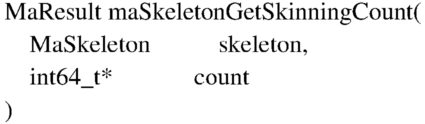

### 453 Input parameters

- skeleton is a Skeleton accessor which references a Skeleton where the number of Skinning is counted.

### 454 Output parameters

- count is the number of Skinning in the Skeleton referenced by skeleton.

### 455 Description

Returns the number of Skinning in a Skeleton.

### 456 Return codes

- MA_SUCESS
- MA_ERROR_VALIDATION_FAILURE
- MA_ERROR_RUNTIME_FAILURE

### 457 maSkeletonGetSkinning()

### 458 Name

maSkeletonGetSkinning - Returns a Skinning in a Skeleton.

### 459 C Specification

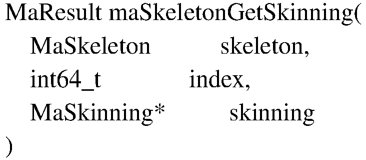

### 460 Input parameters

- skeleton is the Skeleton accessor which references a Skeleton where a list of Skinning is present.
- index is the index of a Skinning in the Skeleton referenced by Skeleton.

### 461 Output parameters

- skinning is the Skinning of the index in the Skeleton referenced by Skeleton.

### 462 Description

Returns a Skinning in a Skeleton.

### 463 Return codes

- MA_SUCESS
- MA_ERROR_VALIDATION_FAILURE
- MA_ERROR_RUNTIME_FAILURE

### 464 Skinning functions

### 465 maSkinningDelete()

### 466 Name

maSkinningDelete - Deletes an Skinning accessor.

### 467 C Specification

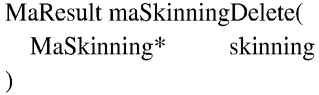

### 468 Output parameters

- skinning is the Skinning accessor to delete.

### 469 Description

Deletes an accessor to a Skinning.

### 470 Return codes

- MA_SUCESS
- MA_ERROR_VALIDATION_FAILURE
- MA_ERROR_RUNTIME_FAILURE

### 471 maSkinningHasName()

### 472 Name

maSkinningHasName - Returns MA_SUCCESS if a name is present in a Skinning, MA_UNAVAILABLE otherwise.

### 473 C Specification

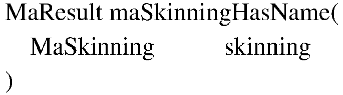

### 474 Input parameters

- skinning is the Skinning accessor where a name can be present.

### 475 Description

Returns MA_SUCCESS if a name is present in a Skinning, MA_UNAVAILABLE otherwise.

### 476 Return codes

- MA_UNAVAILABLE
- MA_ERROR_VALIDATION_FAILURE
- MA_ERROR_RUNTIME_FAILURE

### 477 maSkinningGetName()

### 478 Name

maSkinningGetName - Returns the name of a Skinning.

### 479 C Specification

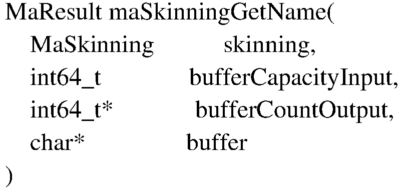

### 480 Input parameters

- skinning is the Skinning accessor where a name is retrieved.
- bufferCapacityInput is the capacity of the buffer output argument, or 0 to indicate a request to retrieve the required capacity.

### 481 Output parameters

- bufferCountOutput is the count of characters written, or the required capacity in the case that bufferCapacityInput is insufficient.
- buffer is a buffer filled with characters of the name but is not required if bufferCapacityInput is 0.

### 482 Description

This function follows the two-call idiom for retrieving the name of a Skinning referenced by the skinning input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 483 Return codes

- MA_SUCCESS
- MA_ERROR_SIZE_INSUFFICIENT
- MA_ERROR_VALIDATION_FAILURE
- MA_ERROR_RUNTIME_FAILURE

### 484 maSkinningHasMapping()

### 485 Name

maSkinningHasMapping - Returns MA_SUCCESS if a mapping is present in a Skinning, MA_UNAVAILABLE otherwise.

### 486 C Specification

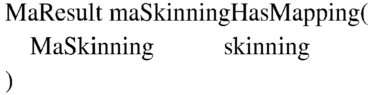

### 487 Input parameters

- skinning is the Skinning accessor where a mapping can be present.

### 488 Description

Returns MA_SUCCESS if a mapping is present in a Skinning, MA_UNAVAILABLE otherwise.

### 489 Return codes

- MA_UNAVAILABLE
- MA_ERROR_VALIDATION_FAILURE
- MA_ERROR_RUNTIME_FAILURE

### 490 maSkinningGetMapping()

### 491 Name

maSkinningGetMapping - Returns the mapping of a Skinning.

### 492 C Specification

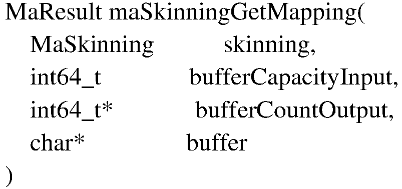

### 493 Input parameters

- skinning is the Skinning accessor where a mapping is retrieved.
- bufferCapacityInput is the capacity of the buffer output argument, or 0 to indicate a request to retrieve the required capacity.

### 494 Output parameters

- bufferCountOutput is the count of characters written, or the required capacity in the case that bufferCapacityInput is insufficient.
- buffer is a buffer filled with characters of the mapping but is not required if bufferCapacityInput is 0.

### 495 Description

This function follows the two-call idiom for retrieving the mapping of a Skinning referenced by the skinning input argument.

Unless the length of the mapping is already known, a first call is required where bufferCapacityInput input argument equals 0. In this case, there is no buffer output argument, and bufferCountOutput output argument contains the length of the mapping.

Once the length of the mapping is known, a call is required where bufferCapacityInput is the length of the buffer output argument and must be equal or higher than the length of the mapping. In this case the buffer output argument is filled with the characters of the mapping, and bufferCountOutput output argument contains the number of characters written.

### 496 Return codes

- MA_SUCCESS
- MA_ERROR_SIZE_INSUFFICIENT
- MA_ERROR_VALIDATION_FAILURE
- MA_ERROR_RUNTIME_FAILURE

### 497 maSkinningHasMesh()

### 498 Name

maSkinningHasMesh - Returns MA_SUCCESS if a Mesh is present in a Skinning, MA_UNAVAILABLE otherwise.

### 499 C Specification

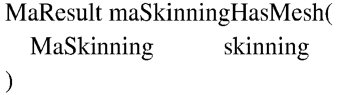

### 500 Input parameters

- skinning is the Skinning accessor where a Mesh property can be present.

### 501 Description

Returns MA_SUCCESS if a Mesh is present in a Skinning, MA_UNAVAILABLE otherwise.

### 502 Return codes

- MA_UNAVAILABLE
- MA_ERROR_VALIDATION_FAILURE
- MA_ERROR_RUNTIME_FAILURE

### 503 maSkinningGetMesh()

### 504 Name

maSkinningGetMesh - Returns an accessor to the mesh of a Skinning.

### 505 C Specification

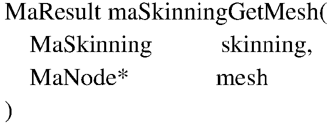

### 506 Input parameters

- skinning is the Skinning accessor where a Mesh property is retrieved.

### 507 Output parameters

- mesh is an Mesh accessor of the Mesh in the Skinning referenced by skinning.

### 508 Description

Returns an accessor to the mesh of a Skinning.

### 509 Return codes

- MA_SUCESS
- MA_ERROR_VALIDATION_FAILURE
- MA_ERROR_RUNTIME_FAILURE

### 510 maSkinningHasWeights()

### 511 Name

maSkinningHasWeights - Returns MA_SUCCESS if a Weight data is present in a Skinning, MA_UNAVAILABLE otherwise.

### 512 C Specification

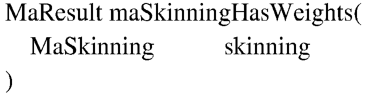

### 513 Input parameters

- skinning is the Skinning accessor where a Weight data property can be present.

### 514 Description

Returns MA_SUCCESS if a Weight data is present in a Skinning, MA_UNAVAILABLE otherwise.

### 515 Return codes

- MA_UNAVAILABLE
- MA_ERROR_VALIDATION_FAILURE
- MA_ERROR_RUNTIME_FAILURE

### 516 maSkinningGetWeights()

### 517 Name

maSkinningGetWeights - Returns an accessor to the weights of a Skinning.

### 518 C Specification

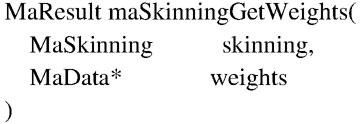

### 519 Input parameters

- skinning is the Skinning accessor where a Weight data property is retrieved.

### 520 Output parameters

- weights is an Weight data accessor of the Weight data in the Skinning referenced by skinning.

### 521 Description

Returns an accessor to the weights of a Skinning.

### 522 Return codes

- MA_SUCESS
- MA_ERROR_VALIDATION_FAILURE
- MA_ERROR_RUNTIME_FAILURE

### 523 Node functions

### 524 maNodeDelete()

### 525 Name

maNodeDelete - Deletes an Node accessor.

### 526 C Specification

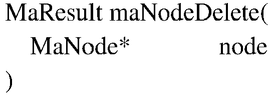

### 527 Output parameters

- node is the Node accessor to delete.

### 528 Description

Deletes an accessor to a Node.

### 529 Return codes

- MA_SUCESS
- MA_ERROR_VALIDATION_FAILURE
- MA_ERROR_RUNTIME_FAILURE

### 530 maNodeHasName()

### 531 Name

maNodeHasName - Returns MA_SUCCESS if a name is present in a Node, MA_UNAVAILABLE otherwise.

### 532 C Specification

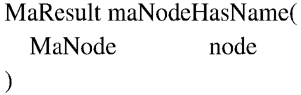

### 533 Input parameters

- node is the Node accessor where a name can be present.

### 534 Description

Returns MA_SUCCESS if a name is present in a Node, MA_UNAVAILABLE otherwise.

### 535 Return codes

- MA_UNAVAILABLE
- MA_ERROR_VALIDATION_FAILURE
- MA_ERROR_RUNTIME_FAILURE

### 536 maNodeGetName()

### 537 Name

maNodeGetName - Returns the name of a Node.

### 538 C Specification

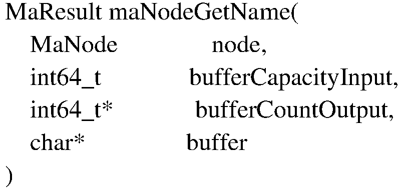

### 539 Input parameters

- node is the Node accessor where a name is retrieved.
- bufferCapacityInput is the capacity of the buffer output argument, or 0 to indicate a request to retrieve the required capacity.

### 540 Output parameters

- bufferCountOutput is the count of characters written, or the required capacity in the case that bufferCapacityInput is insufficient.
- buffer is a buffer filled with characters of the name but is not required if bufferCapacityInput is 0.

### 541 Description

This function follows the two-call idiom for retrieving the name of a Node referenced by the node input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 542 Return codes

- MA_SUCCESS
- MA_ERROR_SIZE_INSUFFICIENT
- MA_ERROR_VALIDATION_FAILURE
- MA_ERROR_RUNTIME_FAILURE

### 543 maNodeHasGeometry()

### 544 Name

maNodeHasGeometry - Returns MA_SUCCESS if a Geometry is present in a Node, MA_UNAVAILABLE otherwise.

### 545 C Specification

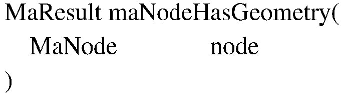

### 546 Input parameters

- node is the Node accessor where a Geometry property can be present.

### 547 Description

Returns MA_SUCCESS if a Geometry is present in a Node, MA_UNAVAILABLE otherwise.

### 548 Return codes

- MA_UNAVAILABLE
- MA_ERROR_VALIDATION_FAILURE
- MA_ERROR_RUNTIME_FAILURE

### 549 maNodeGetGeometry()

### 550 Name

maNodeGetGeometry - Returns an accessor to the geometry of a Node.

### 551 C Specification

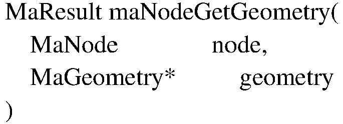

### 552 Input parameters

- node is the Node accessor where a Geometry property is retrieved.

### 553 Output parameters

- geometry is an Geometry accessor of the Geometry in the Node referenced by node.

### 554 Description

Returns an accessor to the geometry of a Node.

### 555 Return codes

- MA_SUCESS
- MA_ERROR_VALIDATION_FAILURE
- MA_ERROR_RUNTIME_FAILURE

### 556 maNodeHasChildren()

### 557 Name

maNodeHasChildren - Returns MA_SUCCESS if a list of Child is present in a Node, MA_UNAVAILABLE otherwise.

### 558 C Specification

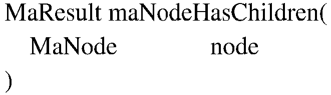

### 559 Input parameters

- node is the Node accessor which references a Node where a list of Child can be present.

### 560 Description

Returns MA_SUCCESS if a list of Child is present in a Node, MA_UNAVAILABLE otherwise.

### 561 Return codes

- MA_UNAVAILABLE
- MA_ERROR_VALIDATION_FAILURE
- MA_ERROR_RUNTIME_FAILURE

### 562 maNodeGetChildCount()

### 563 Name

maNodeGetChildCount - Returns the number of Child in a Node.

### 564 C Specification

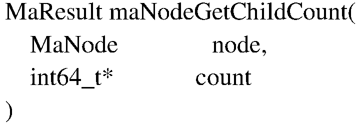

### 565 Input parameters

- node is a Node accessor which references a Node where the number of Child is counted.

### 566 Output parameters

- count is the number of Child in the Node referenced by node.

### 567 Description

Returns the number of Child in a Node.

### 568 Return codes

- MA_SUCESS
- MA_ERROR_VALIDATION_FAILURE
- MA_ERROR_RUNTIME_FAILURE

### 569 maNodeGetChildQ

### 570 Name

maNodeGetChild - Returns a Child in a Node.

### 571 C Specification

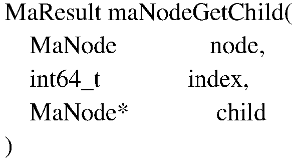

### 572 Input parameters

- node is the Node accessor which references a Node where a list of Child is present.
- index is the index of a Child in the Node referenced by Node.

### 573 Output parameters

- child is the Child of the index in the Node referenced by Node.

### 574 Description

Returns a Child in a Node.

### 575 Return codes

- MA_SUCESS
- MA_ERROR_VALIDATION_FAILURE
- MA_ERROR_RUNTIME_FAILURE

### 576 maNodeHasScale()

### 577 Name

maNodeHasScale - Returns MA_SUCCESS if scale values are present in a Node, MA_UNAVAILABLE otherwise.

### 578 C Specification

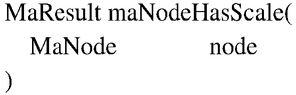

### 579 Input parameters

- node is the Node accessor where scale values can be present.

### 580 Description

Returns MA_SUCCESS if scale values are present in a Node, MA_UNAVAILABLE otherwise.

### 581 Return codes

- MA_UNAVAILABLE
- MA_ERROR_VALIDATION_FAILURE
- MA_ERROR_RUNTIME_FAILURE

### 582 maNodeGetScaleQ

### 583 Name

maNodeGetScale - Returns the scale values in a Node.

### 584 C Specification

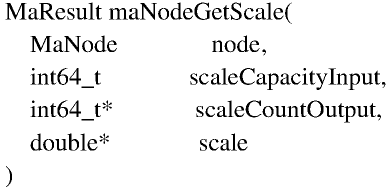

### 585 Input parameters

- node is the Node accessor where scale values are retrieved.
- scaleCapacityInput is the capacity of the scale output argument, or 0 to indicate a request to retrieve the required capacity.

### 586 Output parameters

- scaleCountOutput is the count of values written, or the required capacity in the case that scaleCapacityInput is insufficient.
- scale is an array filled with the scale values but is not required if scaleCapacityInput is 0.

### 587 Description

This function follows the two-call idiom for retrieving the scale values of a Node referenced by the node input argument.

Unless the number of scale values is already known, a first call is required where scaleCapacityInput input argument equals 0. In this case, there is no scale output argument, and scaleCountOutput output argument contains the number of scale values.

Once the size of the number of scale values is known, a call is required where scaleCapacityInput is the size of the scale output argument and must be equal or higher than the number of scale values. In this case the scale output argument is filled with the scale values, and scaleCountOutput output argument contains the number of values written.

### 588 Return codes

- MA_SUCCESS
- MA_ERROR_SIZE_INSUFFICIENT
- MA_ERROR_VALIDATION_FAILURE
- MA_ERROR_RUNTIME_FAILURE

### 589 maNodeHasRotation()

### 590 Name

maNodeHasRotation - Returns MA_SUCCESS if rotation values are present in a Node, MA_UNAVAILABLE otherwise.

### 591 C Specification

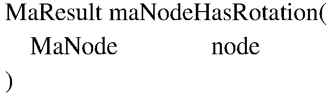

### 592 Input parameters

- node is the Node accessor where rotation values can be present.

### 593 Description

Returns MA_SUCCESS if rotation values are present in a Node, MA_UNAVAILABLE otherwise.

### 594 Return codes

- MA_UNAVAILABLE
- MA_ERROR_VALIDATION_FAILURE
- MA_ERROR_RUNTIME_FAILURE

### 595 maNodeGetRotation()

### 596 Name

maNodeGetRotation - Returns the rotation values in a Node.

### 597 C Specification

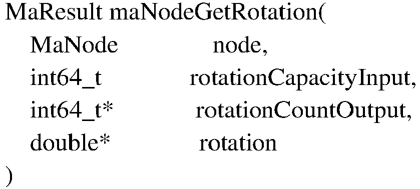

### 598 Input parameters

- node is the Node accessor where rotation values are retrieved.
- rotationCapacityInput is the capacity of the rotation output argument, or 0 to indicate a request to retrieve the required capacity.

### 599 Output parameters

- rotationCountOutput is the count of values written, or the required capacity in the case that rotationCapacityInput is insufficient.
- rotation is an array filled with the rotation values but is not required if rotationCapacityInput is 0.

### 600 Description

This function follows the two-call idiom for retrieving the rotation values of a Node referenced by the node input argument.

Unless the number of rotation values is already known, a first call is required where rotationCapacityInput input argument equals 0. In this case, there is no rotation output argument, and rotationCountOutput output argument contains the number of rotation values.

Once the size of the number of rotation values is known, a call is required where rotationCapacityInput is the size of the rotation output argument and must be equal or higher than the number of rotation values. In this case the rotation output argument is filled with the rotation values, and rotationCountOutput output argument contains the number of values written.

### 601 Return codes

- MA_SUCCESS
- MA_ERROR_SIZE_INSUFFICIENT
- MA_ERROR_VALIDATION_FAILURE
- MA_ERROR_RUNTIME_FAILURE

### 602 maNodeHasTranslation()

### 603 Name

maNodeHasTranslation - Returns MA_SUCCESS if translation values are present in a Node, MA_UNAVAILABLE otherwise.

### 604 C Specification

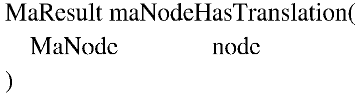

### 605 Input parameters

- node is the Node accessor where translation values can be present.

### 606 Description

Returns MA_SUCCESS if translation values are present in a Node, MA_UNAVAILABLE otherwise.

### 607 Return codes

- MA_UNAVAILABLE
- MA_ERROR_VALIDATION_FAILURE
- MA_ERROR_RUNTIME_FAILURE

### 608 maNodeGetTranslation()

### 609 Name

maNodeGetTranslation - Returns the translation values in a Node.

### 610 C Specification

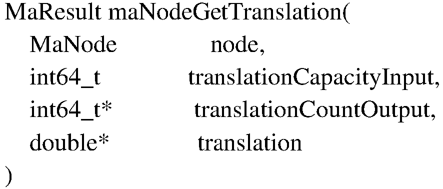

### 611 Input parameters

- node is the Node accessor where translation values are retrieved.
- translationCapacityInput is the capacity of the translation output argument, or 0 to indicate a request to retrieve the required capacity.

### 612 Output parameters

- translationCountOutput is the count of values written, or the required capacity in the case that translationCapacityInput is insufficient.
- translation is an array filled with the translation values but is not required if translationCapacityInput is 0.

### 613 Description

This function follows the two-call idiom for retrieving the translation values of a Node referenced by the node input argument.

Unless the number of translation values is already known, a first call is required where translationCapacityInput input argument equals 0. In this case, there is no translation output argument, and translationCountOutput output argument contains the number of translation values.

Once the size of the number of translation values is known, a call is required where translationCapacityInput is the size of the translation output argument and must be equal or higher than the number of translation values. In this case the translation output argument is filled with the translation values, and translationCountOutput output argument contains the number of values written.

### 614 Return codes

- MA_SUCCESS
- MA_ERROR_SIZE_INSUFFICIENT
- MA_ERROR_VALIDATION_FAILURE
- MA_ERROR_RUNTIME_FAILURE

### 615 maNodeHasMatrixQ

### 616 Name

maNodeHasMatrix - Returns MA_SUCCESS if matrix values are present in a Node, MA_UNAVAILABLE otherwise.

### 617 C Specification

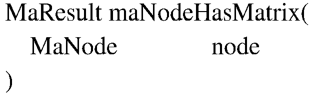

### 618 Input parameters

- node is the Node accessor where matrix values can be present.

### 619 Description

Returns MA_SUCCESS if matrix values are present in a Node, MA_UNAVAILABLE otherwise.

### 620 Return codes

- MA_UNAVAILABLE
- MA_ERROR_VALIDATION_FAILURE
- MA_ERROR_RUNTIME_FAILURE

### 621 maNodeGetMatrix()

### 622 Name

maNodeGetMatrix - Returns the matrix values in a Node.

### 623 C Specification

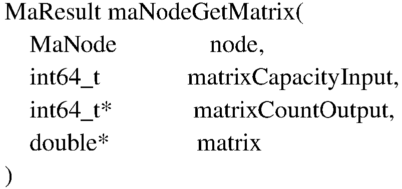

### 624 Input parameters

- node is the Node accessor where matrix values are retrieved.
- matrixCapacityInput is the capacity of the matrix output argument, or 0 to indicate a request to retrieve the required capacity.

### 625 Output parameters

- matrixCountOutput is the count of values written, or the required capacity in the case that matrixCapacityInput is insufficient.
- matrix is an array filled with the matrix values but is not required if matrixCapacityInput is 0.

### 626 Description

This function follows the two-call idiom for retrieving the matrix values of a Node referenced by the node input argument.

Unless the number of matrix values is already known, a first call is required where matrixCapacityInput input argument equals 0. In this case, there is no matrix output argument, and matrixCountOutput output argument contains the number of matrix values.

Once the size of the number of matrix values is known, a call is required where matrixCapacityInput is the size of the matrix output argument and must be equal or higher than the number of matrix values. In this case the matrix output argument is filled with the matrix values, and matrixCountOutput output argument contains the number of values written.

### 627 Return codes

- MA_SUCCESS
- MA_ERROR_SIZE_INSUFFICIENT
- MA_ERROR_VALIDATION_FAILURE
- MA_ERROR_RUNTIME_FAILURE

### 628 Geometry functions

### 629 maGeometryDelete()

### 630 Name

maGeometryDelete - Deletes an Geometry accessor.

### 631 C Specification

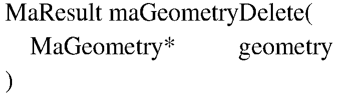

### 632 Output parameters

- geometry is the Geometry accessor to delete.

### 633 Description

Deletes an accessor to a Geometry.

### 634 Return codes

- MA_SUCESS
- MA_ERROR_VALIDATION_FAILURE
- MA_ERROR_RUNTIME_FAILURE

### 635 maGeometryHasNameQ

### 636 Name

maGeometryHasName - Returns MA_SUCCESS if a name is present in a Geometry, MA_UNAVAILABLE otherwise.

### 637 C Specification

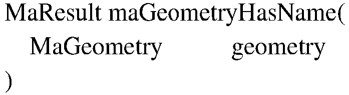

### 638 Input parameters

- geometry is the Geometry accessor where a name can be present.

### 639 Description

Returns MA_SUCCESS if a name is present in a Geometry, MA_UNAVAILABLE otherwise.

### 640 Return codes

- MA_UNAVAILABLE
- MA_ERROR_VALIDATION_FAILURE
- MA_ERROR_RUNTIME_FAILURE

### 641 maGeometryGetName()

### 642 Name

maGeometryGetName - Returns the name of a Geometry.

### 643 C Specification

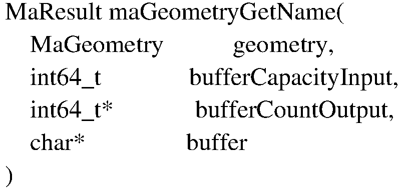

### 644 Input parameters

- geometry is the Geometry accessor where a name is retrieved.
- bufferCapacityInput is the capacity of the buffer output argument, or 0 to indicate a request to retrieve the required capacity.

### 645 Output parameters

- bufferCountOutput is the count of characters written, or the required capacity in the case that bufferCapacityInput is insufficient.
- buffer is a buffer filled with characters of the name but is not required if bufferCapacityInput is 0.

### 646 Description

This function follows the two-call idiom for retrieving the name of a Geometry referenced by the geometry input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 647 Return codes

- MA_SUCCESS
- MA_ERROR_SIZE_INSUFFICIENT
- MA_ERROR_VALIDATION_FAILURE
- MA_ERROR_RUNTIME_FAILURE

### 648 maGeometryGetVertices()

### 649 Name

maGeometryGetVertices - Returns an accessor to the vertices of a Geometry.

### 650 C Specification

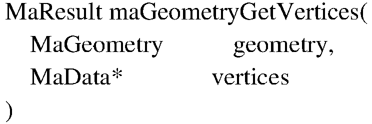

### 651 Input parameters

- geometry is the Geometry accessor where a Vertice data property is retrieved.

### 652 Output parameters

- vertices is an Vertice data accessor of the Vertice data in the Geometry referenced by geometry.

### 653 Description

Returns an accessor to the vertices of a Geometry.

### 654 Return codes

- MA_SUCESS
- MA_ERROR_VALIDATION_FAILURE
- MA_ERROR_RUNTIME_FAILURE

### 655 maGeometryHasNormals()

### 656 Name

maGeometryHasNormals - Returns MA_SUCCESS if a Normal data is present in a Geometry, MA_UNAVAILABLE otherwise.

### 657 C Specification

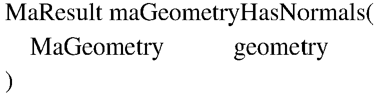

### 658 Input parameters

- geometry is the Geometry accessor where a Normal data property can be present.

### 659 Description

Returns MA_SUCCESS if a Normal data is present in a Geometry, MA_UNAVAILABLE otherwise.

### 660 Return codes

- MA_UNAVAILABLE
- MA_ERROR_VALIDATION_FAILURE
- MA_ERROR_RUNTIME_FAILURE

### 661 maGeometryGetNormals()

### 662 Name

maGeometryGetNormals - Returns an accessor to the normals of a Geometry.

### 663 C Specification

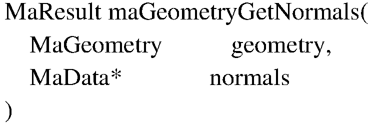

### 664 Input parameters

- geometry is the Geometry accessor where a Normal data property is retrieved.

### 665 Output parameters

- normals is an Normal data accessor of the Normal data in the Geometry referenced by geometry.

### 666 Description

Returns an accessor to the normals of a Geometry.

### 667 Return codes

- MA_SUCESS
- MA_ERROR_VALIDATION_FAILURE
- MA_ERROR_RUNTIME_FAILURE

### 668 maGeometryHasUvs()

### 669 Name

maGeometryHasUvs - Returns MA_SUCCESS if a list of Uv data is present in a Geometry, MA_UNAVAILABLE otherwise.

### 670 C Specification

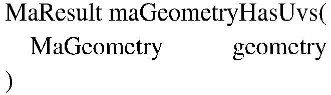

### 671 Input parameters

- geometry is the Geometry accessor which references a Geometry where a list of Uv data can be present.

### 672 Description

Returns MA_SUCCESS if a list of Uv data is present in a Geometry, MA_UNAVAILABLE otherwise.

### 673 Return codes

- MA_UNAVAILABLE
- MA_ERROR_VALIDATION_FAILURE
- MA_ERROR_RUNTIME_FAILURE

### 674 maGeometryGetUvCountQ

### 675 Name

maGeometryGetUvCount - Returns the number of Uv data in a Geometry.

### 676 C Specification

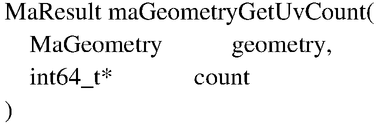

### 677 Input parameters

- geometry is a Geometry accessor which references a Geometry where the number of Uv data is counted.

### 678 Output parameters

- count is the number of Uv data in the Geometry referenced by geometry.

### 679 Description

Returns the number of Uv data in a Geometry.

### 680 Return codes

- MA_SUCESS
- MA_ERROR_VALIDATION_FAILURE
- MA_ERROR_RUNTIME_FAILURE

### 681 maGeometryGetUv()

### 682 Name

maGeometryGetUv - Returns a Uv data in a Geometry.

### 683 C Specification

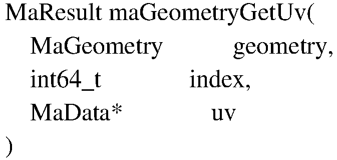

### 684 Input parameters

- geometry is the Geometry accessor which references a Geometry where a list of Uv data is present.
- index is the index of a Uv data in the Geometry referenced by Geometry.

### 685 Output parameters

- uv is the Uv data of the index in the Geometry referenced by Geometry.

### 686 Description

Returns a Uv data in a Geometry.

### 687 Return codes

- MA_SUCESS
- MA_ERROR_VALIDATION_FAILURE
- MA_ERROR_RUNTIME_FAILURE

### 688 maGeometryHasFaces()

### 689 Name

maGeometryHasFaces - Returns MA_SUCCESS if a Face is present in a Geometry, MA_UNAVAILABLE otherwise.

### 690 C Specification

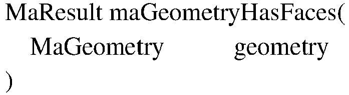

### 691 Input parameters

- geometry is the Geometry accessor where a Face property can be present.

### 692 Description

Returns MA_SUCCESS if a Face is present in a Geometry, MA_UNAVAILABLE otherwise.

### 693 Return codes

- MA_UNAVAILABLE
- MA_ERROR_VALIDATION_FAILURE
- MA_ERROR_RUNTIME_FAILURE

### 694 maGeometryGetFaces()

### 695 Name

maGeometryGetFaces - Returns an accessor to the faces of a Geometry.

### 696 C Specification

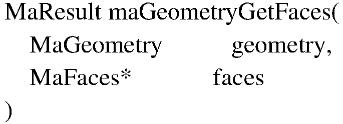

### 697 Input parameters

- geometry is the Geometry accessor where a Face property is retrieved.

### 698 Output parameters

- faces is an Face accessor of the Face in the Geometry referenced by geometry.

### 699 Description

Returns an accessor to the faces of a Geometry.

### 700 Return codes

- MA_SUCESS
- MA_ERROR_VALIDATION_FAILURE
- MA_ERROR_RUNTIME_FAILURE

### 701 maGeometryHasBlendshapes()

### 702 Name

maGeometryHasBlendshapes - Returns MA_SUCCESS if a list of Blendshape is present in a Geometry, MA_UNAVAILABLE otherwise.

### 703 C Specification

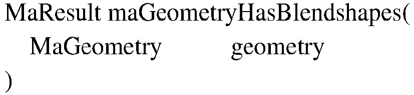

### 704 Input parameters

- geometry is the Geometry accessor which references a Geometry where a list of Blendshape can be present.

### 705 Description

Returns MA_SUCCESS if a list of Blendshape is present in a Geometry, MA_UNAVAILABLE otherwise.

### 706 Return codes

- MA_UNAVAILABLE
- MA_ERROR_VALIDATION_FAILURE
- MA_ERROR_RUNTIME_FAILURE

### 707 maGeometryGetBlendshapeCount()

### 708 Name

maGeometryGetBlendshapeCount - Returns the number of Blendshape in a Geometry.

### 709 C Specification

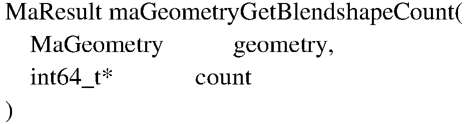

### 710 Input parameters

- geometry is a Geometry accessor which references a Geometry where the number of Blendshape is counted.

### 711 Output parameters

- count is the number of Blendshape in the Geometry referenced by geometry.

### 712 Description

Returns the number of Blendshape in a Geometry.

### 713 Return codes

- MA_SUCESS
- MA_ERROR_VALIDATION_FAILURE
- MA_ERROR_RUNTIME_FAILURE

### 714 maGeometryGetBlendshape()

### 715 Name

maGeometryGetBlendshape - Returns a Blendshape in a Geometry.

### 716 C Specification

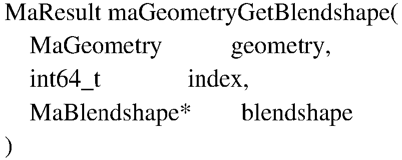

### 717 Input parameters

- geometry is the Geometry accessor which references a Geometry where a list of Blendshape is present.
- index is the index of a Blendshape in the Geometry referenced by Geometry.

### 718 Output parameters

- blendshape is the Blendshape of the index in the Geometry referenced by Geometry.

### 719 Description

Returns a Blendshape in a Geometry.

### 720 Return codes

- MA_SUCESS
- MA_ERROR_VALIDATION_FAILURE
- MA_ERROR_RUNTIME_FAILURE

### 721 maGeometryHasTextures()

### 722 Name

maGeometryHasTextures - Returns MA_SUCCESS if a list of Texture is present in a Geometry, MA_UNAVAILABLE otherwise.

### 723 C Specification

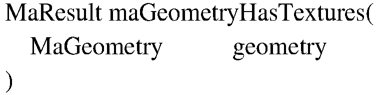

### 724 Input parameters

- geometry is the Geometry accessor which references a Geometry where a list of Texture can be present.

### 725 Description

Returns MA_SUCCESS if a list of Texture is present in a Geometry, MA_UNAVAILABLE otherwise.

### 726 Return codes

- MA_UNAVAILABLE
- MA_ERROR_VALIDATION_FAILURE
- MA_ERROR_RUNTIME_FAILURE

### 727 maGeometryGetTextureCount()

### 728 Name

maGeometryGetTextureCount - Returns the number of Texture in a Geometry.

### 729 C Specification

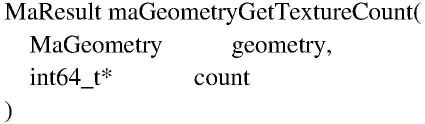

### 730 Input parameters

- geometry is a Geometry accessor which references a Geometry where the number of Texture is counted.

### 731 Output parameters

- count is the number of Texture in the Geometry referenced by geometry.

### 732 Description

Returns the number of Texture in a Geometry.

### 733 Return codes

- MA_SUCESS
- MA_ERROR_VALIDATION_FAILURE
- MA_ERROR_RUNTIME_FAILURE

### 734 maGeometryGetTexture()

### 735 Name

maGeometryGetTexture - Returns a Texture in a Geometry.

### 736 C Specification

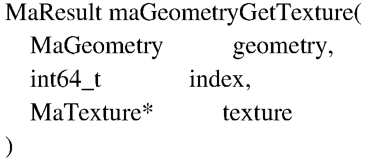

### 737 Input parameters

- geometry is the Geometry accessor which references a Geometry where a list of Texture is present.
- index is the index of a Texture in the Geometry referenced by Geometry.

### 738 Output parameters

- texture is the Texture of the index in the Geometry referenced by Geometry.

### 739 Description

Returns a Texture in a Geometry.

### 740 Return codes

- MA_SUCESS
- MA_ERROR_VALIDATION_FAILURE
- MA_ERROR_RUNTIME_FAILURE

### 741 Faces functions

### 742 maFacesDelete()

### 743 Name

maFacesDelete - Deletes an Faces accessor.

### 744 C Specification

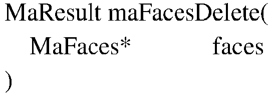

### 745 Output parameters

- faces is the Faces accessor to delete.

### 746 Description

Deletes an accessor to a Faces.

### 747 Return codes

- MA_SUCESS
- MA_ERROR_VALIDATION_FAILURE
- MA_ERROR_RUNTIME_FAILURE

### 748 maFacesHasVertices()

### 749 Name

maFacesHasVertices - Returns MA_SUCCESS if a Vertice data is present in a Faces, MA_UNAVAILABLE otherwise.

### 750 C Specification

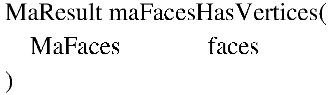

### 751 Input parameters

- faces is the Faces accessor where a Vertice data property can be present.

### 752 Description

Returns MA_SUCCESS if a Vertice data is present in a Faces, MA_UNAVAILABLE otherwise.

### 753 Return codes

- MA_UNAVAILABLE
- MA_ERROR_VALIDATION_FAILURE
- MA_ERROR_RUNTIME_FAILURE

### 754 maFacesGetVertices()

### 755 Name

maFacesGetVertices - Returns an accessor to the vertices of a Faces.

### 756 C Specification

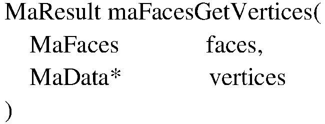

### 757 Input parameters

- faces is the Faces accessor where a Vertice data property is retrieved.

### 758 Output parameters

- vertices is an Vertice data accessor of the Vertice data in the Faces referenced by faces.

### 759 Description

Returns an accessor to the vertices of a Faces.

### 760 Return codes

- MA_SUCESS
- MA_ERROR_VALIDATION_FAILURE
- MA_ERROR_RUNTIME_FAILURE

### 761 maFacesHasNormals()

### 762 Name

maFacesHasNormals - Returns MA_SUCCESS if a Normal data is present in a Faces, MA_UNAVAILABLE otherwise.

### 763 C Specification

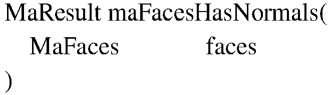

### 764 Input parameters

- faces is the Faces accessor where a Normal data property can be present.

### 765 Description

Returns MA_SUCCESS if a Normal data is present in a Faces, MA_UNAVAILABLE otherwise.

### 766 Return codes

- MA_UNAVAILABLE
- MA_ERROR_VALIDATION_FAILURE
- MA_ERROR_RUNTIME_FAILURE

### 767 maFacesGetNormalsQ

### 768 Name

maFacesGetNormals - Returns an accessor to the normals of a Faces.

### 769 C Specification

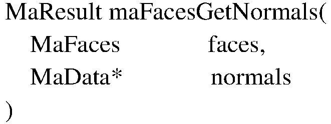

### 770 Input parameters

- faces is the Faces accessor where a Normal data property is retrieved.

### 771 Output parameters

- normals is an Normal data accessor of the Normal data in the Faces referenced by faces.

### 772 Description

Returns an accessor to the normals of a Faces.

### 773 Return codes

- MA_SUCESS
- MA_ERROR_VALIDATION_FAILURE
- MA_ERROR_RUNTIME_FAILURE

### 774 maFacesHasUvs()

### 775 Name

maFacesHasUvs - Returns MA_SUCCESS if a list of Uv data is present in a Faces, MA_UNAVAILABLE otherwise.

### 776 C Specification

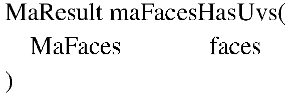

### 777 Input parameters

- faces is the Faces accessor which references a Faces where a list of Uv data can be present.

### 778 Description

Returns MA_SUCCESS if a list of Uv data is present in a Faces, MA_UNAVAILABLE otherwise.

### 779 Return codes

- MA_UNAVAILABLE
- MA_ERROR_VALIDATION_FAILURE
- MA_ERROR_RUNTIME_FAILURE

### 780 maFacesGetUvCount()

### 781 Name

maFacesGetUvCount - Returns the number of Uv data in a Faces.

### 782 C Specification

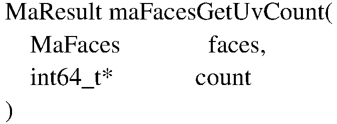

### 783 Input parameters

- faces is a Faces accessor which references a Faces where the number of Uv data is counted.

### 784 Output parameters

- count is the number of Uv data in the Faces referenced by faces.

### 785 Description

Returns the number of Uv data in a Faces.

### 786 Return codes

- MA_SUCESS
- MA_ERROR_VALIDATION_FAILURE
- MA_ERROR_RUNTIME_FAILURE

### 787 maFacesGetUv()

### 788 Name

maFacesGetUv - Returns a Uv data in a Faces.

### 789 C Specification

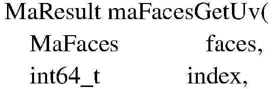

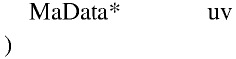

### 790 Input parameters

- faces is the Faces accessor which references a Faces where a list of Uv data is present.
- index is the index of a Uv data in the Faces referenced by Faces.

### 791 Output parameters

- uv is the Uv data of the index in the Faces referenced by Faces.

### 792 Description

Returns a Uv data in a Faces.

### 793 Return codes

- MA_SUCESS
- MA_ERROR_VALIDATION_FAILURE
- MA_ERROR_RUNTIME_FAILURE

### 794 Blendshape functions

### 795 maBlendshapeDelete()

### 796 Name

maBlendshapeDelete - Deletes an Blendshape accessor.

### 797 C Specification

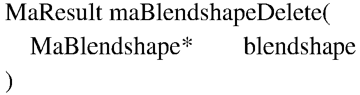

### 798 Output parameters

- blendshape is the Blendshape accessor to delete.

### 799 Description

Deletes an accessor to a Blendshape.

### 800 Return codes

- MA_SUCESS
- MA_ERROR_VALIDATION_FAILURE
- MA_ERROR_RUNTIME_FAILURE

### 801 maBlendshapeHasName()

### 802 Name

maBlendshapeHasName - Returns MA_SUCCESS if a name is present in a Blendshape, MA_UNAVAILABLE otherwise.

### 803 C Specification

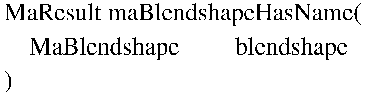

### 804 Input parameters

- blendshape is the Blendshape accessor where a name can be present.

### 805 Description

Returns MA_SUCCESS if a name is present in a Blendshape, MA_UNAVAILABLE otherwise.

### 806 Return codes

- MA_UNAVAILABLE
- MA_ERROR_VALIDATION_FAILURE
- MA_ERROR_RUNTIME_FAILURE

### 807 maBlendshapeGetName()

### 808 Name

maBlendshapeGetName - Returns the name of a Blendshape.

### 809 C Specification

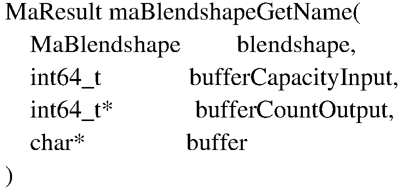

### 810 Input parameters

- blendshape is the Blendshape accessor where a name is retrieved.
- bufferCapacityInput is the capacity of the buffer output argument, or 0 to indicate a request to retrieve the required capacity.

### 811 Output parameters

- bufferCountOutput is the count of characters written, or the required capacity in the case that bufferCapacityInput is insufficient.
- buffer is a buffer filled with characters of the name but is not required if bufferCapacityInput is 0.

### 812 Description

This function follows the two-call idiom for retrieving the name of a Blendshape referenced by the blendshape input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 813 Return codes

- MA_SUCCESS
- MA_ERROR_SIZE_INSUFFICIENT
- MA_ERROR_VALIDATION_FAILURE
- MA_ERROR_RUNTIME_FAILURE

### 814 maBlendshapeGetDisplacements()

### 815 Name

maBlendshapeGetDisplacements - Returns an accessor to the displacements of a Blendshape.

### 816 C Specification

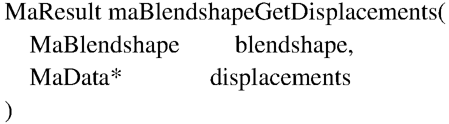

### 817 Input parameters

- blendshape is the Blendshape accessor where a Displacement data property is retrieved.

### 818 Output parameters

- displacements is an Displacement data accessor of the Displacement data in the Blendshape referenced by blendshape.

### 819 Description

Returns an accessor to the displacements of a Blendshape.

### 820 Return codes

- MA_SUCESS
- MA_ERROR_VALIDATION_FAILURE
- MA_ERROR_RUNTIME_FAILURE

### 821 maBlendshapeHasMapping()

### 822 Name

maBlendshapeHasMapping - Returns MA_SUCCESS if a mapping is present in a Blendshape, MA_UNAVAILABLE otherwise.

### 823 C Specification

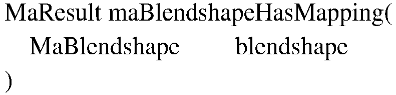

### 824 Input parameters

- blendshape is the Blendshape accessor where a mapping can be present.

### 825 Description

Returns MA_SUCCESS if a mapping is present in a Blendshape, MA_UNAVAILABLE otherwise.

### 826 Return codes

- MA_UNAVAILABLE
- MA_ERROR_VALIDATION_FAILURE
- MA_ERROR_RUNTIME_FAILURE

### 827 maBlendshapeGetMapping()

### 828 Name

maBlendshapeGetMapping - Returns the mapping of a Blendshape.

### 829 C Specification

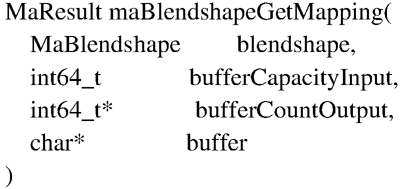

### 830 Input parameters

- blendshape is the Blendshape accessor where a mapping is retrieved.
- bufferCapacityInput is the capacity of the buffer output argument, or 0 to indicate a request to retrieve the required capacity.

### 831 Output parameters

- bufferCountOutput is the count of characters written, or the required capacity in the case that bufferCapacityInput is insufficient.
- buffer is a buffer filled with characters of the mapping but is not required if bufferCapacityInput is 0.

### 832 Description

This function follows the two-call idiom for retrieving the mapping of a Blendshape referenced by the blendshape input argument.

Unless the length of the mapping is already known, a first call is required where bufferCapacityInput input argument equals 0. In this case, there is no buffer output argument, and bufferCountOutput output argument contains the length of the mapping.

Once the length of the mapping is known, a call is required where bufferCapacityInput is the length of the buffer output argument and must be equal or higher than the length of the mapping. In this case the buffer output argument is filled with the characters of the mapping, and bufferCountOutput output argument contains the number of characters written.

### 833 Return codes

- MA_SUCCESS
- MA_ERROR_SIZE_INSUFFICIENT
- MA_ERROR_VALIDATION_FAILURE
- MA_ERROR_RUNTIME_FAILURE

### 834 maBlendshapeHasSide()

### 835 Name

maBlendshapeHasSide - Returns MA_SUCCESS if a side is present in a Blendshape, MA_UNAVAILABLE otherwise.

### 836 C Specification

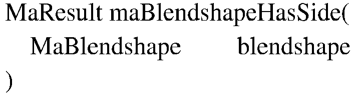

### 837 Input parameters

- blendshape is the Blendshape accessor where a side can be present.

### 838 Description

Returns MA_SUCCESS if a side is present in a Blendshape, MA_UNAVAILABLE otherwise.

### 839 Return codes

- MA_UNAVAILABLE
- MA_ERROR_VALIDATION_FAILURE
- MA_ERROR_RUNTIME_FAILURE

### 840 maBlendshapeGetSide()

### 841 Name

maBlendshapeGetSide - Returns the side of a Blendshape.

### 842 C Specification

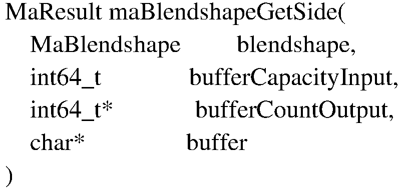

### 843 Input parameters

- blendshape is the Blendshape accessor where a side is retrieved.
- bufferCapacityInput is the capacity of the buffer output argument, or 0 to indicate a request to retrieve the required capacity.

### 844 Output parameters

- bufferCountOutput is the count of characters written, or the required capacity in the case that bufferCapacityInput is insufficient.
- buffer is a buffer filled with characters of the side but is not required if bufferCapacityInput is 0.

### 845 Description

This function follows the two-call idiom for retrieving the side of a Blendshape referenced by the blendshape input argument.

Unless the length of the side is already known, a first call is required where bufferCapacityInput input argument equals 0. In this case, there is no buffer output argument, and bufferCountOutput output argument contains the length of the side.

Once the length of the side is known, a call is required where bufferCapacityInput is the length of the buffer output argument and must be equal or higher than the length of the side. In this case the buffer output argument is filled with the characters of the side, and bufferCountOutput output argument contains the number of characters written.

### 846 Return codes

- MA_SUCCESS
- MA_ERROR_SIZE_INSUFFICIENT
- MA_ERROR_VALIDATION_FAILURE
- MA_ERROR_RUNTIME_FAILURE

### 847 Texture functions

### 848 maTextureDelete()

### 849 Name

maTextureDelete - Deletes an Texture accessor.

### 850 C Specification

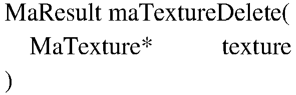

### 851 Output parameters

- texture is the Texture accessor to delete.

### 852 Description

Deletes an accessor to a Texture.

### 853 Return codes

- MA_SUCESS
- MA_ERROR_VALIDATION_FAILURE
- MA_ERROR_RUNTIME_FAILURE

### 854 maTextureHasName()

### 855 Name

maTextureHasName - Returns MA_SUCCESS if a name is present in a Texture, MA_UNAVAILABLE otherwise.

### 856 C Specification

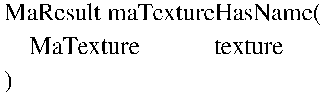

### 857 Input parameters

- texture is the Texture accessor where a name can be present.

### 858 Description

Returns MA_SUCCESS if a name is present in a Texture, MA_UNAVAILABLE otherwise.

### 859 Return codes

- MA_UNAVAILABLE
- MA_ERROR_VALIDATION_FAILURE
- MA_ERROR_RUNTIME_FAILURE

### 860 maTextureGetName()

### 861 Name

maTextureGetName - Returns the name of a Texture.

### 862 C Specification

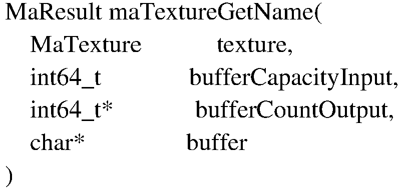

### 863 Input parameters

- texture is the Texture accessor where a name is retrieved.
- bufferCapacityInput is the capacity of the buffer output argument, or 0 to indicate a request to retrieve the required capacity.

### 864 Output parameters

- bufferCountOutput is the count of characters written, or the required capacity in the case that bufferCapacityInput is insufficient.
- buffer is a buffer filled with characters of the name but is not required if bufferCapacityInput is 0.

### 865 Description

This function follows the two-call idiom for retrieving the name of a Texture referenced by the texture input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 866 Return codes

- MA_SUCCESS
- MA_ERROR_SIZE_INSUFFICIENT
- MA_ERROR_VALIDATION_FAILURE
- MA_ERROR_RUNTIME_FAILURE

### 867 maTextureGetType()

### 868 Name

maTextureGetType - Returns the type of a Texture.

### 869 C Specification

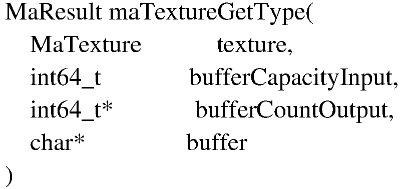

### 870 Input parameters

- texture is the Texture accessor where a type is retrieved.
- bufferCapacityInput is the capacity of the buffer output argument, or 0 to indicate a request to retrieve the required capacity.

### 871 Output parameters

- bufferCountOutput is the count of characters written, or the required capacity in the case that bufferCapacityInput is insufficient.
- buffer is a buffer filled with characters of the type but is not required if bufferCapacityInput is 0.

### 872 Description

This function follows the two-call idiom for retrieving the type of a Texture referenced by the texture input argument.

Unless the length of the type is already known, a first call is required where bufferCapacityInput input argument equals 0. In this case, there is no buffer output argument, and bufferCountOutput output argument contains the length of the type.

Once the length of the type is known, a call is required where bufferCapacityInput is the length of the buffer output argument and must be equal or higher than the length of the type. In this case the buffer output argument is filled with the characters of the type, and bufferCountOutput output argument contains the number of characters written.

### 873 Return codes

- MA_SUCCESS
- MA_ERROR_SIZE_INSUFFICIENT
- MA_ERROR_VALIDATION_FAILURE
- MA_ERROR_RUNTIME_FAILURE

### 874 maTextureHasUvs()

### 875 Name

maTextureHasUvs - Returns MA_SUCCESS if a Uv is present in a Texture, MA_UNAVAILABLE otherwise.

### 876 C Specification

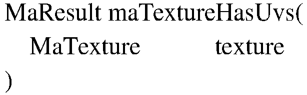

### 877 Input parameters

- texture is the Texture accessor where a Uv property can be present.

### 878 Description

Returns MA_SUCCESS if a Uv is present in a Texture, MA_UNAVAILABLE otherwise.

### 879 Return codes

- MA_UNAVAILABLE
- MA_ERROR_VALIDATION_FAILURE
- MA_ERROR_RUNTIME_FAILURE

### 880 maTextureGetUvs()

### 881 Name

maTextureGetUvs - Returns the uvs of a Texture.

### 882 C Specification

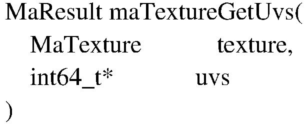

### 883 Input parameters

- texture is the Texture accessor where a Uv property is retrieved.

### 884 Output parameters

- uvs is the value of the Uv in the Texture referenced by texture.

### 885 Description

Returns the uvs of a Texture.

### 886 Return codes

- MA_SUCESS
- MA_ERROR_VALIDATION_FAILURE
- MA_ERROR_RUNTIME_FAILURE

### 887 maTextureHasImage()

### 888 Name

maTextureHasImage - Returns MA_SUCCESS if a Image data is present in a Texture, MA_UNAVAILABLE otherwise.

### 889 C Specification

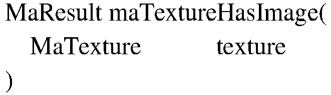

### 890 Input parameters

- texture is the Texture accessor where a Image data property can be present.

### 891 Description

Returns MA_SUCCESS if a Image data is present in a Texture, MA_UNAVAILABLE otherwise.

### 892 Return codes

- MA_UNAVAILABLE
- MA_ERROR_VALIDATION_FAILURE
- MA_ERROR_RUNTIME_FAILURE

### 893 maTextureGetImage()

### 894 Name

maTextureGetImage - Returns an accessor to the image of a Texture.

### 895 C Specification

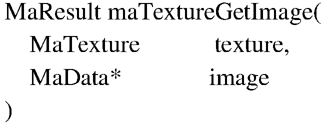

### 896 Input parameters

- texture is the Texture accessor where a Image data property is retrieved.

### 897 Output parameters

- image is an Image data accessor of the Image data in the Texture referenced by texture.

### 898 Description

Returns an accessor to the image of a Texture.

### 899 Return codes

- MA_SUCESS
- MA_ERROR_VALIDATION_FAILURE
- MA_ERROR_RUNTIME_FAILURE

### 900 maTextureHasBasis()

### 901 Name

maTextureHasBasis - Returns MA_SUCCESS if a list of Basis is present in a Texture, MA_UNAVAILABLE otherwise.

### 902 C Specification

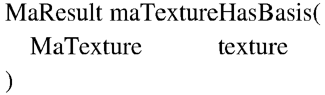

### 903 Input parameters

- texture is the Texture accessor which references a Texture where a list of Basis can be present.

### 904 Description

Returns MA_SUCCESS if a list of Basis is present in a Texture, MA_UNAVAILABLE otherwise.

### 905 Return codes

- MA_UNAVAILABLE
- MA_ERROR_VALIDATION_FAILURE
- MA_ERROR_RUNTIME_FAILURE

### 906 maTextureGetBasisCount()

### 907 Name

maTextureGetBasisCount - Returns the number of Basis in a Texture.

### 908 C Specification

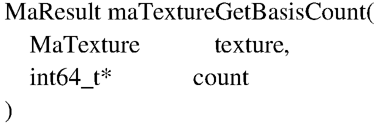

### 909 Input parameters

- texture is a Texture accessor which references a Texture where the number of Basis is counted.

### 910 Output parameters

- count is the number of Basis in the Texture referenced by texture.

### 911 Description

Returns the number of Basis in a Texture.

### 912 Return codes

- MA_SUCESS
- MA_ERROR_VALIDATION_FAILURE
- MA_ERROR_RUNTIME_FAILURE

### 913 maTextureGetBasis()

### 914 Name

maTextureGetBasis - Returns a Basis in a Texture.

### 915 C Specification

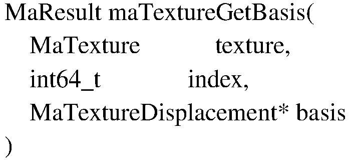

### 916 Input parameters

- texture is the Texture accessor which references a Texture where a list of Basis is present.
- index is the index of a Basis in the Texture referenced by Texture.

### 917 Output parameters

- basis is the Basis of the index in the Texture referenced by Texture.

### 918 Description

Returns a Basis in a Texture.

### 919 Return codes

- MA_SUCESS
- MA_ERROR_VALIDATION_FAILURE
- MA_ERROR_RUNTIME_FAILURE

### 920 TextureDisplacement functions

### 921 maTextureDisplacementDelete()

### 922 Name

maTextureDisplacementDelete - Deletes an TextureDisplacement accessor.

### 923 C Specification

MaResult maTextureDisplacementDelete( MaTextureDisplacement* texturedisplacement )

### 924 Output parameters

- texturedisplacement is the TextureDisplacement accessor to delete.

### 925 Description

Deletes an accessor to a TextureDisplacement.

### 926 Return codes

- MA_SUCESS
- MA_ERROR_VALIDATION_FAILURE
- MA_ERROR_RUNTIME_FAILURE

### 927 maTextureDisplacementHasName()

### 928 Name

maTextureDisplacementHasName - Returns MA_SUCCESS if a name is present in a TextureDisplacement, MA_UNAVAILABLE otherwise.

### 929 C Specification

MaResult maTextureDisplacementHasName( MaTextureDisplacement texturedisplacement )

### 930 Input parameters

- texturedisplacement is the TextureDisplacement accessor where a name can be present.

### 931 Description

Returns MA_SUCCESS if a name is present in a TextureDisplacement, MA_UNAVAILABLE otherwise.

### 932 Return codes

- MA_UNAVAILABLE
- MA_ERROR_VALIDATION_FAILURE
- MA_ERROR_RUNTIME_FAILURE

### 933 maTextureDisplacementGetName()

### 934 Name

maTextureDisplacementGetName - Returns the name of a TextureDisplacement.

### 935 C Specification

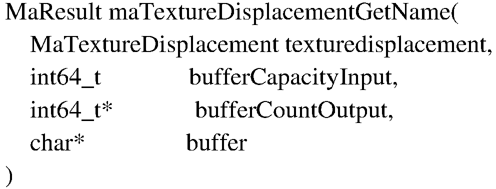

### 936 Input parameters

- texturedisplacement is the TextureDisplacement accessor where a name is retrieved.
- bufferCapacityInput is the capacity of the buffer output argument, or 0 to indicate a request to retrieve the required capacity.

### 937 Output parameters

- bufferCountOutput is the count of characters written, or the required capacity in the case that bufferCapacityInput is insufficient.
- buffer is a buffer filled with characters of the name but is not required if bufferCapacityInput is 0.

### 938 Description

This function follows the two-call idiom for retrieving the name of a TextureDisplacement referenced by the texturedisplacement input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 939 Return codes

- MA_SUCCESS
- MA_ERROR_SIZE_INSUFFICIENT
- MA_ERROR_VALIDATION_FAILURE
- MA_ERROR_RUNTIME_FAILURE

### 940 maTextureDisplacementGetDisplacements()

### 941 Name

maTextureDisplacementGetDisplacements - Returns an accessor to the displacements of a TextureDisplacement.

### 942 C Specification

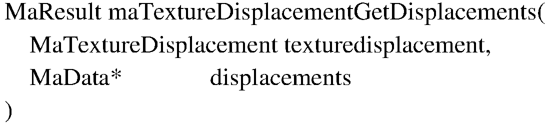

### 943 Input parameters

- texturedisplacement is the TextureDisplacement accessor where a Displacement data property is retrieved.

### 944 Output parameters

- displacements is an Displacement data accessor of the Displacement data in the TextureDisplacement referenced by texturedisplacement.

### 945 Description

Returns an accessor to the displacements of a TextureDisplacement.

### 946 Return codes

- MA_SUCESS
- MA_ERROR_VALIDATION_FAILURE
- MA_ERROR_RUNTIME_FAILURE

### 947 maTextureDisplacementHasMapping()

### 948 Name

maTextureDisplacementHasMapping - Returns MA_SUCCESS if a mapping is present in a TextureDisplacement, MA_UNAVAILABLE otherwise.

### 949 C Specification

MaResult maTextureDisplacementHasMapping( MaTextureDisplacement texturedisplacement )

### 950 Input parameters

- texturedisplacement is the TextureDisplacement accessor where a mapping can be present.

### 951 Description

Returns MA_SUCCESS if a mapping is present in a TextureDisplacement, MA_UNAVAILABLE otherwise.

### 952 Return codes

- MA_UNAVAILABLE
- MA_ERROR_VALIDATION_FAILURE
- MA_ERROR_RUNTIME_FAILURE

### 953 maTextureDisplacementGetMapping()

### 954 Name

maTextureDisplacementGetMapping - Returns the mapping of a TextureDisplacement.

### 955 C Specification

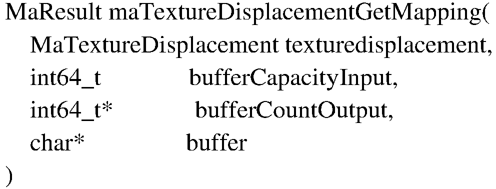

### 956 Input parameters

- texturedisplacement is the TextureDisplacement accessor where a mapping is retrieved.
- bufferCapacityInput is the capacity of the buffer output argument, or 0 to indicate a request to retrieve the required capacity.

### 957 Output parameters

- bufferCountOutput is the count of characters written, or the required capacity in the case that bufferCapacityInput is insufficient.
- buffer is a buffer filled with characters of the mapping but is not required if bufferCapacityInput is 0.

### 958 Description

This function follows the two-call idiom for retrieving the mapping of a TextureDisplacement referenced by the texturedisplacement input argument.

Unless the length of the mapping is already known, a first call is required where bufferCapacityInput input argument equals 0. In this case, there is no buffer output argument, and bufferCountOutput output argument contains the length of the mapping.

Once the length of the mapping is known, a call is required where bufferCapacityInput is the length of the buffer output argument and must be equal or higher than the length of the mapping. In this case the buffer output argument is filled with the characters of the mapping, and bufferCountOutput output argument contains the number of characters written.

### 959 Return codes

- MA_SUCCESS
- MA_ERROR_SIZE_INSUFFICIENT
- MA_ERROR_VALIDATION_FAILURE
- MA_ERROR_RUNTIME_FAILURE

### 960 Data functions

### 961 maDataDelete()

### 962 Name

maDataDelete - Deletes an Data accessor.

### 963 C Specification

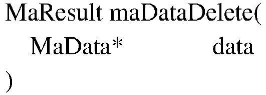

### 964 Output parameters

- data is the Data accessor to delete.

### 965 Description

Deletes an accessor to a Data.

### 966 Return codes

- MA_SUCESS
- MA_ERROR_VALIDATION_FAILURE
- MA_ERROR_RUNTIME_FAILURE

### 967 maDataHasName()

### 968 Name

maDataHasName - Returns MA_SUCCESS if a name is present in a Data, MA_UNAVAILABLE otherwise.

### 969 C Specification

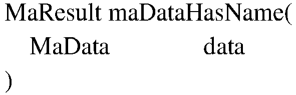

### 970 Input parameters

- data is the Data accessor where a name can be present.

### 971 Description

Returns MA_SUCCESS if a name is present in a Data, MA_UNAVAILABLE otherwise.

### 972 Return codes

- MA_UNAVAILABLE
- MA_ERROR_VALIDATION_FAILURE
- MA_ERROR_RUNTIME_FAILURE

### 973 maDataGetName()

### 974 Name

maDataGetName - Returns the name of a Data.

### 975 C Specification

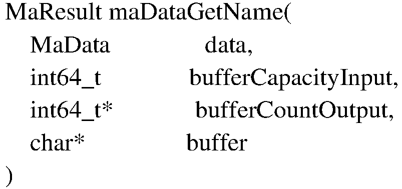

### 976 Input parameters

- data is the Data accessor where a name is retrieved.
- bufferCapacityInput is the capacity of the buffer output argument, or 0 to indicate a request to retrieve the required capacity.

### 977 Output parameters

- bufferCountOutput is the count of characters written, or the required capacity in the case that bufferCapacityInput is insufficient.
- buffer is a buffer filled with characters of the name but is not required if bufferCapacityInput is 0.

### 978 Description

This function follows the two-call idiom for retrieving the name of a Data referenced by the data input argument.

Unless the length of the name is already known, a first call is required where bufferCapacityInput input argument equals 0. In this case, there is no buffer output argument, and bufferCountOutput output argument contains the length of the name.

Once the length of the name is known, a call is required where bufferCapacityInput is the length of the buffer output argument and must be equal or higher than the length of the name. In this case the buffer output argument is filled with the characters of the name, and bufferCountOutput output argument contains the number of characters written.

### 979 Return codes

- MA_SUCCESS
- MA_ERROR_SIZE_INSUFFICIENT
- MA_ERROR_VALIDATION_FAILURE
- MA_ERROR_RUNTIME_FAILURE

### 980 maDataGetType()

### 981 Name

maDataGetType - Returns the type of a Data.

### 982 C Specification

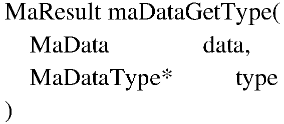

### 983 Input parameters

- data is the Data accessor where a Type property is retrieved.

### 984 Output parameters

- type is the value of the Type in the Data referenced by data.

### 985 Description

Returns the type of a Data.

### 986 Return codes

- MA_SUCESS
- MA_ERROR_VALIDATION_FAILURE
- MA_ERROR_RUNTIME_FAILURE

### 987 maDataHasDType()

### 988 Name

maDataHasDType - Returns MA_SUCCESS if a DType is present in a Data, MA_UNAVAILABLE otherwise.

### 989 C Specification

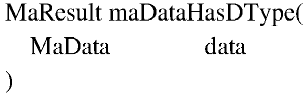

### 990 Input parameters

- data is the Data accessor where a DType property can be present.

### 991 Description

Returns MA_SUCCESS if a DType is present in a Data, MA_UNAVAILABLE otherwise.

### 992 Return codes

- MA_UNAVAILABLE
- MA_ERROR_VALIDATION_FAILURE
- MA_ERROR_RUNTIME_FAILURE

### 993 maDataGetDType()

### 994 Name

maDataGetDType - Returns the dtype of a Data.

### 995 C Specification

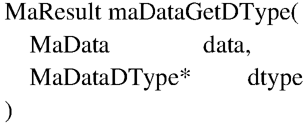

### 996 Input parameters

- data is the Data accessor where a DType property is retrieved.

### 997 Output parameters

- dtype is the value of the DType in the Data referenced by data.

### 998 Description

Returns the dtype of a Data.

### 999 Return codes

- MA_SUCESS
- MA_ERROR_VALIDATION_FAILURE
- MA_ERROR_RUNTIME_FAILURE

### 1000 maDataHasIType()

### 1001 Name

maDataHasIType - Returns MA_SUCCESS if a IType is present in a Data, MA_UNAVAILABLE otherwise.

### 1002 C Specification

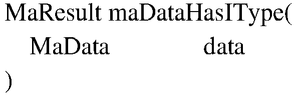

### 1003 Input parameters

- data is the Data accessor where a IType property can be present.

### 1004 Description

Returns MA_SUCCESS if a IType is present in a Data, MA_UNAVAILABLE otherwise.

### 1005 Return codes

- MA_UNAVAILABLE
- MA_ERROR_VALIDATION_FAILURE
- MA_ERROR_RUNTIME_FAILURE

### 1006 maDataGetIType()

### 1007 Name

maDataGetIType - Returns the itype of a Data.

### 1008 C Specification

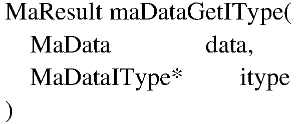

### 1009 Input parameters

- data is the Data accessor where a IType property is retrieved.

### 1010 Output parameters

- itype is the value of the IType in the Data referenced by data.

### 1011 Description

Returns the itype of a Data.

### 1012 Return codes

- MA_SUCESS
- MA_ERROR_VALIDATION_FAILURE
- MA_ERROR_RUNTIME_FAILURE

### 1013 maDataHasCType()

### 1014 Name

maDataHasCType - Returns MA_SUCCESS if a CType is present in a Data, MA_UNAVAILABLE otherwise.

### 1015 C Specification

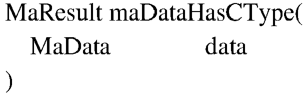

### 1016 Input parameters

- data is the Data accessor where a CType property can be present.

### 1017 Description

Returns MA_SUCCESS if a CType is present in a Data, MA_UNAVAILABLE otherwise.

### 1018 Return codes

- MA_UNAVAILABLE
- MA_ERROR_VALIDATION_FAILURE
- MA_ERROR_RUNTIME_FAILURE

### 1019 maDataGetCType()

### 1020 Name

maDataGetCType - Returns the ctype of a Data.

### 1021 C Specification

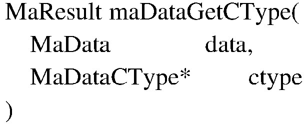

### 1022 Input parameters

- data is the Data accessor where a CType property is retrieved.

### 1023 Output parameters

- ctype is the value of the CType in the Data referenced by data.

### 1024 Description

Returns the ctype of a Data.

### 1025 Return codes

- MA_SUCESS
- MA_ERROR_VALIDATION_FAILURE
- MA_ERROR_RUNTIME_FAILURE

### 1026 maDataHasDimsQ

### 1027 Name

maDataHasDims - Returns MA_SUCCESS if dims values are present in a Data, MA_UNAVAILABLE otherwise.

### 1028 C Specification

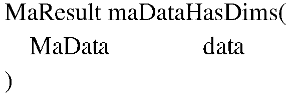

### 1029 Input parameters

- data is the Data accessor where dims values can be present.

### 1030 Description

Returns MA_SUCCESS if dims values are present in a Data, MA_UNAVAILABLE otherwise.

### 1031 Return codes

- MA_UNAVAILABLE
- MA_ERROR_VALIDATION_FAILURE
- MA_ERROR_RUNTIME_FAILURE

### 1032 maDataGetDims()

### 1033 Name

maDataGetDims - Returns the dims values in a Data.

### 1034 C Specification

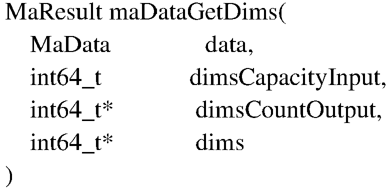

### 1035 Input parameters

- data is the Data accessor where dims values are retrieved.
- dimsCapacityInput is the capacity of the dims output argument, or 0 to indicate a request to retrieve the required capacity.

### 1036 Output parameters

- dimsCountOutput is the count of values written, or the required capacity in the case that dimsCapacityInput is insufficient.
- dims is an array filled with the dims values but is not required if dimsCapacityInput is 0.

### 1037 Description

This function follows the two-call idiom for retrieving the dims values of a Data referenced by the data input argument.

Unless the number of dims values is already known, a first call is required where dimsCapacityInput input argument equals 0. In this case, there is no dims output argument, and dimsCountOutput output argument contains the number of dims values.

Once the size of the number of dims values is known, a call is required where dimsCapacityInput is the size of the dims output argument and must be equal or higher than the number of dims values. In this case the dims output argument is filled with the dims values, and dimsCountOutput output argument contains the number of values written.

### 1038 Return codes

- MA_SUCCESS
- MA_ERROR_SIZE_INSUFFICIENT
- MA_ERROR_VALIDATION_FAILURE
- MA_ERROR_RUNTIME_FAILURE

### 1039 maDataHasCount()

### 1040 Name

maDataHasCount - Returns MA_SUCCESS if a Count is present in a Data, MA_UNAVAILABLE otherwise.

### 1041 C Specification

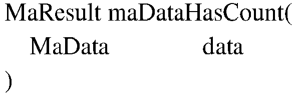

### 1042 Input parameters

- data is the Data accessor where a Count property can be present.

### 1043 Description

Returns MA_SUCCESS if a Count is present in a Data, MA_UNAVAILABLE otherwise.

### 1044 Return codes

- MA_UNAVAILABLE
- MA_ERROR_VALIDATION_FAILURE
- MA_ERROR_RUNTIME_FAILURE

### 1045 maDataGetCount()

### 1046 Name

maDataGetCount - Returns the count of a Data.

### 1047 C Specification

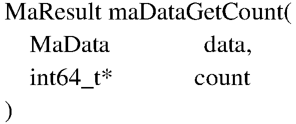

### 1048 Input parameters

- data is the Data accessor where a Count property is retrieved.

### 1049 Output parameters

- count is the value of the Count in the Data referenced by data.

### 1050 Description

Returns the count of a Data.

### 1051 Return codes

- MA_SUCESS
- MA_ERROR_VALIDATION_FAILURE
- MA_ERROR_RUNTIME_FAILURE

### 1052 maDataHasMimeType()

### 1053 Name

maDataHasMimeType - Returns MA_SUCCESS if a mimeType is present in a Data, MA_UNAVAILABLE otherwise.

### 1054 C Specification

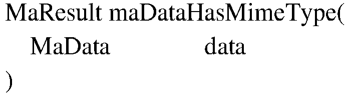

### 1055 Input parameters

- data is the Data accessor where a mimeType can be present.

### 1056 Description

Returns MA_SUCCESS if a mimeType is present in a Data, MA_UNAVAILABLE otherwise.

### 1057 Return codes

- MA_UNAVAILABLE
- MA_ERROR_VALIDATION_FAILURE
- MA_ERROR_RUNTIME_FAILURE

### 1058 maDataGetMimeType()

### 1059 Name

maDataGetMimeType - Returns the mimeType of a Data.

### 1060 C Specification

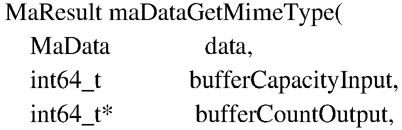

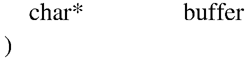

### 1061 Input parameters

- data is the Data accessor where a mimeType is retrieved.
- bufferCapacityInput is the capacity of the buffer output argument, or 0 to indicate a request to retrieve the required capacity.

### 1062 Output parameters

- bufferCountOutput is the count of characters written, or the required capacity in the case that bufferCapacityInput is insufficient.
- buffer is a buffer filled with characters of the mimeType but is not required if bufferCapacityInput is 0.

### 1063 Description

This function follows the two-call idiom for retrieving the mimeType of a Data referenced by the data input argument.

Unless the length of the mime Type is already known, a first call is required where bufferCapacityInput input argument equals 0. In this case, there is no buffer output argument, and bufferCountOutput output argument contains the length of the mimeType.

Once the length of the mime Type is known, a call is required where bufferCapacityInput is the length of the buffer output argument and must be equal or higher than the length of the mimeType. In this case the buffer output argument is filled with the characters of the mimeType, and bufferCountOutput output argument contains the number of characters written.

### 1064 Return codes

- MA_SUCCESS
- MA_ERROR_SIZE_INSUFFICIENT
- MA_ERROR_VALIDATION_FAILURE
- MA_ERROR_RUNTIME_FAILURE

### 1065 maDataGetContent()

### 1066 Name

maDataGetContent

### 1067 C Specification

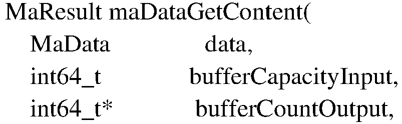

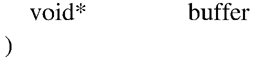

### 1068 Input parameters

- data is the RawData accessor where a content is retrieved.
- bufferCapacityInput is the capacity of the buffer output argument, or 0 to indicate a request to retrieve the required capacity.

### 1069 Output parameters

- bufferCountOutput is the count of characters written, or the required capacity in the case that bufferCapacityInput is insufficient.
- buffer is a buffer filled with bytes of the content but is not required if bufferCapacityInput is 0.

### 1070 Description

- This function follows the two-call idiom for retrieving the content of a RawData referenced by the data input argument.
- Unless the length of the content is already known, a first call is required where bufferCapacityInput input argument equals 0. In this case, there is no buffer output argument, and bufferCountOutput output argument contains the length of the content.
- Once the length of the content is known, a call is required where bufferCapacityInput is the length of the buffer output argument and must be equal or higher than the length of the content. In this case the buffer output argument is filled with the bytes of the content, and bufferCountOutput output argument contains the number of bytes written.

### 1071 Return codes

- MA_SUCESS
- MA_ERROR_VALIDATION_FAILURE
- MA_ERROR_RUNTIME_FAILURE

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The following are enumerated examples of the methods, devices, and non-transitory computer-readable media that provide the Dynamic Avatar API. Example 1: a method comprising: transmitting a request for a portion of an avatar three-dimensional (3D) representation, the request based on a representation format that defines access to a predefined range of data of the avatar three-dimensional (3D) representation; and receiving the portion of the avatar 3D representation or access to the portion of the avatar 3D representation.

Example 2: the method of Example 1, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 3: the method of any of Examples 1 or 2, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 4: the method of Example 3, wherein one of the one or more mappings is a list of strings with associated geometries to identify body parts of the avatar 3D representation.

Example 5: the method of Examples 3 or 4, wherein one of the one or more geometries further includes one or more vertices, one or more faces, one or more normals, one or more blendshapes, one or more textures, or a combination thereof.

Example 6: the method of Example 5, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 7: the method of any of Examples 3 through 6, wherein one of the one or more skeleton skins further includes a root joint, a list of joints, a list of skin weights, or a combination thereof.

Example 8: the method of Example 7, wherein the list of skin weights includes a mesh used by an avatar and a list of a 3-tuple referencing to one joint in the list of joints, a vertex in the mesh, and a scalar weight between zero and one.

Example 9: the method of any of Examples 3 through 8, wherein one the one or more controllers further includes one or more controller mappings, one or more controller inputs, one or more controller channels, or a combination thereof.

Example 10: the method of Example 9, wherein the one or more controller mappings includes a string with a corresponding code syntax, wherein the one or more controller inputs includes a list of increasing input weights, and the one or more controller channels includes a list of controller channels.

Example 11: the method of Example 10, wherein each controller channel in the list of controller channels includes an interpolation method, a component to animate, and a list of output value sets.

Example 12: the method of Example 11, wherein the interpolation method includes one of a linear interpolation method, a step interpolation method, or a cubicspline interpolation method.

Example 13: the method of Examples 11 or 12, wherein the component to animate includes a transform for the one or more geometries, a transform for one or more skeleton joints, blendshape weights of the one or more geometries, texture displacement weights for one or more textures, a weight for another controller, or a combination thereof.

Example 14: the method of any of Examples 1 through 13, wherein transmitting the request for the portion of the avatar three-dimensional (3D) representation further includes one of: submitting the request to an application programming interface, submitting the request to a web service, or submitting the request to a function.

Example 15: the method of any of Examples 1 through 14, wherein receiving the access to the portion of the avatar 3D representation further includes one of: receiving access to one or more accessors associated with to the portion of the avatar 3D representation, receiving access to one or more pointers associated with to the portion of the avatar 3D representation, or receiving access to one or more references associated with to the portion of the avatar 3D representation.

Example 16: the method of any of Examples 1 through 15, wherein the avatar three-dimensional (3D) representation is stored in a second representation format that is distinct from the representation format.

Example 17: a non-transitory computer-readable medium comprising instructions that, when executed by an electronic processor, cause the electronic processor to perform a set of operations comprising: transmitting a request for a portion of an avatar three-dimensional (3D) representation, the request based on a representation format that defines access to a predefined range of data of the avatar three-dimensional (3D) representation; and receiving the portion of the avatar 3D representation or access to the portion of the avatar 3D representation.

Example 18: the non-transitory computer-readable medium of Example 17, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 19: the non-transitory computer-readable medium of Examples 17 or 18, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 20: the non-transitory computer-readable medium of Example 19, wherein one of the one or more mappings is a list of strings with associated geometries to identify body parts of the avatar 3D representation.

Example 21: the non-transitory computer-readable medium of Examples 19 or 20, wherein one of the one or more geometries further includes one or more vertices, one or more faces, one or more normals, one or more blendshapes, one or more textures, or a combination thereof.

Example 22: the non-transitory computer-readable medium of Example 21, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 23: the non-transitory computer-readable medium of any of Examples 19 through 22, wherein one of the one or more skeleton skins further includes a root joint, a list of joints, a list of skin weights, or a combination thereof.

Example 24: the non-transitory computer-readable medium of Example 23, wherein the list of skin weights includes a mesh used by an avatar and a list of a 3-tuple referencing to one joint in the list of joints, a vertex in the mesh, and a scalar weight between zero and one.

Example 25: the non-transitory computer-readable medium of any of Examples 19 through 24, wherein one the one or more controllers further includes one or more controller mappings, one or more controller inputs, one or more controller channels, or a combination thereof.

Example 26: the non-transitory computer-readable medium of Example 25, wherein the one or more controller mappings includes a string with a corresponding code syntax, wherein the one or more controller inputs includes a list of increasing input weights, and the one or more controller channels includes a list of controller channels.

Example 27: the non-transitory computer-readable medium of Example 26, wherein each controller channel in the list of controller channels includes an interpolation method, a component to animate, and a list of output value sets.

Example 28: the non-transitory computer-readable medium of Example 27, wherein the interpolation method includes one of a linear interpolation method, a step interpolation method, or a cubic spline interpolation method.

Example 29: the non-transitory computer-readable medium of Examples 27 or 28, wherein the component to animate includes a transform for the one or more geometries, a transform for one or more skeleton joints, blendshape weights of the one or more geometries, texture displacement weights for one or more textures, a weight for another controller, or a combination thereof.

Example 30: the non-transitory computer-readable medium of any of Examples 17 through 29, wherein transmitting the request for the portion of the avatar three-dimensional (3D) representation further includes one of: submitting the request to an application programming interface, submitting the request to a web service, or submitting the request to a function.

Example 31: the non-transitory computer-readable medium of any of Examples 17 through 30, wherein receiving the access to the portion of the avatar 3D representation further includes one of: receiving access to one or more accessors associated with to the portion of the avatar 3D representation, receiving access to one or more pointers associated with to the portion of the avatar 3D representation, or receiving access to one or more references associated with to the portion of the avatar 3D representation.

Example 32: the non-transitory computer-readable medium of any of Examples 17 through 31, wherein the avatar three-dimensional (3D) representation is stored in a second representation format that is distinct from the representation format.

Example 33: a device comprising: a video decoder configured to: transmit a request for a portion of an avatar three-dimensional (3D) representation, the request based on a representation format that defines access to a predefined range of data of the avatar three-dimensional (3D) representation, and receive the portion of the avatar 3D representation or access to the portion of the avatar 3D representation.

Example 34: the device of Example 33, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 35: the device of Examples 33 or 34, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 36: the device of Example 35, wherein one of the one or more mappings is a list of strings with associated geometries to identify body parts of the avatar 3D representation.

Example 37: the device of Examples 35 or 36, wherein one of the one or more geometries further includes one or more vertices, one or more faces, one or more normals, one or more blendshapes, one or more textures, or a combination thereof.

Example 38: the device of Example 37, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 39: the device of any of Examples 35 through 38, wherein one of the one or more skeleton skins further includes a root joint, a list of joints, a list of skin weights, or a combination thereof.

Example 40: the device of Example 39, wherein the list of skin weights includes a mesh used by an avatar and a list of a 3-tuple referencing to one joint in the list of joints, a vertex in the mesh, and a scalar weight between zero and one.

Example 41: the device of any of Examples 35 through 40, wherein one the one or more controllers further includes one or more controller mappings, one or more controller inputs, one or more controller channels, or a combination thereof.

Example 42: the device of Example 41, wherein the one or more controller mappings includes a string with a corresponding code syntax, wherein the one or more controller inputs includes a list of increasing input weights, and the one or more controller channels includes a list of controller channels.

Example 43: the device of Example 42, wherein each controller channel in the list of controller channels includes an interpolation method, a component to animate, and a list of output value sets.

Example 44: the device of Example 43, wherein the interpolation method includes one of a linear interpolation method, a step interpolation method, or a cubicspline interpolation method.

Example 45: the device of Examples 43 or 44, wherein the component to animate includes a transform for the one or more geometries, a transform for one or more skeleton joints, blendshape weights of the one or more geometries, texture displacement weights for one or more textures, a weight for another controller, or a combination thereof.

Example 46: the device of any of Examples 33 through 45, wherein, to transmit the request for the portion of the avatar three-dimensional (3D) representation, the video decoder is further configured to: submit the request to an application programming interface, submit the request to a web service, or submit the request to a function.

Example 47: the device of any of Examples 33 through 46, wherein, to receive the access to the portion of the avatar 3D representation, the video decoder is further configured to: receive access to one or more accessors associated with to the portion of the avatar 3D representation, receive access to one or more pointers associated with to the portion of the avatar 3D representation, or receive access to one or more references associated with to the portion of the avatar 3D representation.

Example 48: the device of any of Examples 33 through 47, wherein the avatar three-dimensional (3D) representation is stored in a second representation format that is distinct from the representation format.

Example 49: a method comprising: receiving a request for a portion of an avatar three-dimensional (3D) representation, the request based on a first representation format that defines access to a predefined range of data of the avatar three-dimensional (3D) representation; extracting only the portion of the avatar 3D representation from a full representation of the avatar 3D representation, and the full representation of the avatar 3D representation in a second representation format; and outputting the portion of the avatar 3D representation that is extracted or access to the portion of the avatar 3D representation that is extracted.

Example 50: the method of Example 49, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 51: the method of Examples 49 or 50, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 52: the method of Example 51, wherein one of the one or more mappings is a list of strings with associated geometries to identify body parts of the avatar 3D representation.

Example 53: the method of Examples 51 or 52, wherein one of the one or more geometries further includes one or more vertices, one or more faces, one or more normals, one or more blendshapes, one or more textures, or a combination thereof.

Example 54: the method of Example 53, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 55: the method of any of Examples 51 through 54, wherein one of the one or more skeleton skins further includes a root joint, a list of joints, a list of skin weights, or a combination thereof.

Example 56: the method of Example 55, wherein the list of skin weights includes a mesh used by an avatar and a list of a 3-tuple referencing to one joint in the list of joints, a vertex in the mesh, and a scalar weight between zero and one.

Example 57: the method of any of Examples 51 through 55, wherein one the one or more controllers further includes one or more controller mappings, one or more controller inputs, one or more controller channels, or a combination thereof.

Example 58: the method of Example 57, wherein the one or more controller mappings includes a string with a corresponding code syntax, wherein the one or more controller inputs includes a list of increasing input weights, and the one or more controller channels includes a list of controller channels.

Example 59: the method of Example 58, wherein each controller channel in the list of controller channels includes an interpolation method, a component to animate, and a list of output value sets.

Example 60: the method of Example 59, wherein the interpolation method includes one of a linear interpolation method, a step interpolation method, or a cubicspline interpolation method.

Example 61: the method of Examples 59 or 60, wherein the component to animate includes a transform for the one or more geometries, a transform for one or more skeleton joints, blendshape weights of the one or more geometries, texture displacement weights for one or more textures, a weight for another controller, or a combination thereof.

Example 62: the method of any of Examples 49 through 61, wherein receiving the request for the portion of the avatar three-dimensional (3D) representation further includes one of: receiving the request via an application programming interface, receiving the request via a web service, or receiving the request via a remote procedure call.

Example 63: the method of any of Examples 49 through 62, wherein outputting the access to the portion of the avatar 3D representation further includes one of: providing access to one or more accessors associated with to the portion of the avatar 3D representation, providing access to one or more pointers associated with to the portion of the avatar 3D representation, or providing access to one or more references associated with to the portion of the avatar 3D representation.

Example 64: the method of any of Examples 49 through 63, wherein the second representation format is distinct from the first representation format.

Example 65: a non-transitory computer-readable medium comprising instructions that, when executed by an electronic processor, cause the electronic processor to perform a set of operations comprising: receiving a request for a portion of an avatar three-dimensional (3D) representation, the request based on a first representation format that defines access to a predefined range of data of the avatar three-dimensional (3D) representation; extracting only the portion of the avatar 3D representation from a full representation of the avatar 3D representation, and the full representation of the avatar 3D representation in a second representation format; and outputting the portion of the avatar 3D representation that is extracted or access to the portion of the avatar 3D representation that is extracted.

Example 66: the non-transitory computer-readable medium of Example 65, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 67: the non-transitory computer-readable medium of Examples 65 or 66, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 68: the non-transitory computer-readable medium of Example 67, wherein one of the one or more mappings is a list of strings with associated geometries to identify body parts of the avatar 3D representation.

Example 69: the non-transitory computer-readable medium of Examples 67 or 68, wherein one of the one or more geometries further includes one or more vertices, one or more faces, one or more normals, one or more blendshapes, one or more textures, or a combination thereof.

Example 70: the non-transitory computer-readable medium of Example 69, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 71: the non-transitory computer-readable medium of any of Examples 67 through 70, wherein one of the one or more skeleton skins further includes a root joint, a list of joints, a list of skin weights, or a combination thereof.

Example 72: the non-transitory computer-readable medium of Example 71, wherein the list of skin weights includes a mesh used by an avatar and a list of a 3-tuple referencing to one joint in the list of joints, a vertex in the mesh, and a scalar weight between zero and one.

Example 73: the non-transitory computer-readable medium of any of Examples 67 through 72, wherein one the one or more controllers further includes one or more controller mappings, one or more controller inputs, one or more controller channels, or a combination thereof.

Example 74: the non-transitory computer-readable medium of Example 73, wherein the one or more controller mappings includes a string with a corresponding code syntax, wherein the one or more controller inputs includes a list of increasing input weights, and the one or more controller channels includes a list of controller channels.

Example 75: the non-transitory computer-readable medium of Example 74, wherein each controller channel in the list of controller channels includes an interpolation method, a component to animate, and a list of output value sets.

Example 76: the non-transitory computer-readable medium of Example 75, wherein the interpolation method includes one of a linear interpolation method, a step interpolation method, or a cubic spline interpolation method.

Example 77: the non-transitory computer-readable medium of Examples 75 or 76, wherein the component to animate includes a transform for the one or more geometries, a transform for one or more skeleton joints, blendshape weights of the one or more geometries, texture displacement weights for one or more textures, a weight for another controller, or a combination thereof.

Example 78: the non-transitory computer-readable medium of any of Examples 65 through 77, wherein receiving the request for the portion of the avatar three-dimensional (3D) representation further includes one of: receiving the request via an application programming interface, receiving the request via a web service, or receiving the request via a remote procedure call.

Example 79: the non-transitory computer-readable medium of any of Examples 65 through 78, wherein outputting the access to the portion of the avatar 3D representation further includes one of: providing access to one or more accessors associated with to the portion of the avatar 3D representation, providing access to one or more pointers associated with to the portion of the avatar 3D representation, or providing access to one or more references associated with to the portion of the avatar 3D representation.

Example 80: the non-transitory computer-readable medium of any of Examples 65 through 79, wherein the second representation format is distinct from the first representation format.

Example 81: a device comprising: a video decoder configured to receive a request for a portion of an avatar three-dimensional (3D) representation, the request based on a first representation format that defines access to a predefined range of data of the avatar three-dimensional (3D) representation; extract only the portion of the avatar 3D representation from a full representation of the avatar 3D representation, and the full representation of the avatar 3D representation in a second representation format; and output the portion of the avatar 3D representation that is extracted or access to the portion of the avatar 3D representation that is extracted.

Example 82: the device of Example 81, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

Example 83: the device of Examples 81 or 82, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

Example 84: the device of Example 83, wherein one of the one or more mappings is a list of strings with associated geometries to identify body parts of the avatar 3D representation.

Example 85: the device of Examples 83 or 84, wherein one of the one or more geometries further includes one or more vertices, one or more faces, one or more normals, one or more blendshapes, one or more textures, or a combination thereof.

Example 86: the device of Example 85, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

Example 87: the device of any of Examples 83 through 86, wherein one of the one or more skeleton skins further includes a root joint, a list of joints, a list of skin weights, or a combination thereof.

Example 88: the device of Example 87, wherein the list of skin weights includes a mesh used by an avatar and a list of a 3-tuple referencing to one joint in the list of joints, a vertex in the mesh, and a scalar weight between zero and one.

Example 89: the device of any of Examples 83 through 88, wherein one the one or more controllers further includes one or more controller mappings, one or more controller inputs, one or more controller channels, or a combination thereof.

Example 90: the device of Example 89, wherein the one or more controller mappings includes a string with a corresponding code syntax, wherein the one or more controller inputs includes a list of increasing input weights, and the one or more controller channels includes a list of controller channels.

Example 91: the device of Example 90, wherein each controller channel in the list of controller channels includes an interpolation method, a component to animate, and a list of output value sets.

Example 92: the device of Example 91, wherein the interpolation method includes one of a linear interpolation method, a step interpolation method, or a cubicspline interpolation method.

Example 93: the device of Examples 91 or 92, wherein the component to animate includes a transform for the one or more geometries, a transform for one or more skeleton joints, blendshape weights of the one or more geometries, texture displacement weights for one or more textures, a weight for another controller, or a combination thereof.

Example 94: the device of any of Examples 81 through 93, wherein, to receive the request for the portion of the avatar three-dimensional (3D) representation, the video decoder is further configured to: receive the request via an application programming interface, receive the request via a web service, or receive the request via a remote procedure call.

Example 95: the device of any of Examples 81 through 94, wherein, to output the access to the portion of the avatar 3D representation, the video decoder is further configured to: provide access to one or more accessors associated with to the portion of the avatar 3D representation, provide access to one or more pointers associated with to the portion of the avatar 3D representation, or provide access to one or more references associated with to the portion of the avatar 3D representation.

Example 96: the device of any of Examples 81 through 95, wherein the second representation format is distinct from the first representation format.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
transmitting a request for a portion of an avatar three-dimensional (3D) representation, the request based on a representation format that defines access to a predefined range of data of the avatar three-dimensional (3D) representation; and
receiving the portion of the avatar 3D representation or access to the portion of the avatar 3D representation.

2. The method of claim 1, wherein the portion of the avatar 3D representation includes a name, an identifier, an age, a gender, or a combination thereof, and wherein the portion of the avatar 3D representation is less than all of the predefined range of data of the avatar three-dimensional (3D) representation.

3. The method of claim 1, wherein the portion of the avatar 3D representation includes one or more geometries, one or more mappings, one or more skeleton skins, one or more controllers, or a combination thereof, and wherein the portion of the avatar 3D representation is less than all of the predefined range of data of the avatar three-dimensional (3D) representation.

4. The method of claim 3, wherein one of the one or more mappings is a list of strings with associated geometries to identify body parts of the avatar 3D representation.

5. The method of claim 3, wherein one of the one or more geometries further includes one or more vertices, one or more faces, one or more normals, one or more blendshapes, one or more textures, or a combination thereof.

6. The method of claim 5, wherein the one or more vertices includes a list of three-dimensional float coordinates corresponding to vertex coordinates, wherein the one or more faces includes a first list of tuples, each value in the first list of tuples is a vertex index, wherein the one or more normal includes a list of three-dimensional float coordinates corresponding to vertex normal coordinates and a second list of tuples, each value in the second list of tuples is a normal index, wherein the one or more blendshapes includes a list of blendshapes, each blendshape in the list of blendshapes includes one or more displacements, a name, code syntax, a location hint, or a combination thereof, and wherein the one or more textures includes a list of texture data, each of the texture data includes a type, a list of two-dimensional float coordinates corresponding to UV coordinates, a third list of tuples, each value of the third list of tuples is a UV index, a texture image, one or more texture displacement maps, or a combination thereof.

7. The method of claim 3, wherein one of the one or more skeleton skins further includes a root joint, a list of joints, a list of skin weights, or a combination thereof.

8. The method of claim 3, wherein one the one or more controllers further includes one or more controller mappings, one or more controller inputs, one or more controller channels, or a combination thereof.

9. The method of claim 8, wherein the one or more controller mappings includes a string with a corresponding code syntax, wherein the one or more controller inputs includes a list of increasing input weights, and the one or more controller channels includes a list of controller channels.

10. The method of claim 9, wherein each controller channel in the list of controller channels includes an interpolation method, a component to animate, and a list of output value sets.

11. The method of claim 1, wherein transmitting the request for the portion of the avatar three-dimensional (3D) representation further includes one of:
submitting the request to an application programming interface,
submitting the request to a web service, or
submitting the request to a function.

12. The method of claim 1, wherein receiving the access to the portion of the avatar 3D representation further includes one of:
receiving access to one or more accessors associated with to the portion of the avatar 3D representation,
receiving access to one or more pointers associated with to the portion of the avatar 3D representation, or
receiving access to one or more references associated with to the portion of the avatar 3D representation.

13. The method of claim 1, wherein the avatar three-dimensional (3D) representation is stored in a second representation format that is distinct from the representation format.

14. A device including an avatar decoder configured to perform a method according to any of one of claims 1-13.

15. A non-transitory computer-readable medium comprising instructions that, when executed by an electronic processor, cause the electronic processor to perform a method according to any of one of claims 1-13.
